(19) Europäisches Patentamt
European Patent Office
Office européen des brevets

(11) **EP 4 300 379 A1**

(12) **EUROPEAN PATENT APPLICATION**

(43) Date of publication:
**03.01.2024 Bulletin 2024/01**

(51) International Patent Classification (IPC):
**G06N 10/60** (2022.01) **G06N 10/20** (2022.01)

(21) Application number: **22181734.9**

(52) Cooperative Patent Classification (CPC):
**G06N 10/20; G06N 10/60**

(22) Date of filing: **29.06.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Algorithmiq Oy**
**00160 Helsinki (FI)**

(72) Inventor: **García Pérez, Guillermo**
**00160 Helsinki (FI)**

(74) Representative: **Leinweber & Zimmermann**
**Patentanwalts-PartG mbB**
**European Patent Attorneys**
**Viktualienmarkt 8**
**80331 München (DE)**

(54) **METHOD FOR PERFORMING COMPUTATION USING A HYBRID QUANTUM-CLASSICAL COMPUTING SYSTEM, APPARATUS AND COMPUTER PROGRAM FOR CARRYING OUT SAID METHOD**

(57) The invention is related to a method for performing computation using a hybrid quantum-classical computing system comprising a quantum computing unit and a classical computer, said quantum computing unit comprising a quantum system defined by a set Q of N qudits, preferably a set Q of N qubits, and control means, said control means being operative to prepare a quantum state of said quantum system, said quantum state being described by a density operator $\sigma$ acting on a Hilbert space H associated with said quantum system, to perform a quantum measurement defined by an informationally complete Positive Operator Valued Measure on said prepared quantum state , said informationally complete Positive Operator Valued Measure being described by an integer number $N_M$ of effects $\Pi_m, m = 1, ..., N_M$, the effects being preferably K-producible, $K \geq 1$, the effect $\Pi_m$ having a measurement outcome m, and to output the measurement outcome of said quantum measurement. The invention is further related to a hybrid quantum-clas- sical computing system and to a computer program for execution by a classical computer of a hybrid quan- tum-classical computing system.

**Fig. 1**

EP 4 300 379 A1

**Description**

The present invention is related to a method for performing computation using a hybrid quantum-classical computing system, to an apparatus for carrying out said method and to a computer program.

Complex computational problems as they arise, e.g., in the field of chemistry, pharmaceutics or material science, may be too resource consuming regarding, e.g., the required run-time or the required memory to be carried out by a classical computer. In particular, the simulation of a quantum-mechanical system of N quantum-mechanical d-level systems on a classical computer generally requires storing and manipulating matrices of dimension $d^N \times d^N$, which may become prohibitive already for small system sizes. Quantum computers which may allow to store and process information much more efficiently than their classical counterparts, and may also be more adapted to simulate quantum mechanical systems, are thus promising candidates to carry out computations that would otherwise be intractable.

A quantum computing unit may comprise a quantum system defined by a set Q of N qudits, which are quantum mechanical d-level systems. The quantum computing unit may further comprise control means, said control means being operative to prepare a quantum state being described by a density operator $\sigma$ acting on a Hilbert space H associated with said quantum system and to perform a quantum measurement on said prepared quantum state. In theory, the prepared quantum state may encode the solution of a computational problem, and the quantum measurement may allow to read out said solution. For example, the prepared quantum state may encode the ground state configuration of a molecule, and the quantum measurement may allow to infer the ground state energy of said molecule. Due to the probabilistic nature of quantum mechanics, the quantum computing unit may be operated S times, thereby obtaining S measurement outcomes which are used to construct an estimator of the solution.

In practice, however, the practical implementation of a quantum computation may face several challenges. The prepared state of the quantum computing unit may be affected by numerous sources of errors and therefore be different from the desired solution state described by a density operator $\rho_{sol}$. For example, the state preparation may be noisy, e.g., due to imperfect, noisy quantum gates in the case of a gate-based quantum computing unit. Another source of error may be due to imperfect quantum measurements, so that the quantum measurement implemented by the quantum computing unit is different from a desired, ideal measurement.

There exist several solutions in the art to address these problems. For example, quantum error correction may be used to correct for the errors of state preparation due to noisy gates (see, e. g., P. W. Shor, Physical Review A 52 (1995), R2493-R2496). However, current error correcting codes require additional qudits thereby increasing the complexity of the computation and its runtime. Thus, quantum error correction may even be impractical for certain problems.

The quantum measurement carried out by the quantum computing unit may be characterized by using quantum detector tomography as it is disclosed, e. g., in A. Luis and L. L. Sanchez-Soto, Physical Review Letters 83, 3573 (1999). This technique allows to calibrate the detector, thereby reducing the readout error. However, quantum detector tomography requires the use of prepared trial states for calibration. As these states may be noisy themselves, the problem of the readout error may be reduced but not completely removed.

Recently, quantum computing units have been used for the preparation of variational states and for the measurement of observables of these states. In this way, ground state energies of complex systems, like molecules or drugs, may be estimated. In addition to the problem of noisy state preparations and read-out errors, variational state preparation faces the challenge that it is very difficult to explore the state space of the desired variational states efficiently using available quantum computing units.

The above problems may be summarized as follows: It is the goal to estimate efficiently a value of the quantity tr[$\rho_{sol}$O], wherein $\rho_{sol}$ is the density operator of a desired solution state of a quantum system of N qudits, preferably of N qubits, and O is an operator acting on said quantum system, by using a quantum computing unit which allows to prepare the quantum system in a quantum state described by a density operator $\sigma$ which is different from the density operator $\rho_{sol}$ of the solution state. It is a goal of the present invention to provide a solution to this problem.

According to a first aspect of the present invention, there is provided a method for performing computation using a hybrid quantum-classical computing system comprising a quantum computing unit and a classical computer, said quantum computing unit comprising a quantum system defined by a set Q of N qudits, preferably a set Q of N qubits, and control means, said control means being operative to prepare a quantum state of said quantum system, said quantum state being described by a density operator $\sigma$ acting on a Hilbert space H associated with said quantum system, to perform a quantum measurement defined by an informationally complete Positive Operator Valued Measure on said prepared quantum state, said informationally complete Positive Operator Valued Measure being described by an integer number $N_M$ of effects $\Pi_m$, $m$ = 1, ..., $N_M$, the effects being preferably K-producible, $K \geq 1$ , the effect $\Pi_m$ having a measurement outcome m, and to output the measurement outcome of said quantum measurement, said method comprising:

a) Repeated operation of said control means of said quantum computing unit to thereby obtain a set of measurement

data $\{m^{(s)}\}_{s=1}^{S}$ as an output, with $m^{(s)}$ being a measurement outcome for the s-th operation of the control means and S being the number of repetitions;

b) Providing an input to the classical computer, said input comprising:

i) the set of measurement data $\{m^{(s)}\}_{s=1}^{S}$;

ii) a first non-identity linear map $M_{NI}^{(1)}: L(H^{(1)}) \rightarrow L(H^{(1)})$, wherein $L(H^{(1)})$ is a space of linear operators on a first Hilbert space $H^{(1)}$ associated to a first non-empty set $Q_1$ of qudits which is a proper subset of the set Q of qudits, and a second non-identity linear map $M_{NI}^{(2)}: L(H^{(2)}) \rightarrow L(H^{(2)})$, wherein $L(H^{(2)})$ is a space of linear operators on a second Hilbert space $H^{(2)}$ associated to a second non-empty set $Q_2$ of qudits different from said first set $Q_1$, said second set $Q_2$ being a proper subset of the set Q of qudits, wherein a union of the first set and second set is the set $Q = Q_1 \cup Q_2$, and an intersection of the first set and the second set $Q_1$, $Q_2$, is an intersection set, $Q_I = Q_1 \cap Q_2$, said intersection set being either a non-empty set, $Q_I \neq \{\}$ or being an empty set, $Q_I = \{\}$,

iii) an integer number $N_0$ of complex numbers $c_k$, $k = 1, ..., N_0$, representations of $N_0$ second product operators $P_k^{(2)} = \otimes_i O_i^{(k)}$ acting on the second set $Q_2$ of qudits, with $O_j^{(k)}$ being a local operator acting on the j-th qudit, and representations of $N_0$ complement product operators $P_k^{(c)} = \otimes_j O_j^{(k)}$ acting on a second complement set $\overline{Q}_2$ of qudits which is the complement of the second set $Q_2$;

iv) for each $m = 1, ..., N_M$, an integer number $N_{D_m}$ of coefficients $d_j^{(m)}, j = 1, ..., N_{D_m}$, representations of $N_{D_m}$ first dual operators $D_m^{(j)}$, $= 1, ..., N_{D_m}$, acting on the first set $Q_1$ of qudits, and representations of $N_{D_m}$ complement dual operators $\widetilde{D}_m^{(j)}$, $j = 1, ..., N_{D_m}$, acting on a first complement set $\overline{Q}_1$ of qudits which is the complement of the first set $Q_1$, said coefficients $d_j^{(m)}$, first dual operators $D_m^{(j)}$ and first complement dual operators $\widetilde{D}_m^{(j)}$ being defined by a decomposition of a set of $N_M$ dual effects $D_m$ of the set of $N_M$ effects $\Pi_m$ according to $D_m = \sum_{j=1}^{N_{D_m}} d_j^{(m)} D_m^{(j)} \otimes \widetilde{D}_m^{(j)}$,

c) Calculating, by the classical computer, a value of an estimator

$$\overline{O} = \frac{1}{S} \sum_{s=1}^{S} \sum_{k=1}^{N_o} \sum_{j=1}^{N_D} m^{(s)} c_k d_j^{(m^{(s)})} \omega_{m^{(s)}}^{(k,j)}, \text{ with } \omega_{m^{(s)}}^{(k,j)} = \text{tr}\left[M(D_{m^{(s)}}^{(j)} \otimes \widetilde{D}_{m^{(s)}}^{(j)}) P_k^{(c)} \otimes P_k^{(2)}\right]$$

to thereby obtain an estimation of a value of a trace of a product of the image of the density operator $\sigma$ under a target map M and a target operator O, tr[$M(\sigma)0$], wherein

the target linear map $M:L(H) \rightarrow L(H)$ with L(H) being the space of linear operators on the Hilbert space H is defined as a composition of first and second linear maps $M^{(1)}, M^{(2)}:L(H) \rightarrow L(H)$, $M = M^{(2)} \circ M^{(1)}$, wherein the first linear map $M^{(1)}$ is a tensor product of the first non-identity linear map $M_{NI}^{(1)}$ and an identity map on a space of linear operators $L(\overline{H}^{(1)})$ on a Hilbert space $\overline{H}^{(1)}$ associated to the first complement set $\overline{Q}_1$,

$$\bar{Q}_1 , M^{(1)} = M^{(1)}_{NI} \otimes$$

$$\mathbb{1}_{\bar{Q}_1},$$

and the second linear map $M^{(2)}$ is a tensor product of the second non-identity linear map $M^{(2)}_{NI}$ and an identity map on a space of linear operators $L(\overline{H}^{(2)})$ on a Hilbert space $\overline{H}^{(2)}$ associated to the second complement set $\overline{Q}_2$, $M^{(2)}$

$$\bar{Q}_2, M^{(2)} = \mathbb{1}_{\bar{Q}_2} \otimes M^{(2)}_{NI},$$

the target operator O is defined by the complex numbers $c_k$, the second product operators $P^{(2)}_k$ and the complement product operators $P^{(c)}_k$ according to $0 = \sum_{k=1}^{N_O} c_k P^{(c)}_k \otimes P^{(2)}_k$, and

wherein the calculation of $\omega^{(k,j)}_{m^{(s)}}$ includes calculating a partial trace over the second complement set $\overline{Q}_2$ of a product of an image $M^{(1)}_{NI}(D^{(j)}_{m^{(s)}})$ of the representation of the first dual operator $D^{(j)}_{m^{(s)}}$ under the first non-identity linear map $M^{(1)}_{NI}$ and a tensor product of the complement product operator $P^{(c)}_k$ and an identity map

$$\mathbb{1}_{Q_I}$$

on the intersection Hilbert space $H_I$ associated to the intersection set $Q_I$,

$$\text{tr}_{\bar{Q}_2}\left[M^{(1)}_{NI}\left(D^{(j)}_{m^{(s)}}\right)P^{(c)}_k \otimes \mathbb{1}_{Q_I}\right]$$

and/or calculating a partial trace over the first complement set $\overline{Q}_1$ of a product of an image $M^{(2)\dagger}_{NI}(P^{(2)}_k)$ of the representation of the second product operator $P^{(2)}_k$ under the adjoint of the second non-identity linear map $M^{(2)\dagger}_{NI}$ and a tensor product of an identity map

$$\mathbb{1}_{Q_I}$$

on the intersection Hilbert space $H_I$ and the first complement operator

$$\tilde{D}^{(j)}_{m^{(s)}}, \text{tr}_{\bar{Q}_1}\left[M^{(2)\dagger}_{NI}(P^{(2)}_k)\mathbb{1}_{Q_I} \otimes \tilde{D}^{(j)}_{m^{(s)}}\right].$$

The method according to the present invention allows for an efficient estimation of a value of a trace of a product of the image of the density operator $\sigma$ under the target map M and the target operator O, $\text{tr}[M(\sigma)O]$ by using a hybrid quantum-classical computing system. In certain instances, $M(\sigma)$ may be understood as a density operator $\rho$ of the

quantum system, but $M(\sigma)$ is not necessarily a density operator. The method allows to calculate tr[$M(\sigma)O$] for system sizes which would otherwise be intractable on a classical computer as will be further outlined below.

The method according to the first aspect of the present invention uses a hybrid quantum-classical computing system comprising a quantum computing unit and a classical computer. The quantum computing unit comprises a quantum system defined by a set Q of N qudits, in particular of N qubits. A qudit is a quantum mechanical d-level system. A qubit is quantum mechanical two-level system. The qudits are basic building blocks for quantum computation. For example, the qudits, in particular the qubits, may be realized in superconducting systems, by quantum dots, in systems of atoms, ions or photons. However, the invention is not limited to these implementations.

The quantum computing unit further comprises control means. The control means is operative to prepare a quantum state of said quantum system, said quantum state being described by a density operator $\sigma$ acting on a Hilbert space H associated with said quantum system. In the case of N qudits (i.e., N quantum mechanical d-level systems), the Hilbert space H is given by $H = \bigotimes_{l=1}^{N} \mathbb{C}^d$. For N qubits, the Hilbert space is given by $H = \bigotimes_{l=1}^{N} \mathbb{C}^2$. For example, the control means may be operative to provide an initial state described by a density operator $\sigma_0$, e. g., all qudits in the state described by the state vector |0 >, and to apply a sequence of quantum gates to said initial state to thereby obtain the prepared quantum state described by the density operator $\sigma$. To this end, the control means may comprise a controller and state preparation means controlled by said controller, said state preparation means being operative to prepare said quantum state described by the density operator $\sigma$.

The control means is further operative to perform a quantum measurement defined by an informationally complete Positive Operator Valued Measure on said prepared quantum state described by the density operator $\sigma$, said informationally complete Positive Operator Valued Measure being described by an integer number $N_M$ of effects $\Pi_m$, $m$ = 1, ..., $N_M$, the effect $\Pi_m$ having a measurement outcome m, and to output the measurement outcome of said quantum measurement. A Positive Operator Valued Measure (POVM) is a set of positive operators that sum up to the identity. When the POVM is measured on the quantum state described by the density operator $\sigma$, the probability to obtain the measurement outcome m is given by Tr[$\sigma\Pi_m$]. A POVM is informationally complete when the effects span the associated operator space. In one example, the POVM may be minimal. I.e., the effects are linearly independent (see, e. g., S. Weigert, Int. J. Mod. Phys. B 20 (2006) 1942 - 1955). In one preferred example, the effects are K-producible. I. e., the effects are a tensor product of operators each of which is acting on at most K qudits. I. e.,

$$\Pi_m = \Pi_m^{(1)} \otimes \Pi_m^{(2)} \otimes ... \otimes \Pi_m^{(J)}$$, wherein $\Pi_m^{(i)}$ acts on at most K qudits (see, e. g., S. Szalay "k-stretchability of entanglement, and the duality of K-separability and K-producibility", Quantum 3, 204 (2019) for an analogous definition of K-producibility for quantum states). In one example, the effects of the informationally complete Positive Operator Valued Measure may be 1-producible. Then, for each qudit $q_j$, $j$ = 1, ..., N, $M_j$ there may exist local effects $\Pi_{m_j}^{(j)}$, $m_j$ = 1, ..., $M_j$ acting only on the qudit $q_j$ and constituting a local informationally complete Positive Operator Valued Measure for said qudit $q_j$, the effect $\Pi_{m_j}^{(j)}$ having a measurement outcome $m_j$, such that the effect $\Pi_m$ of the POVM is given by

$\Pi_m = \bigotimes_{j=1}^{N} \Pi_{m_j}^{(j)}$ and the measurement outcome m is a tuple m = ($m_1$, $m_2$, ..., $m_N$). The control means may comprise measurement means which are operative to perform the quantum measurement by control of said control means.

Thus, when operated, the control means prepares said quantum system in the quantum state described by the density operator $\sigma$, performs a measurement defined by the informationally complete POVM introduced above and outputs the result m of the quantum measurement. The control means may comprise output means operative to output the result of the quantum measurement.

The method according to the first aspect of the present invention comprises the following steps:

a) Repeated operation of said control means of said quantum computing unit to thereby obtain a set of measurement data $\{m^{(s)}\}_{s=1}^{S}$ as an output, with $m^{(s)}$ being a measurement outcome for the s-th operation of the control means and S being the number of repetitions.

In general, S is much larger than 1 in order to obtain sufficient data for estimating the value of tr[$M(\sigma)O$] as outlined below. The set of measurement data is then used for processing on a classical computer. To this end, the method further comprises:

b) Providing an input to the classical computer, said input comprising:

i) The set of measurement data $\left\{m^{(s)}\right\}_{s=1}^{S}$ ;

ii) A first non-identity linear map $M_{NI}^{(1)}: L\left(H^{(1)}\right) \to L\left(H^{(1)}\right)$ , wherein $L(H^{(1)})$ is a space of linear operators on a first Hilbert space $H^{(1)}$ associated to a first non-empty set $Q_1$ of qudits which is a proper subset of the set Q of qudits, and a second non-identity linear map $M_{NI}^{(2)}: L\left(H^{(2)}\right) \to L\left(H^{(2)}\right)$ , wherein $L(H^{(2)})$ is a space of linear operators on a second Hilbert space $H^{(2)}$ associated to a second non-empty set $Q_2$ of qudits different from said first set $Q_1$, said second set $Q_2$ being a proper subset of the set Q of qudits, wherein a union of the first set and the second set is the set $Q = Q_1 \cup Q_2$, and an intersection of the first set and the second set $Q_1$, $Q_2$, is an intersection set, $Q_I = Q_1 \cap Q_2$, said intersection set being either a non-empty set, $\overline{Q}_I \neq \{\,\}$ or being an empty set, $Q_I = \{\,\}$.

Thus, according to the method of the present invention, two non-identity linear maps $M_{NI}^{(1)}$, $M_{NI}^{(2)}$ are provided to the classical computer. A non-identity linear map is a linear map which is different from the identity map on a space of linear operators on a Hilbert space associated to at least one qudit. The first and second sets of qudits $Q_1$, $Q_2$ are non-empty, i.e., they contain at least one qudit. The first set $Q_1$ may contain $N_1$ qudits, and the second set $Q_2$ may contain $N_2$ qudits, wherein $N_1$, $N_2$ are less than the number N of qudits, and their sum is at least the number N of qudits $N_1 < N$, $N_2 < N$, $N_1 + N_2 \geq N$. In the case that the first and/or second sets of qudits contain more than one qudit, the respective non-identity linear map $M_{NI}^{(1)}$, $M_{NI}^{(2)}$ , may be different from the identity map on a space of linear operators on a Hilbert space associated to all qudits in the sets $Q_1$, $Q_2$, respectively. In some examples, the respective non-identity linear map $M_{NI}^{(1)}$, $M_{NI}^{(2)}$ may be different from the identity map only on a space of linear operators on a Hilbert space associated to a non-empty subset of the set of qudits, $Q_1$, $Q_2$. For example, the respective non-identity linear map $M_{NI}^{(1)}$, $M_{NI}^{(2)}$ may be different from the identity map on a space of linear operators on a Hilbert space associated to one, two, three or more qudits of the set $Q_1$ or $Q_2$.

Apart from being linear and different from the identity map, the first and second non-identity linear maps $M_{NI}^{(1)}$, $M_{NI}^{(2)}$ may be chosen arbitrarily. In particular, $M_{NI}^{(1)}$, $M_{NI}^{(2)}$ need not be completely positive and/or trace-preserving. $M_{NI}^{(1)}$, $M_{NI}^{(2)}$ may, e. g., be provided to the classical computer in a matrix representation or they may be provided as a routine that accepts, e.g., a matrix representation of a density operator $\rho$ as an input and outputs a matrix representation of $M_{NI}^{(1)}(B)$ or $M_{NI}^{(2)}(B)$ by using operations like addition, multiplication, etc. In a further example, in case that the first and/or second non-identity linear maps are completely positive trace preserving maps, they may be provided to the classical computer by providing a matrix representation of the operators $G_k$, $\tilde{G}_k$ of their operator sum representation

$$M_{NI}^{(1)}(\rho_1) = \sum_k G_k \rho_1 G_k^{\dagger}, \sum_k G_k^{\dagger} G_k = \mathbb{1},$$

$$M_{NI}^{(2)}(\rho_2) = \sum_k \tilde{G}_k \rho_2 \tilde{G}_k^{\dagger}, \sum_k \tilde{G}_k^{\dagger} \tilde{G}_k = \mathbb{1}.$$

Examples of $M_{NI}^{(1)}$, $M_{NI}^{(2)}$ for particular technical applications will be given below.

The first and second sets of qudits $Q_1$, $Q_2$ are such that their union is the set Q of qudits, $Q = Q_1 \cup Q_2$, and an intersection of the first set and the second set $Q_1$, $Q_2$, is an intersection set, $Q_I = Q_1 \cap Q_2$, said intersection set being either a non-empty set, $Q_1 \neq \{\,\}$ or being an empty set, $Q_I = \{\,\}$.

6

The input to the classical computer further comprises:
iii) An integer number $N_O$ of complex numbers $c_k$, $k = 1, ..., N_O$, representations of $N_O$ second product operators

$$P_k^{(2)} = \otimes_i O_i^{(k)}$$ acting on the second set $Q_2$ of qudits, with $O_{kj}^{(j)}$ being a local operator acting on the j-th qudit, and representations of $N_O$ complement product operators $$P_k^{(c)} = \otimes_j O_j^{(k)}$$ acting on a second complement set $\overline{Q}_2$ of qudits which is the complement of the second set $Q_2$. Thus, the second product operators and the complement product operators are 1-producible. For example, in the case of the qudits being qubits, the local operators may be the Pauli operators, and the representation of the second product operators and the complement product operators provided to the classical computer may be matrices which are tensor products of Pauli operators. In general, the representations of the product operators and the complement product operators may be matrices. The representation of the second product operators may be $d^{N_2} \times d^{N_2}$ matrices and the representation of the complement product operators may be $d^{N - N_2} \times d^{N - N_2}$ matrices, wherein $N_2$ is the number of qudits in the second set $Q_2$.

iv) For each $m = 1, ..., N_M$, an integer number $N_{D_m}$ of coefficients $$d_j^{(m)}, j = 1, ..., N_{D_m}$$, representations of

$N_{D_m}$ first dual operators $$D_m^{(j)}$$, $j = 1, ..., N_{D_m}$, acting on the first set $Q_1$ of qudits, and representations of $N_{D_m}$ complement

dual operators $$\widetilde{D}_m^{(j)}$$, $j = 1, ..., N_{D_m}$, acting on a first complement set $\overline{Q}_1$ of qudits which is the complement of the first

set $Q_1$, said coefficients $$d_j^{(m)}$$, first dual operators $$D_m^{(j)}$$ and first complement dual operators $$\widetilde{D}_m^{(j)}$$ being defined by

a decomposition of a set of $N_M$ dual effects $D_m$ of the set of $N_M$ effects $\Pi_m$ according to $$D_m = \sum_{j=1}^{N_{Dm}} d_j^{(m)} D_m^{(j)} \otimes \widetilde{D}_m^{(j)}$$
. When the effects are K-producible, the dual effects may also be chosen K-producible, i. e., $N_{D_m} = 1$.
Given the set of $N_M$ effects $\Pi_m$, $m = 1, ..., N_M$, a set of $N_M$ dual effects $D_m$, $m = 1, ..., N_M$, may be determined as follows, e.g., using a classical computer (see e.g., L. Guerini et al, Quasiprobabilistic state-overlap estimator for NISQ devices, arxiv: 2112.11618): The set of dual effects is defined such that for every operator A in the same space of linear operators as the effects the relation $$A = \sum_{m=1}^{N_M} \text{tr}[\Pi_m A] D_m$$ holds. The dual effects may then be calculated via the relation $$D_n = \sum_{m=1}^{N_M} \eta_{nm} \Pi_m$$ for $n = 1, ..., N_M$, wherein the matrix $\eta$ with the coefficients $\eta_{nm}$ must fulfill the condition $X = X\eta X$, wherein the matrix X has matrix elements $X_{ab}$ defined by $X_{ab} = \text{tr}[\Pi_a \Pi_b]$, $a, b = 1, ..., N_M$. When X is invertible, the matrix $\eta$ may be the inverse of the matrix X. If X is not invertible, the matrix $\eta$ may be the pseudoinverse of the matrix X.
Then, a bipartition of the set Q of qudits according to the first set $Q_1$ of qudits and the first complement set $\overline{Q}_1$ of qudits which is the complement of the first set $Q_1$, i.e., $\overline{Q}_1 = Q \backslash Q_1$, is defined. As the effects $\Pi_m$ may act on more than one qudit, the dual effects $D_m$ may not be expressable as a tensor product $D_m = A_m \otimes B_m$, wherein the operator $A_m$ acts on the qudits in the set $Q_1$ and the operator $B_m$ acts on the qudits in the set $\overline{Q}_1$. In this case, one may define a basis of

$n_1$ operators $$B_p^{(1)}$$, $p = 1, ..., n_1$ on the Hilbert space $H^{(1)}$ associated to the first complement set $Q_1$, a basis of $N_2$

operators $$B_q^{(2)}$$, $q = 1, ..., N_1$ on the Hilbert space $\overline{H}^{(1)}$ associated to the first complement set $\overline{Q}_1$, and expand the dual effects in terms of these basis operators according to $$D_m = \sum_{p,q} \gamma_{pq}^{(m)} B_p^{(1)} \otimes B_q^{(2)}$$ with complex coefficients $$\gamma_{pq}^{(m)}$$

. Then, one may perform a singular value decomposition of the matrix $\gamma^{(m)}$ having matrix elements $$\gamma_{pq}^{(m)}$$ according to $\gamma^{(m)} = u^{(m)} d^{(m)} w^{(m)}$, wherein $u^{(m)}$ and $w^{(m)}$ are unitary matrices, $d^{(m)}$ is a diagonal matrix with non-negative, real diagonal

elements $$d_j^{(m)}$$, and define the first dual operators $$D_m^{(j)}$$ and the complement dual operators $$\widetilde{D}_m^{(j)}$$ according to

$$D_m^{(j)} = \sum_p u_{pj}^{(m)} B_p^{(1)}$$ and $$\widetilde{D}_m^{(j)} = \sum_q w_{jq}^{(m)} B_q^{(2)}$$ , wherein $u_{pj}^{(m)}$ are the matrix elements of the matrix $u^{(m)}$, and

$w_{jq}^{(m)}$ are the matrix elements of the matrix $w^{(m)}$. The dual effects may then be represented as

$$D_m = \sum_j d_j^{(m)} D_m^{(j)} \otimes \widetilde{D}_m^{(j)}$$ The representations of the first dual operators $D_m^{(j)}$ may be $d^{N_1} \times d^{N_1}$ matrices and

the representations of the complement dual operators $\widetilde{D}_m^{(j)}$ may be $d^{N-N_1} \times d^{N-N_1}$ matrices. These matrix represen-

tations and the real coefficients $d_j^{(m)}$ may be provided as an input to the classical computer.

Having provided the input according to i), ii) and iii) to the classical computer, the method according to the present invention further comprises

c) Calculating, by the classical computer, a value of an estimator

$$\bar{O} = \frac{1}{S} \sum_{s=1}^{S} \sum_{k=1}^{N_O} \sum_{j=1}^{N_m^{(s)}} c_k d_j^{(m^{(s)})} \omega_{m^{(s)}}^{(k,j)}, \text{ with } \omega_{m^{(s)}}^{(k,j)} = \text{tr}\left[ M(D_{m^{(s)}}^{(j)} \otimes \widetilde{D}_{m^{(s)}}^{(j)}) P_k^{(c)} \otimes P_k^{(2)} \right]$$

to thereby obtain an estimation of a value of a trace of a product of the image of the density operator $\sigma$ under a target map M and a target operator O, tr[$M(\sigma)O$], wherein
the target linear map $M:L(H) \to L(H)$ with L(H) being the space of linear operators on the Hilbert space H is defined as a composition of first and second linear maps $M^{(1)}, M^{(2)}: L(H) \to L(H), M = M^{(2)} \circ M^{(1)}$, wherein the first linear map $M^{(1)}$

is a tensor product of the first non-identity linear map $M_{NI}^{(1)}$ and an identity map on a space of linear operators $L(\overline{H}^{(1)})$ on a Hilbert space $\overline{H}^{(1)}$ associated to the first complement set $\overline{Q}_1$ ,

$$M^{(1)} = M_{NI}^{(1)} \otimes$$

$$\mathbb{1}_{\overline{Q}_1},$$

and the second linear map $M^{(2)}$ is a tensor product of the second non-identity linear map $M_{NI}^{(2)}$ and an identity map on a space of linear operators $L(\overline{H}^{(2)})$ on a Hilbert space $\overline{H}^{(2)}$ associated to the second complement set $\overline{Q}_2$,

$$M^{(2)} = \mathbb{1}_{\overline{Q}_2} \otimes M_{NI}^{(2)},$$

and the target operator O is defined by the complex numbers $c_k$, the second product operators $P_k^{(2)}$ and the complement

product operators $P_k^{(c)}$ according to $O = \sum_{k=1}^{N_O} c_k P_k^{(c)} \otimes P_k^{(2)}$ .

The definition of the estimator may be understood as follows: The dual effects $D_m$ form a basis of the space of density operators on the set Q of qudits. Thus, the density operator $\sigma$ of the prepared state may be expressed in terms of these dual effects according to $\sigma = \Sigma_m p_m D_m$, wherein $p_m = \text{tr}[\sigma \Pi_m]$. Thus, given the set of measurement data

$\{m^{(s)}\}_{s=1}^{S}$ , the density operator $\sigma$ may be approximated as $\sigma_S = \frac{1}{S} \sum_{s=1}^{S} D_{m^{(s)}}$ . It is now clear that $\bar{O}$ is an estimator for tr[$M(\sigma)O$].

Without any additional constraints on the target map M, the calculation of the value of the estimator would, however, require the storage and multiplication of matrices of dimension $d^N \times d^N$, wherein d is the number of levels of the d-level system (i.e., d=2 in the case of qubits), and N is the number of qudits. It is clear, that the calculation of the value of the estimator $\bar{O}$ becomes intractable on a classical computer due to runtime and memory problems for about N = 20 qubits, and for d > 2, the number of qudits must be even lower so that a calculation on a classical computer is possible.

However, according to the first aspect of the present invention, the target map M has a special structure, and it is not necessary to construct the target map explicitly for the calculation. Namely, the target map is a composition of first and second linear maps $M^{(1)}, M^{(2)}: L(H) \to L(H)$, $M = M^{(2)} \circ M^{(1)}$, wherein " $\circ$ " denotes the function composition. I.e., $M(\rho) = M^{(2)}(M^{(1)}(\rho))$ for any linear operator $\rho \in L(H)$. Furthermore, the first linear map $M^{(1)}$ is a tensor product of the first non-identity linear map $M_{NI}^{(1)}$ and an identity map on the space of linear operators $L(\overline{H}^{(1)})$ on the Hilbert space $\overline{H}^{(1)}$ associated to the first complement set $\overline{Q}_1$. I.e., the set Q of qudits is decomposed into two disjoint set, namely the first set of qudits $Q_1$ and its complement, the first complement set $\overline{Q}_1 = Q\backslash Q_1$. The map

$$M^{(1)} = M_{NI}^{(1)} \otimes \mathbb{1}_{\overline{Q}_1}$$

acts on the space of linear operators on the Hilbert space H, L(H), but it acts as a non-identity linear map only on the Hilbert space $H^{(1)}$ associated to the first set $Q_1$ of qudits. In some embodiments, the map $M^{(1)}$ may be different from the identity map only on a proper subspace of the Hilbert space $H^{(1)}$.

The second linear map $M^{(2)}$ is a tensor product of the second non-identity linear map $M_{NI}^{(2)}$ and an identity map on the space of linear operators $L(\overline{H}^{(2)})$ on the Hilbert space $\overline{H}^{(2)}$ associated to the second complement set $\overline{Q}_2$. I.e., the set Q of qudits is decomposed into two disjoint set, namely the first second of qudits $Q_2$ and its complement, the second complement set $\overline{Q}_2 = Q\backslash Q_2$. The map

$$M^{(2)} = \mathbb{1}_{\overline{Q}_2} \otimes M_{NI}^{(2)}$$

acts on the space of linear operators on the Hilbert space H, L(H), but it acts as a non-identity linear map only on the Hilbert space $H^{(2)}$ associated to the second set $Q_2$ of qudits. In some embodiments, the map $M^{(2)}$ may be different from the identity map only on a proper subspace of the Hilbert space $H^{(2)}$.

Due to this special structure of the linear map M, the value of the estimator $\bar{O}$ is now calculable using operators of dimension less than $d^N \times d^N$. More precisely, the calculation according to the method of the present invention uses operators/matrices defined according to $tr\left[A_1 M_{NI}^{(1)}(B_1)\right] = tr[M_{NI}^{(1)\dagger}(A_1)B_1]$ or according to $tr\left[A_2 M_{NI}^{(2)}(B_2)\right] = tr[M_{NI}^{(2)\dagger}(A_2)B_2]$ of a dimension which is at most the maximum of $d^{N_1} \times d^{N_1}$ and $d^{N_2} \times d^2$, wherein $N_1$ is the number of qudits in the set $Q_1$, and $N_2$ is the number of qudits in the set $Q_2$, as may also be understood from the following:

The calculation of the coefficient $\omega_{m^{(s)}}^{(k,j)}$ in the estimator $\bar{O}$ includes, as a first option, calculating a partial trace over the second complement set $\overline{Q}_2$ of a product of an image $M_{NI}^{(1)}(D_{m^{(s)}}^{(j)})$ of the representation of the first dual operator $D_{m^{(s)}}^{(j)}$ under the first non-identity linear map $M_{NI}^{(1)}$ and a tensor product of the complement product operator $P_k^{(c)}$ and an identity map

$$\mathbb{1}_{Q_I}$$

on the intersection Hilbert space $H_I$ associated to the intersection set $Q_I$,

$$\operatorname{tr}_{\bar{Q}_2}\left[M_{NI}^{(1)}\left(D_{m^{(s)}}^{(j)}\right)P_k^{(c)}\otimes \mathbb{1}_{Q_I}\right].$$

The operators $D_{m^{(s)}}^{(j)}, M_{NI}^{(1)}\left(D_{m^{(s)}}^{(j)}\right)$ and

$$P_k^{(c)}\otimes \mathbb{1}_{Q_I},$$

are all of dimension $d^{N_1}\times d^{N_1}$. If we denote by

$$\Lambda_{m^{(s)}}^{(j,k)}=\operatorname{tr}_{\bar{Q}_2}\left[M_{NI}^{(1)}\left(D_{m^{(s)}}^{(j)}\right)P_k^{(c)}\otimes \mathbb{1}_{Q_I}\right],$$

it is obvious that the term $\omega_{m^{(s)}}^{(k,j)}$ may be calculated according to $\omega_{m^{(s)}}^{(k,j)}=\operatorname{tr}_{\bar{Q}_2}\left[M_{NI}^{(2)}\left(\Lambda_{m^{(s)}}^{(j,k)}\otimes \widetilde{D}_{m^{(s)}}^{(j)}\right)P_k^{(2)}\right]$, or alternatively, according to $\omega_{m^{(s)}}^{(k,j)}=\operatorname{tr}_{\bar{Q}_2}\left[M_{NI}^{(2)\dagger}(P_k^{(2)})\Lambda_{m^{(s)}}^{(j,k)}\otimes \widetilde{D}_{m^{(s)}}^{(j)}\right]$. Here, $M_{NI}^{(2)\dagger}$ is the adjoint map of $M_{NI}^{(2)}$. The adjoint map $M_{NI}^{(2)\dagger}$ may either be provided to the classical computer as an input, or it may be calculated from the second non-identity linear map $M_{NI}^{(2)}$ by the classical computer. Note that $\operatorname{tr}_{\bar{Q}_2}[...]$ is the complete trace over the Hilbert space associated to the second complement set $\bar{Q}_2$ and not a partial trace. Thus, we may write $tr[...]$ instead. However, throughout this application, $\operatorname{tr}_{H_i}[...]$ may be used even when $H_i$ is the complete remaining Hilbert space to facilitate the understanding of the method. The operators $\Lambda_{m^{(s)}}^{(j,k)}\otimes \widetilde{D}_{m^{(s)}}^{(j)}, M_{NI}^{(2)}\left(\Lambda_{m^{(s)}}^{(j,k)}\otimes \widetilde{D}_{m^{(s)}}^{(j)}\right)$, and $M_{NI}^{(2)\dagger}(P_k^{(2)})$ are all of dimension $d^{N_2}\times d^{N_2}$. The value of the estimator $\bar{O}$ may then be calculated according to $\bar{O}=\frac{1}{S}\sum_{s=1}^{S}\sum_{k=1}^{N_O}\sum_{j=1}^{N_{m^{(s)}}}c_k d_j^{(m^{(s)})}\omega_{m^{(s)}}^{(k,j)}$.

Additionally, or alternatively, the calculation of $\omega_{m^{(s)}}^{(k,j)}$ includes calculating a partial trace over the first complement set $\bar{Q}_1$ of a product of an image $M_{NI}^{(2)\dagger}(P_k^{(2)})$ of the representation of the second product operator $P_k^{(2)}$ under the adjoint of the second non-identity linear map $M_{NI}^{(2)\dagger}$ and a tensor product of an identity map

$$\mathbb{1}_{Q_I}$$

on the intersection Hilbert space $H_I$ and the first complement operator

$$\widetilde{D}_{m^{(s)}}^{(j)}, \operatorname{tr}_{\bar{Q}_1}\left[M_{NI}^{(2)\dagger}(P_k^{(2)})\mathbb{1}_{Q_I}\otimes \widetilde{D}_{m^{(s)}}^{(j)}\right].$$

The operators $P_k^{(2)}$, $M_{NI}^{(2)\dagger}(P_k^{(2)})$ and

$$\mathbb{1}_{Q_I} \otimes \widetilde{D}_{m^{(s)}}^{(J)}$$

are all of dimension $d^{N2} \times d^{N2}$. If we denote by

$$\bar{\Lambda}_{m^{(s)}}^{(J,k)} =$$

$$\mathrm{tr}_{\bar{Q}_1}\left[ M_{NI}^{(2)\dagger}(P_k^{(2)})\mathbb{1}_{Q_I} \otimes \widetilde{D}_{m^{(s)}}^{(J)}\right],$$

it is obvious that the term $\omega_{m^{(s)}}^{(k,j)}$ may be calculated according to $\omega_{m^{(s)}}^{(k,j)} = \mathrm{tr}_{Q_1}\left[ M_{NI}^{(1)\dagger}\left( P_k^{(c)} \otimes \bar{\Lambda}_{m^{(s)}}^{(J,k)}\right) D_{m^{(s)}}^{(J)}\right]$,

or alternatively, according to $\omega_{m^{(s)}}^{(k,j)} = \mathrm{tr}_{Q_1}\left[ M_{NI}^{(1)}\left( D_{m^{(s)}}^{(J)}\right) P_k^{(c)} \otimes \bar{\Lambda}_{m^{(s)}}^{(J,k)}\right]$. Here, $M_{NI}^{(1)\dagger}$ is the adjoint map of $M_{NI}^{(1)}$. The adjoint map $M_{NI}^{(1)}$ may either be provided to the classical computer as an input, or it may be calculated by the classical computer. The operators $P_k^{(c)} \otimes \bar{\Lambda}_{m^{(s)}}^{(J,k)}$, $M_{NI}^{(1)\dagger}\left( P_k^{(c)} \otimes \bar{\Lambda}_{m^{(s)}}^{(J,k)}\right)$, and $M_{NI}^{(1)}\left( D_{m^{(s)}}^{(J)}\right)$ are all of dimension $d^{N1} \times d^{N1}$. The value of the estimator $\bar{O}$ may then be calculated according to $\bar{O} = \frac{1}{S}\sum_{s=1}^{S}\sum_{k=1}^{N_O}\sum_{j=1}^{N_D} c_k d_j^{(m^{(s)})} \omega_{m^{(s)}}^{(k,j)}$.

Thus, the calculation of the value of the estimator may be achieved by storing and multiplying matrices of a dimension which is at most the maximum of $d^{N1} \times d^{N1}$ and $d^{N2} \times d^{N2}$. Note that without using the partial traces, the calculation of tr $\left[ M(D_{m^{(s)}}^{(J)} \otimes \widetilde{D}_{m^{(s)}}^{(J)})P_k^{(c)} \otimes P_k^{(2)}\right]$ would require the storage and multiplication of $d^N \times d^N$ matrices. The method for performing computation using a hybrid quantum-classical computing system according to the first aspect of the present invention makes use of the special internal structure of said hybrid quantum-classical computing system to allow for an estimation of expectation values of operators of a quantum system which would otherwise be impossible or computationally very costly to estimate. On the one hand, as the dimension of a Hilbert space of an N qubit system is exponential in the number of qubits, expectation values of operators on a quantum state of a large quantum systems are preferably estimated by preparing and measuring the quantum state using the quantum computing unit. For example, finding the ground state of a quantum system of N qubits on a classical computer generally requires storing and diagonalizing matrices of a dimension which is exponential in N, thereby being computationally costly or even intractable for large system sizes due to memory and runtime problems. A quantum computing unit is thus better adapted for this task. However, the desired quantum state may not be preparable by the quantum computing unit (e.g., due to quantum noise, or due to the use of variational state preparation) and classical post-processing of the data may be necessary. For the above method, this classical post-processing requires calculating a value of the estimator of tr$[M(\sigma)O]$ via the coefficients $\omega_{m^{(s)}}^{(k,j)} = \mathrm{tr}\left[ M(D_{m^{(s)}}^{(J)} \otimes \widetilde{D}_{m^{(s)}}^{(J)})P_k^{(c)} \otimes P_k^{(2)}\right]$. This requires, in principle, storing and multiplying matrices of a dimension which is exponential in the number of qubits and may thus be intractable, or computationally very costly. Thus, the method according to the present invention considers the internal functioning of the classical computer and reduces the dimension of the matrices that have to be stored and multiplied by the classical computer. In this way, a method is provided which is more favorable regarding the required memory space and the requires runtime. Below, we will provide an example where the required memory space is independent of the number of qubits and the runtime of the algorithm is linear in the number of qubits. The method according to the first aspect of the present invention may be applied in various technical field, as will be further explained below and includes, but is not limited, to noise mitigation, assisting variational state optimization and measurement cross-talk reduction.

The numbers $c_k$, the second product operators $P_k^{(2)}$ and the complement product operators $P_k^{(c)}$ defining the target operator O according to $= \sum_{k=1}^{N_o} c_k P_k^{(c)} \otimes P_k^{(2)}$ do not need to fulfill any constraints, thereby defining a target operator which may be hermitian or nonhermitian. In one embodiment of the present invention, the numbers $c_k$, $k = 1, ..., N_0$, may be real numbers and the second product operators $P_k^{(2)}$ and the complement product operators $P_k^{(c)}$ may be hermitian, thereby defining a target operator O which is a hermitian operator. In this way, the method according to the present may be used for estimating the value of an observable quantity associated to the hermitian operator O for a quantum system in a state $M(\sigma)$, in case that $M(\sigma)$ is a valid density operator. In one example where the qudits are qubits, i. e., $d = 2$, the complement operators $P_k^{(c)}$ and the complement product operators $P_k^{(2)}$ may be tensor products of Pauli operators. In one example, the target operator may be a Hamilton operator of a quantum many-body system. The method may then be used to estimate ground state energies.

The product operators $P_k^{(2)}$ and the complement product operators $P_k^{(c)}$ may in principle act on an arbitrary number of qudits. However, in many cases, one is interested in local operators, that is, operators that act on a small number of qudits only. For example, the operator O may be a local Hamiltonian. Thus, in one embodiment of the method according to the present invention, the product operators $P_k^{(2)}$ and the complement product operators $P_k^{(c)}$ may be $K_P$-local operators being non-identity operators on at most $K_P$ qudits, thereby defining a target operator which is a $2K_P$-local operator. Preferably $K_P \leq 4$, preferably $K_P \leq 3$, preferably $K_P \leq 2$, and preferably $K_P = 1$. In this case, the second product operators $P_k^{(2)}$ and the complement product operators $P_k^{(c)}$ may be provided to the classical computer by providing the non-identity local operators $O_{kj}^{(j)}$ to the classical computer. The second product operators $P_k^{(2)}$ and the complement product operators $P_k^{(c)}$ may then be constructed by the classical computer only for the calculation of the partial trace or trace. This reduces the required memory space of the classical computer.

In one embodiment of the method according to the present invention, the first non-identity linear map $M_{NI}^{(1)}$ may be a composition of an integer number $R_1$ of linear, $K_1$-local maps, $M_{NI}^{(1)} = \bigcirc_{r=1}^{R_1} M_r^{(1)}$, $M_r^{(1)}: L(H^{(1)}) \rightarrow L(H^{(1)})$, wherein each linear, $K_1$-local map $M_r^{(1)}$ is a non-identity linear map on at most $K_1$ qudits and/or the second non-identity linear map $M_{NI}^{(2)}$ may be a composition of an integer number $R_2$ of linear, $K_2$-local maps, $M_{NI}^{(2)} = \bigcirc_{r=1}^{R_2} M_r^{(2)}$, $M_r^{(2)}: L(H^{(2)}) \rightarrow L(H^{(2)})$, wherein each linear, $K_2$-local map $M_r^{(2)}$ is a non-identity linear map on at most $K_2$ qudits, wherein preferably $K_1 \leq 20$, preferably $K_1 \leq 10$, preferably $K_1 \leq 4$, preferably $K_1 \leq 2$, and preferably $K_2 \leq 20$, preferably $K_2 \leq 10$ preferably $K_2 \leq 4$, preferably $K_2 \leq 2$, and providing said first and/or second non-identity linear maps as an input to said classical computer may comprise providing said $R_1$ linear, $K_1$-local maps $M_r^{(1)}$ and/or said $R_2$ linear, $K_2$-local maps $M_r^{(2)}$ to said classical computer. Here, $\bigcirc_{r=1}^{R_1} M_r^{(1)}$ denotes the composition of the maps $M_1^{(1)}, ..., M_{R_1}^{(1)}$ according to $\bigcirc_{r=1}^{R_1} M_r^{(1)} = M_{R_1}^{(1)} \circ M_{R_1-1}^{(1)} \circ ... \circ M_2^{(1)} \circ M_1^{(1)}$, and $\bigcirc_{r=1}^{R_2} M_r^{(2)}$ denotes the composition of the maps $M_1^{(2)}, ..., M_{R_2}^{(2)}$ according to $\bigcirc_{r=1}^{R_2} M_r^{(2)} = M_{R_2}^{(2)} \circ M_{R_2-1}^{(2)} \circ ... \circ M_2^{(2)} \circ M_1^{(2)}$. According to this embodiment, the first and/or second non-linear map is/are a composition of $K_1$-local or $K_2$-local maps. In one example, calculating the value of the estimator according to c) may comprise calculating $M_{NI}^{(1)} = \bigcirc_{r=1}^{R_1} M_r^{(1)}$ and/or $M_{NI}^{(2)} = \bigcirc_{r=1}^{R_2} M_r^{(2)}$ . Each of the $K_1$-local or $K_2$-local maps $M_r^{(1)}$ or $M_r^{(2)}$ allows for an efficient representation

$$M_r^{(1)} = \widetilde{M}_r^{(1)} \otimes \mathbb{1}_{\bar{S}_1},$$

$$M_r^{(2)} = \widetilde{M}_r^{(2)} \otimes \mathbb{1}_{\bar{S}_2},$$

wherein $\widetilde{M}_r^{(1)}$ is a linear map that acts on a Hilbert space associated to a subset $\tilde{Q}_1$, of $Q_1$ and is different from the identity on all qudits in $\tilde{Q}_1$, $\widetilde{M}_r^{(2)}$ is a linear map that acts on a Hilbert space associated to a subset $\tilde{Q}_2$ of $Q_2$ and is different from the identity on all qudits in $\tilde{Q}_2$, the subset $\bar{S}_1 = Q_1 \backslash \tilde{Q}_1$ is the complement of $\tilde{Q}_1$ in the set $Q_1$ and the subset $\bar{S}_2 = Q_2 \backslash \tilde{Q}_2$ is the complement of $\tilde{Q}_2$ in the set $Q_2$. The linear maps $\widetilde{M}_r^{(1)}$ and $\widetilde{M}_r^{(2)}$ allow for a representation which is of smaller dimension than the representation of $M_{NI}^{(1)}$ and $M_{NI}^{(2)}$ , respectively. This may reduce the required memory of the classical computer.

In one embodiment of the method according to the present invention providing said second non-identity linear map $M_{NI}^{(2)}$ as an input to the classical computer may comprise providing a set of $N_r$ linear non-identity subspace maps $\widetilde{M}_{NI}^{(r)}, r = 1, ..., N_r$ , the r-th linear non-identity subspace map $\widetilde{M}_{NI}^{(r)} : L(H_r) \to L(H_r)$ being defined on a space of linear operators on a Hilbert space $H_r$ associated to an r-th subset $S^{(r)}$ of qudits which is a proper subset of the second set of qudits, $Q_2$, wherein all subsets $S^{(r)}$ are different from each other, the union of all subsets $S^{(r)}$ is the second set, $\cup_{r=1}^{N_r} S^{(r)} = Q_2$ , $Q_2$, an intersection of the r-th subset and the (r+1)-th subset is an (r+1)-th non-empty intersection set $S_I^{(r+1)} = S^{(r)} \cap S^{(r+1)}$ , and an intersection of the r-th subset $S^{(r)}$ and the union of all subsequent subsets $S^{(j)}$ with $j > r$ is different from the r-th subset $S^{(r)}$, $S^{(r)} \neq S^{(r)} \cap \left( \cup_{j=r+1}^{N_r} S^{(j)} \right)$ , such that the second non-identity linear map $M_{NI}^{(2)}$ is defined as a composition of $N_r$ maps, the r-th of said maps being a tensor product of the r-th linear non-identity subspace map $\widetilde{M}_{NI}^{(r)}$ and an identity map

$$\mathbb{1}_{\bar{S}^{(r)}}$$

on the complement $\bar{S}^{(r)} = Q_2 \backslash S^{(r)}$ of the r-th subset of qudits in the second set

$$Q_2, \quad M_{NI}^{(2)} = \bigcirc_{r=1}^{N_r} \left( \widetilde{M}_{NI}^{(r)} \otimes \mathbb{1}_{\bar{S}^{(r)}} \right),$$

providing said representation of said second product operators $P_k^{(2)}$ to said classical computer may comprise providing, for each second product operator $P_k^{(2)}$, a set of $N_r$ representations of projected product operators $P_k^{(2,r)}$, the projected product operator $P_k^{(2,r)}$ being the projection of the second product operator $P_k^{(2)}$ onto an r-th projection set $\overline{S}^{(2,r)}$ of qudits which is the relative complement of the r+1-th intersection set $S_I^{(r+1)}$ in the r-th subset $S^{(r)}$, $\overline{S}^{(2,r)} = S^{(r)} \backslash S_I^{(r+1)}$, wherein the $(N_r + 1)$-th intersection set is defined as the empty set, $S_I^{(N_r+1)} = \{\,\}$;

providing said representation of said complement dual operators $\widetilde{D}_m^{(j)}$ to said classical computer may comprise providing, for each complement dual operator $\widetilde{D}_m^{(j)}$, a set of composition operators $\widetilde{D}_{m,r}^{(j,t_r)}$, said composition operators $\widetilde{D}_{m,r}^{(j,t_r)}$ being defined by a decomposition of the complement dual operator $\widetilde{D}_m^{(j)}$ according to $\widetilde{D}_m^{(j)} = \sum_{t_1,\ldots,t_{N_r}=1}^{T_1,\ldots,T_{N_r}} \tilde{d}_{t_1\ldots t_{N_r}}^{(m,j)} \bigotimes_{r=1}^{N_r} \widetilde{D}_{m,r}^{(j,t_r)}$ wherein the r-th composition operator $\widetilde{D}_{m,r}^{(j,t_r)}$ is defined on an r-th composition set $\overline{S}^{(1,r)}$ of qudits which is the relative complement of the r-th intersection set $S_I^{(r)}$ in the r-th subset $S^{(r)}$, $\overline{S}^{(1,r)} = S^{(r)} \backslash S_I^{(r)}$, wherein the first intersection set $S_I^{(1)}$ is defined as the intersection set, $S_I^{(1)} = Q_I$;

and wherein said calculating of said value of said estimator may comprise calculating

$$\bar{O} = \frac{1}{S}\sum_{s=1}^{S}\sum_{k=1}^{N_O}\sum_{j=1}^{N_{D_m^{(s)}}}\sum_{t_1,\ldots,t_{N_r}}^{T_1,\ldots,T_{N_r}} c_k d_j^{(m^{(s)})} \tilde{d}_{t_1\ldots t_{N_r}}^{(m^{(s)},j)} \omega_{m^{(s)}}^{(k,j,t_1,\ldots,t_{N_r})}$$

with

$$\omega_{m^{(s)}}^{(k,j,t_1,\ldots,t_{N_r})} = \mathrm{tr}\left[ M(D_{m^{(s)}}^{(j)} \bigotimes_{r=1}^{N_r} \widetilde{D}_{m^{(s)},r}^{(j,t_r)}) P_k^{(c)} \bigotimes_{r=1}^{N_r} P_k^{(2,r)} \right],$$

wherein said calculation of $\omega_{m^{(s)}}^{(k,j,t_1,\ldots,t_{N_r})}$ may comprise calculating an r-th intermediate operator $\Lambda_{m^{(s)},r}^{(k,j,t_r,t_{r-1},\ldots,t_1)}$, $r = 1, \ldots, N_r - 1$, via a partial trace over the r-th projection set $\overline{S}^{(2,r)}$ of a product of an image $\widetilde{M}_{NI}^{(r)}\left( \Lambda_{m^{(s)},r-1}^{(k,j,t_{r-1},t_{r-2},\ldots,t_1)} \otimes \widetilde{D}_{m^{(s)},r}^{(j,t_r)} \right)$ of a tensor product of the representation of the composition operator $\widetilde{D}_{m^{(s)},r}^{(j,t_r)}$ and the (r-1)-th intermediate operator $\Lambda_{m^{(s)},r-1}^{(k,j,t_{r-1},t_{r-2},\ldots,t_1)}$ under the r-th non-identity linear subspace map $\widetilde{M}_{NI}^{(r)}$ and a tensor product of the second projected operator $P_k^{(2,r)}$ and an identity map

$$\mathbb{1}_{S_I^{(r+1)}}$$

on the (r+1)-th intersection set

$$S_I^{(r+1)}, \quad \Lambda_{m^{(s)},r}^{(k,j,t_r,t_{r-1},\ldots,t_1)} = \mathrm{tr}_{\overline{S}^{(2,r)}}\left[ \widetilde{M}_{NI}^{(r)}\left( \Lambda_{m^{(s)},r-1}^{(k,j,t_{r-1},t_{r-2},\ldots,t_1)} \otimes \widetilde{D}_{m^{(s)},r}^{(j,t_r)} \right) P_k^{(2,r)} \otimes \right.$$

$$\mathbb{1}_{S_l^{(r+1)}}\Big],$$

wherein the zero-th intermediate operator $\Lambda^{(k,j,t_0)}_{m^{(s)},0}$ is defined as

$$\Lambda^{(k,j,t_0)}_{m^{(s)},0} =$$

$$\mathrm{tr}_{\bar{Q}_2}\left[M^{(1)}_{NI}\left(D^{(j)}_{m^{(s)}}\right)P^{(c)}_k \otimes \mathbb{1}_{Q_l}\right]$$

and/or calculating an r-th complement intermediate operator $\bar{\Lambda}^{(k,j,t_N,t_{N-1},\dots,t_r)}_{m^{(s)},r}$ , $r = N_r - 1, \dots, 1$ via a partial trace over the r-th composition set $\bar{S}^{(1,r)}$ of a product of an image $\widetilde{M}^{(r)\dagger}_{NI}\left(P^{(2,r)}_k \otimes \bar{\Lambda}^{(k,j,t_N,t_{N-1},\dots,t_{r+1})}_{m^{(s)},r+1}\right)$ of a tensor product of the representation of the second projected operator $P^{(2,r)}_k$ and the (r+1)-th complement intermediate operator $\bar{\Lambda}^{(k,j,t_N,t_{N-1},\dots,t_{r+1})}_{m^{(s)},r+1}$ under the adjoint of the r-th non-identity linear subspace map $\widetilde{M}^{(r)\dagger}_{NI}$ and a tensor product of the composition operator $\widetilde{D}^{(j,t_r)}_{m^{(s)},r}$ and an identity map

$$\mathbb{1}_{S_l^{(r)}}$$

on the r-th intersection set

$$S_l^{(r)}, \bar{\Lambda}^{(k,j,t_N,t_{N-1},\dots,t_r)}_{m^{(s)},r} = \mathrm{tr}_{\bar{S}^{(1,r)}}\left[\widetilde{M}^{(r)\dagger}_{NI}\left(P^{(2,r)}_k \otimes\right.\right.$$

$$\left.\left.\bar{\Lambda}^{(k,j,t_N,t_{N-1},\dots,t_{r+1})}_{m^{(s)},r+1}\right)\mathbb{1}_{S_l^{(r)}} \otimes \widetilde{D}^{(j,t_r)}_{m^{(s)},r}\right],$$

wherein for $r=N_r$ the complement intermediate operator $\bar{\Lambda}^{(k,j,t_{N_r})}_{m^{(s)},N_r}$ is defined as

$$\bar{\Lambda}^{(k,j,t_{N_r})}_{m^{(s)},N_r} = \mathrm{tr}_{\bar{S}^{(1,N_r)}}\left[M^{(N_r)\dagger}_{NI}(P^{(2,N_r)}_k)\mathbb{1}_{S_l^{(N_r)}} \otimes \widetilde{D}^{(j,t_{N_r})}_{m^{(s)},N_r}\right].$$

In one example of the above embodiment, said calculation of $\omega^{(k,j,t_1,\dots,t_{N_r})}_{m^{(s)}}$ comprises only the calculation of the intermediate operators $\Lambda^{(k,j,t_r,t_{r-1},\dots,t_1)}_{m^{(s)},r}$. In this case, $\omega^{(k,j,t_1,\dots,t_{N_r})}_{m^{(s)}}$ may be calculated according to

$$\omega_{m^{(s)}}^{(k,j,t_1,...,t_{N_r})} = \text{tr}_{S^{(N_r)}} \left[ \widetilde{M}_{NI}^{(N_r)} \left( \Lambda_{m^{(s)},N_r-1}^{(k,j,t_{N_r-1},t_{N_r-2},...,t_1)} \otimes \widetilde{D}_{m^{(s)},N_r}^{(j,t_{N_r})} \right) P_k^{(2,N_r)} \right]$$

. In another example of the above embodiment, said calculation of $\omega_{m^{(s)}}^{(k,j,t_1,...,t_{N_r})}$ comprises only the calculation of the complement intermediate operators

$\bar{\Lambda}_{m^{(s)},r}^{(k,j,t_N,t_{N-1},...,t_r)}$ . In this case $\omega_{m^{(s)}}^{(k,j,t_1,...,t_{N_r})}$ may be calculated according to

$$\omega_{m^{(s)}}^{(k,j,t_1,...,t_{N_r})} = \text{tr}_{Q_1} \left[ M_{NI}^{(1)} \left( D_{m^{(s)}}^{(j)} \right) P_k^{(c)} \otimes \bar{\Lambda}_{m^{(s)},1}^{(k,j,t_N,t_{N-1},...,t_1)} \right]$$ or according to

$$\omega_{m^{(s)}}^{(k,j,t_1,...,t_{N_r})} = \text{tr}_{Q_1} \left[ D_{m^{(s)}}^{(j)} M_{NI}^{(1)\dagger} (P_k^{(c)} \otimes \bar{\Lambda}_{m^{(s)},1}^{(k,j,t_N,t_{N-1},...,t_1)}) \right]$$ . In another example, said calculation of

$\omega_{m^{(s)}}^{(k,j,t_1,...,t_{N_r})}$ comprises for some $1 \le r_1 \le N_r$ the calculation of the intermediate operators $\Lambda_{m^{(s)},r}^{(k,j,t_r,t_{r-1},...,t_1)}$ for $r =$

1, ..., $r_1$ - 1 and the calculation of the complement intermediate operators $\bar{\Lambda}_{m^{(s)},r}^{(k,j,t_N,t_{N-1},...,t_r)}$ for $r = N_r$, ..., $r_1 + 1$. Then,

$\omega_{m^{(s)}}^{(k,j,t_1,...,t_{N_r})}$ may be calculated according to $$\omega_{m^{(s)}}^{(k,j,t_1,...,t_{N_r})} = \text{tr}_{S^{(r_1)}} \left[ \widetilde{M}_{NI}^{(r_1)} \left( \Lambda_{m^{(s)},r_1-1}^{(k,j,t_{r_1-1},t_{r_2-1},...,t_1)} \otimes \right. \right.$$

$$\left. \left. \widetilde{D}_{m^{(s)},r_1}^{(j,t_{r_1})} \right) P_k^{(2,r_1)} \otimes \bar{\Lambda}_{m^{(s)},r_1+1}^{(k,j,t_N,t_{N-1},...,t_{r_1+1})} \right]$$ or according to $$\omega_{m^{(s)}}^{(k,j,t_1,...,t_{N_r})} = \text{tr}_{S^{(r_1)}} \left[ \widetilde{M}_{NI}^{(r_1)\dagger} \left( P_k^{(2,r_1)} \otimes \right. \right.$$

$$\left. \left. \bar{\Lambda}_{m^{(s)},r_1+1}^{(k,j,t_N,t_{N-1},...,t_{r_1+1})} \right) \Lambda_{m^{(s)},r_1-1}^{(k,j,t_{r_1-1},t_{r_2-1},...,t_1)} \otimes \widetilde{D}_{m^{(s)},r_1}^{(j,t_{r_1})} \right]$$ .

The method according to this embodiment allows for a very efficient calculation of the estimator regarding the required memory space and the runtime of the classical computer. More precisely, the calculation of the value of the

estimator $\bar{O}$ via $\omega_{m^{(s)}}^{(k,j,t_1,...,t_{N_r})}$ involves operators of a dimension of at most $d^{\tilde{N}} \times d^{\tilde{N}}$, wherein $\tilde{N}$ is the number of qudits in the first set $Q_1$ or the subsets $S^{(r)}$, and d is the dimension of the d-level system. For example, when the first set $Q_1$ and the $N_r$ subsets all comprise the same number of qudits, e. g., three qudits, the calculation of the value of the estimator $\bar{O}$ involves only operators of a dimension $d^3 \times d^3$ which may be represented by $d^3 \times d^3$ matrices and is independent of the number of N of qudits. For an example of the qudits being qubits, these are 8 $\times$ 8 matrices. Such matrices may be stored and manipulated efficiently on a classical computer, and the value of the estimator $\bar{O}$ may be calculated for very large system sizes. Generally speaking, the required memory and runtime of the algorithm scales exponentially in the number $\tilde{N}$ of qudits in the first set $Q_1$ or the subsets $S^{(r)}$ and linear in the system size, i. e., the number N of qudits. In this way, when $\tilde{N}$ is independent of the system size, the scaling of the runtime and memory may be linear in the system size. This allows for an efficient calculation of the estimator on a classical computer.

The r-th composition set $\bar{S}^{(1,r)}$ and/or the r-th projection set $\bar{S}^{(2,r)}$ may comprise an arbitrary number of qudits. In one example, at least one of the sets $\bar{S}^{(1,r)}$, $\bar{S}^{(2,r)}$ may consist of a single qudit. Then, the r-th intermediate operator and/or the r-th complement intermediate operator may be calculated via a partial trace over the Hilbert space associated to a single qudit.

In one embodiment of the method according to the invention, the first and second non-identity linear maps $M_{NI}^{(1)}, M_{NI}^{(2)}$ are such that the image of the density operator σ under the target map M is positive semidefinite, M(σ)≥0. This constrain may be useful for the following problem: Suppose, one is interested in finding the ground state and the ground state energy of a quantum system of N qudits described by a Hamiltonian $O_H$. For some reason, it may not be possible to prepare the ground state experimentally, but one may be only able to prepare the quantum system in a state σ which is different from the ground state, for example, due to some quantum noise in the preparation. Then, one may try to find a map M such that M(σ) is a good approximation of the density operator of the ground state by a variational minimization routine. I.e., one may parametrize the first and second non-identity linear maps, which may, e.g., be compositions of K-local maps, and try to find the minimum $\min_{M_{NI}^{(1)}, M_{NI}^{(2)}} \text{tr}[M(σ)O_H]$ . If $M_{NI}^{(1)}, M_{NI}^{(2)}$ were such that

$M(\sigma)<0$, the minimization could be driven towards such maps possibly leading to an estimation of the ground state energy which is below the true value. This problem may be prevented by imposing that the target map M is positive semidefinite, $M(\sigma)\geq 0$.

In one embodiment of the method according to the present invention, the first non-identity linear map $M_{NI}^{(1)}$ may be a composition of an integer number $R_1$ of linear, $K_1$-local maps,

$$M_{NI}^{(1)} = \bigcirc_{r=1}^{R_1} M_r^{(1)}, \; M_r^{(1)} : L(H^{(1)}) \rightarrow L(H^{(1)})$$

, and the second non-identity linear map $M_{NI}^{(2)}$ may be a composition of an integer number $R_2$ of linear, $K_2$-local maps,

$$M_{NI}^{(2)} = \bigcirc_{r=1}^{R_2} M_r^{(2)}, \; M_r^{(2)} : L(H^{(2)}) \rightarrow L(H^{(2)})$$

,

thereby defining the target linear map M as a composition of $R = R_1 + R_2$ k-local maps $M = \bigcirc_{r=1}^{R} M_r$ , wherein the k-local map $M_r$ is a tensor product of the $K_1$-local map $M_r^{(1)}$ and an identity map

$$\mathbb{1}_{\overline{Q}_1}$$

on the first complement set $\overline{Q}_1$ of qudits,

$$M_r = M_r^{(1)} \otimes \mathbb{1}_{\overline{Q}_1},$$

and is different from the identity map on all qudits in a set $S_{Q_r}^{(1)}$ of qudits, i. e.,

$$M_r = \widetilde{M}_r^{(1)} \otimes \mathbb{1}_{Q \backslash S_{Q_r}^{(1)}},$$

and $\widetilde{M}_r^{(1)}$ is different from the identity map on all qudits in $S_{Q_r}^{(1)}$ , or the k-local map $M_r$ is a tensor product of the $K_2$-local map $M_{r-R_1}^{(2)}$ and an identity map $\mathbb{1}_{\overline{Q}_2}$ on the second complement set $\overline{Q}_2$ of qudits,

$$M_r = \mathbb{1}_{\overline{Q}_2} \otimes M_{r-R_1}^{(2)},$$

and is different from the identity map on all qudits in a set $S_{Q_r}^{(2)}$ of qudits, i. e.,

$$M_r = \mathbb{1}_{Q \backslash S_{Q_r}^{(2)}} \otimes \widetilde{M}_r^{(2)},$$

and $\widetilde{M}_r^{(2)}$ is different from the identity map on all qudits in $S_{Q_r}^{(2)}$ , and wherein the first and second $K_1$-local, respectively $K_2$-local maps $M_r^{(1)}$ and $M_r^{(2)}$ may be chosen such that an image of the density operator of a purification $|\Psi_r\rangle$ of a

reduced density operator $\sigma_r$ under a tensor product of the map $\widetilde{M}_r^{(1)}$ and an identity map on the Hilbert space associated to the set $S_{Q_r}^{(1)}$ of qudits for $r = 1,..., R_1$ or a tensor product of the map $\widetilde{M}_r^{(2)}$ and an identity map on the Hilbert space associated to the set $S_{Q_{r1}}^{(2)}$ of qudits for $r = R_1 + 1, ..., R_2$ is positive semidefinite,

$$\widetilde{M}_r^{(1)} \otimes \mathbb{1}_{S_{Q_r}^{(1)}}(|\Psi_r\rangle\langle\Psi_r|) \geq 0,$$

or

$$\mathbb{1}_{S_{Q_r}^{(2)}} \otimes \widetilde{M}_r^{(2)}(|\Psi_r\rangle\langle\Psi_r|) \geq 0,$$

wherein the reduced density operator $\sigma_r$ is defined by taking the partial trace over a set $S_{Id}^{(r)}$ of qudits of a density operator obtained by an application of the composition of the first r-1 maps, i. e., $\bigcirc_{i=1}^{r-1} M_i$ to the density operator $\sigma$, $\sigma_r = \mathrm{tr}_{S_{Id}^{(r)}}\left[\bigcirc_{i=1}^{r-1} M_i(\sigma)\right]$, wherein $S_{Id}^{(r)}$ is the complement of the set $S_{Q_r}^{(1)}$ in the set Q of qudits, $S_{Id}^{(r)} = Q \backslash S_{Q_r}^{(1)}$ for $r = 1, ..., R_1$ or $S_{Id}^{(r)}$ is the complement of the set $S_{Q_r}^{(2)}$ in the set Q of qudits $S_{Id}^{(r)} = Q \backslash S_{Q_r}^{(2)}$ for $r = R_1 + 1,..., R_2$, i. e., $S_{Id}^{(r)}$ is the set of qudits on which the map $M_r$ is the identity map, to thereby ensure that an image of the density operator $\sigma$ under the target map M is positive semidefinite, $M(\sigma) \geq 0$. The reduced density operator $\sigma_r = \mathrm{tr}_{S_{Id}^{(r)}}\left[\bigcirc_{i=1}^{r-1} M_i(\sigma)\right]$ may be calculated on the classical computer by using the approximation of the density operator according to $\sigma_S = \frac{1}{S}\sum_{s=1}^{S} D_{m^{(s)}}$ and writing $\sigma_r = \frac{1}{S}\sum_{s=1}^{S} \mathrm{tr}_{S_{Id}^{(r)}}\left[\bigcirc_{i=1}^{r-1} M_i\left(D_{m^{(s)}}\right)\right] = \frac{1}{S}\sum_{s=1}^{S} \sigma_r^{m^{(s)}}$. By construction, the composition $\bigcirc_{i=1}^{r-1} M_i$ may be expressed as a composition of first and second linear maps $\hat{M}^{(1)}$ and $\hat{M}^{(2)}$ according to $\hat{M}^{(2)} \circ \hat{M}^{(1)}$, wherein

$$\hat{M}^{(1)} = \hat{M}_{NI}^{(1)} \otimes \mathbb{1}_{\bar{Q}_1}$$

is a tensor product of a first non-identity linear map $\hat{M}_{NI}^{(1)}$ acting on the Hilbert space associated to the first set $Q_1$ of qudits and an identity map

$$\mathbb{1}_{\bar{Q}_1}$$

on the Hilbert space associated to the first complement set $\overline{Q}_1$, and the second linear map

$$\widehat{M}^{(2)} = \widehat{M}_{NI}^{(2)} \otimes \mathbb{1}_{\bar{Q}_2}$$

is a tensor product of a second linear map $\widehat{M}_{NI}^{(2)}$ acting on the Hilbert space associated to the second set $Q_2$ of qudits and an identity map

$$\mathbb{1}_{\bar{Q}_2}$$

on the Hilbert space associated to the second complement set $\overline{Q}_2$. For $r \leq R_1 + 1$, the second map $\widehat{M}_{NI}^{(2)}$ is the identity map, and the first linear map is $\widehat{M}_{NI}^{(1)} = \bigcirc_{i=1}^{r-1} M_r^{(1)}$. For r > $R_1$ + 1, the first linear map is given by $\widehat{M}_{NI}^{(1)} = \bigcirc_{i=1}^{R_1} M_i^{(1)}$ and the second linear map is given by $\widehat{M}_{NI}^{(2)} = \bigcirc_{i=1}^{r-R_1} M_i^{(2)}$. Then, the reduced density operator $\sigma_r$ may be obtained as follows: For $r \leq R_1 + 1$, calculate $\sigma_r^{(s)}$ according to $\sigma_r^{(s)} = \sum_{j=1}^{N_{D_{m(s)}}} d_j^{(m^{(s)})} \text{tr}_{S_{id}^{(1)} \backslash \bar{Q}_1} \left[ \bigcirc_{i=1}^{r-1} M_i \left( D_{m^{(s)}}^{(j)} \right) \right] \text{tr}_{\bar{Q}_1} \left[ \tilde{D}_{m^{(s)}}^{(j)} \right]$. For $r > R_1 + 1$, calculate $\sigma_r^{(s)}$ according to $\sigma_r^{(m^{(s)})} = \sum_{j=1}^{N_{D_{m(s)}}} d_j^{(m^{(s)})} \text{tr}_{S_{id}^{(2)}} \left[ \bigcirc_{i=1}^{r-1} M_i \left( D_{m^{(s)}}^{(j)} \otimes \tilde{D}_{m^{(s)}}^{(j)} \right) \right]$.

The traces may be efficiently calculated on a classical computer as has been explained above. The above embodiment ensures that M($\sigma$) is positive semidefinite. This property may be useful when the method according to the present invention is used for finding the ground state and/or the ground state energy of a quantum system described by a Hamiltonian $O_H$. This problem has many technical applications including the design of new materials and drugs. For example, the quantum computing unit may be operative to prepare a quantum state described by a density operator $\sigma$ which is different from the desired ground state, e.g., due to the presence of noise in the preparation process. Then, one may try to find the ground state variationally by minimizing tr[$M(\sigma)O_H$] over target linear maps

$$M = \left( \mathbb{1}_{\bar{Q}_2} \otimes M_{NI}^{(2)} \right) \circ \left( M_{NI}^{(1)} \otimes \mathbb{1}_{\bar{Q}_1} \right),$$

wherein the first and second non-identity linear maps are compositions of maps as defined above, i.e., $M_{NI}^{(1)} = \bigcirc_{r=1}^{R_1} M_r^{(1)}$, $M_{NI}^{(2)} = \bigcirc_{r=1}^{R_2} M_r^{(2)}$. However, for a meaningful minimization, it should be ensured that the image of $\sigma$ under the target map $M(\sigma)$ is positive semidefinite, as otherwise the minimization may be driven to solutions for which $M(\sigma) < 0$ which may lead an energy below the ground state energy. Of course, one could impose that each of the maps $M_r^{(1)}$ and $M_r^{(2)}$ is positivesemidefinite, but this is a strong constraint on the target map M. However, the constraint on the maps $M_r$ that

$$M_r \otimes \mathbb{1}_{S_{Q_r}^{(1)}} (|\Psi_r\rangle\langle\Psi_r|) \geq 0,$$

respectively

$$M_r \otimes \mathbb{1}_{S_{Q_r}^{(2)}} (|\Psi_r\rangle\langle\Psi_r|) \geq 0$$

is far less restrictive while it is ensured that $M(\sigma)$ is positive semidefinite.

In one embodiment of the method according to the present invention, the first and/or second non-identity linear maps $M_{NI}^{(1)}, M_{NI}^{(2)}$ may be defined by first and second model maps parametrized by first and second sets of complex parameters $\left\{\beta_j^{(1)}\right\}_{j=1}^{J_1}, \left\{\beta_j^{(2)}\right\}_{j=1}^{J_2}$, respectively, wherein providing said first and/or second non-identity linear maps $M_{NI}^{(1)}, M_{NI}^{(2)}$ as an input to the classical computer may include providing a parametrized representation of said first and/or second model maps and initial values of said first and/or second model parameters and said calculation of said value of said estimator may comprise determining optimal values of said first and/or second sets of model parameters to thereby optimize said value of said estimator by an optimization algorithm. In one example of this embodiment, the first and/or second non-identity linear map may be compositions of $R_1$ and/or $R_2$ linear, $K_1$-local and/or $K_2$-local maps $M_r^{(1)}, M_r^{(2)}$ as defined above, $M_{NI}^{(1)} = \bigcirc_{r=1}^{R_1} M_r^{(1)}, M_{NI}^{(2)} = \bigcirc_{r=1}^{R_2} M_r^{(2)}$, and each of the K-local maps $M_r^{(1)}$ and/or $M_r^{(2)}$ may be parametrized by first and/or second sets of complex parameters $\left\{\beta_j^{(1,r)}\right\}_{j=1}^{J_{1,r}}, \left\{\beta_j^{(2,r)}\right\}_{j=1}^{J_{2,r}}$, and providing said first and/or second non-identity linear maps $M_{NI}^{(1)}, M_{NI}^{(2)}$ as an input to the classical computer may include providing a parametrized representation of said $R_1$ and/or $R_2$ linear, $K_1$-local and/or $K_2$-local maps $M_r^{(1)}, M_r^{(2)}$ and initial values of said first and/or second sets of complex parameters $\left\{\beta_j^{(1,r)}\right\}_{j=1}^{J_{1,r}}, \left\{\beta_j^{(2,r)}\right\}_{j=1}^{J_{2,r}}$, and said calculation of said value of said estimator may comprise determining optimal values of said first and/or second sets of model parameters to thereby optimize said value of said estimator by an optimization algorithm. The optimization algorithm may, e.g., be an algorithm which maximizes or minimizes tr[M($\sigma$)0] with respect to the complex parameters $\left\{\beta_j^{(1)}\right\}_{j=1}^{J_1}, \left\{\beta_j^{(2)}\right\}_{j=1}^{J_2}$. This embodiment may, e. g., be useful for noise mitigation. For example, it may be the goal to find a ground state of a Hamiltonian $O_H$. However, due to imperfections in the state preparation process, the quantum computing unit may prepare a quantum state $\sigma$ which is different from the true ground state. Then, one may use the method above to minimize tr[M($\sigma$)$O_H$]. One may further impose that the image of the density operator $\sigma$ under the target map is positive semi-definite M($\sigma$)$\geq$0 as explained above.

In one embodiment of the method according to the present invention, the first non-identity linear map $M_{NI}^{(1)}$ and/or the second non-identity linear map $M_{NI}^{(2)}$ may be a completely positive linear map, in particular a completely positive trace preserving linear map. When both, $M_{NI}^{(1)}$ and $M_{NI}^{(2)}$ are completely positive trace preserving linear maps, the target map M is a completely positive trace preserving linear map. Then, the image of the density operator $\sigma$ under the target map M is a density operator. In an example where the target operator O is hermitian, it is thus possible to calculate efficiently an estimator of the value of the expectation value of O for a quantum system in the quantum state M($\sigma$) while being only able to prepare the quantum system in the quantum state described by the density operator $\sigma$ and implementing an informationally complete POVM on said quantum state. This embodiment may, e. g., be useful for noise mitigation where the first and second non-identity linear maps may be chosen such that the density operator $M(\sigma)$, with M being the target map defined above, is close or even identical to the density operator of the desired quantum state.

In one example, the first non-identity linear map $M_{NI}^{(1)}$ may be a first unitary map $M_{U_1}$ and/or the second non-identity linear map $M_{NI}^{(2)}$ may be a second unitary map $M_{U_2}$, and preferably the first and/or second unitary map $M_{U_1}$

and/or $M_{U2}$ may be a composition of unitary maps acting on at most two qudits. The first unitary map $M_{U_1}: L(H^{(1)}) \to$

$L(H^{(1)})$ may be represented as $M_{U_1}(\rho_1) = U_1 \rho_1 U_1^\dagger$, wherein $U_1$ is a first unitary operator, and the second unitary

map $M_{U_2}: L(H^{(2)}) \to L(H^{(2)})$ may be represented as $M_{U_2}(\rho_2) = U_2 \rho_2 U_2^\dagger$, wherein $U_2$ is a second unitary operator. Thus, the action of the target map M may be represented as

$$M_{U_2 U_1}(\sigma) = (\mathbb{1}_{\bar{Q}_2} \otimes U_2)(U_1 \otimes \mathbb{1}_{\bar{Q}_1})\sigma(U_1^\dagger \otimes \mathbb{1}_{\bar{Q}_1})(\mathbb{1}_{\bar{Q}_2} \otimes U_2^\dagger).$$

The first and/or second non-identity linear maps may then be provided to the classical computer by providing a matrix representation of the first and/or second unitary operator $U_1$ and/or $U_2$.

The above embodiment may be useful for the following example: A state of interest, e.g., a ground state of a quantum system of N qudits, is prepared variationally by minimizing a cost function over the parameters of an input circuit. In general, one is trying to minimize $\langle \Psi_{\lambda_1,\dots\lambda_N}|O_H|\Psi_{\lambda_1,\dots\lambda_N}\rangle$, wherein $O_H$ is the Hamiltonian of said quantum system. In this case, the quantum computing unit may be operative to prepare a state described by a state vector $|\Psi_{\lambda_1,\dots\lambda_N}\rangle$ variationally by applying a quantum circuit comprising a sequence of quantum gates on an initial state $|\Psi_0\rangle$, $|\Psi_{\lambda_1,\dots\lambda_N}\rangle = U_{\lambda_N}\dots U_{\lambda_2}U_{\lambda_1}|\Psi_0\rangle$, with $\lambda_1, \dots\lambda_N$ being parameters and $U_{\lambda_i}$ being a unitary operator. I.e., one is trying to minimize $\mathrm{tr}[\sigma_{\lambda_1,\dots\lambda_N}O_H]$, wherein $\sigma_{\lambda 1,\dots\lambda N} = |\Psi_{\lambda_1,\dots\lambda_N}\rangle\langle\Psi_{\lambda_1,\dots\lambda_N}|$. Ways to minimize the energy by such a quantum circuit are known in the art and are disclosed e. g. in J. Tilly et al., "The Variational Quantum Eigensolver: a review of methods and best practices", arXiv 2111.05176. When the quantum state described by the density operator $\sigma_{\lambda_1,\dots\lambda_N}$ is prepared by the quantum computing unit, one may assess efficiently on a classical computer the effect of applying a specific series of

additional unitary gates $(\mathbb{1}_{\bar{Q}_2} \otimes U_2)(U_1 \otimes \mathbb{1}_{\bar{Q}_1})$ to said quantum state $\sigma_{\lambda_1,\dots\lambda_N}$ to further minimize the energy by applying the method according to the present invention. I.e., one may calculate efficiently

$\langle \Psi_{\lambda_1,\dots\lambda_N}|(\mathbb{1}_{\bar{Q}_2} \otimes U_2)(U_1 \otimes \mathbb{1}_{\bar{Q}_1})O_H(U_1^\dagger \otimes \mathbb{1}_{\bar{Q}_1})(\mathbb{1}_{\bar{Q}_2} \otimes U_2^\dagger)|\Psi_{\lambda_1,\dots\lambda_N}\rangle$ by estimating a value of $\mathrm{tr}[M_{U_2U_1}(\sigma_{\lambda_1,\dots\lambda_N})O_H]$ using the method according to the present invention wherein $M_{U_2U_1}(\sigma)$ was defined above. I.e., the quantum state described by the density operator $\sigma_{\lambda_1,\dots,\lambda_N}$ is prepared S times, and the quantum measurement defined by the informationally complete POVM is applied S times on the prepared quantum state to thereby obtain measurement

data $\{m^{(s)}\}_{s=1}^S$. Then, $\mathrm{tr}[M_{U_2U_1}(\sigma_{\lambda_1,\dots\lambda_N})O_H]$ may be calculated efficiently on a classical computer by the method according to the present invention.

In one embodiment, the first non-identity linear map $M_{NI}^{(1)}$ and/or the second non-identity linear map $M_{NI}^{(2)}$ may be the inverse of a completely positive trace preserving map. In one example the first and the second non-identity linear maps $M_{NI}^{(1)}, M_{NI}^{(2)}$ may be both an inverse of a completely positive trace preserving map, i.e., $M_{NI}^{(1)} = \mathcal{E}_1^{-1}$ and $M_{NI}^{(2)} = \mathcal{E}_2^{-1}$, wherein $\varepsilon_1$, $\varepsilon_2$ are completely positive trace preserving maps. Then, the target map M is also the inverse of a completely positive trace preserving map, $M = \varepsilon^{-1}$, wherein

$$\mathcal{E} = $$

$$(\mathcal{E}_1 \otimes \mathbb{1}_{\bar{Q}_1}) \circ (\mathbb{1}_{\bar{Q}_2} \otimes \mathcal{E}_2).$$

This embodiment may be useful for the important technical application of noise mitigation. For example, the state prepared by the quantum computing unit and described by the density operator $\sigma$ may be different from the desired state $\rho$ due to various sources of error/noise. However, there may exist first and second completely positive trace preserving maps, e.g., noise channels $\varepsilon_1$, $\varepsilon_2$, wherein $\varepsilon_1$ is defined on a first set of qudits $Q_1$ which is non-empty and a proper subset of the set Q of qudits, $\varepsilon_2$ is defined on a second set of qudits $Q_2$ which is non-empty and a proper subset of the set Q of qudits and wherein the union of the first and second sets of qudits is the set Q of qudits, $Q = Q_1 \cup Q_2$, such that an application of the map

$$\mathcal{E} = \left(\mathcal{E}_1 \otimes \mathbb{1}_{\bar{Q}_1}\right) \circ \left(\mathbb{1}_{\bar{Q}_2} \otimes \mathcal{E}_2\right)$$

to the density operator of the desired state is the density operator of the prepared quantum state, $\varepsilon(\rho) = \sigma$ or, at least, $\varepsilon(\rho)$ approximates $\sigma$ to a high accuracy. I. e., $\| \varepsilon(\rho) - \sigma \| < \varepsilon$ in some norm $\| \cdot \|$, wherein

$$\mathcal{E} = \left(\mathcal{E}_1 \otimes \mathbb{1}_{\bar{Q}_1}\right) \circ \left(\mathbb{1}_{\bar{Q}_2} \otimes \mathcal{E}_2\right).$$

Then, one may apply the method according to the present invention using the first and second non-identity linear maps $M_{NI}^{(1)} = \mathcal{E}_1^{-1}$ and $M_{NI}^{(2)} = \mathcal{E}_2^{-1}$ to calculate a value of an estimator of tr[$M(\sigma)O$] which approximates tr[$\rho O$] well. Thus, the above embodiment of the method according to the present invention may enable the evaluation of observable averages on the desired quantum state $\rho$ despite imperfections of the quantum computing unit, said imperfections including hardware and software imperfections, thereby providing a noise mitigation technique.

In one embodiment of the method according to the present invention said control means maybe operative to prepare said quantum state by initializing an initial state of said qudits and described by an initial density operator $\sigma_0$ and by applying a quantum circuit described by a quantum channel $\mathcal{F} = \bigcirc_{f=1}^{F} \mathcal{F}_f$ and comprising a sequence of F quantum gates to said initial state, each quantum gate being described by a K'-local quantum channel $\mathcal{F}_f$, preferably a K'-local unitary operation $U_f$, acting as a non-identity quantum channel on at most K' qudits, and preferably K' = 2. In one example, each quantum channel $\mathcal{F}_f$ may be the noisy version of a quantum gate described by a unitary operation $U_f$. I.e., the quantum computing unit is operative to prepare the quantum system in a quantum state $\sigma = F(\sigma_0)$ which is a noisy version of a desired quantum state $\rho = U_F \dots U_1 \sigma_0 U_1^\dagger \dots U_F^\dagger$.

Given the noise in some specific quantum computing unit it may be challenging to find first and second non-identity linear maps that map the density operator $\sigma$ of the prepared quantum state, which may be highly mixed, to the desired quantum state $\rho$ or to a state which is close to the desired quantum state p, since these states may be too different. A technique for noise tailoring known in the art is randomized compiling, see, e.g., "Noise tailoring for scalable quantum computation via randomized compiling" by J.J. Wallman and J. Emerson, Physical Review A, 94(5):052325, 2016. This technique may transform arbitrary noise in the so-called "hard gates" (e.g., CNOT-gates) into stochastic channels which is assumed to make the aggregated noise of the full quantum circuit similar to depolarizing noise (see, e. g., M. Urbanek et al. "Mitigation depolarizing noise on quantum computers with noise-estimation circuits", arXiv 2103.08591, J. Ville et al. "Leveraging Randomized Compiling for the QITE Algorithm", arXiv 2104.08785). The technique of randomized compiling is now used in an embodiment of the method of the present invention as follows:

In one embodiment of the method according to the present invention said quantum circuit may be a randomized compiling circuit described by a quantum channel $F_{RC} = \bigcirc_{f=1}^{F_{RC}} \mathcal{F}_f^{(RC)}$ and comprising quantum gates described by quantum channels $\mathcal{F}_f^{(RC)}$ obtained by applying randomized compiling to a target quantum circuit described by a quantum channel $\mathcal{F}_T = \bigcirc_{f=1}^{F_T} \mathcal{F}_f^{(T)}$ and comprising a sequence of quantum gates, each quantum gate being described by a K'-local

quantum channel $\mathcal{F}_f^{(T)}$ such that the prepared quantum state is described by the density operator $\sigma = F_{RC}(\sigma_0)$, wherein said method may further comprise:

- estimating a probabilistic error rate p for a depolarizing noise model

$$\mathcal{E}_p(\rho) = (1-p)\rho +$$

$$p\frac{\mathbb{1}}{2^N},$$

of said randomized compiling circuit described by the quantum channel $F_{RC}$,

- calculating a value of a first estimator

$$\bar{O}_1 = \frac{1}{1-p}\bar{O} - \frac{p}{2^N(1-p)}\sum_{k=1}^{N_o} c_k \mathrm{tr}\left[M(\mathbb{1})P_k^{(c)} \otimes P_k^{(2)}\right],$$

wherein $\bar{O}$ is the value of the estimator for the trace of the product of the image of the density operator $\sigma$ under the target map M, $\mathrm{tr}[M(\sigma)O]$, to thereby obtain an estimation of a value of a trace of a product of an image of a first density operator $\sigma_1$ obtained by an application of the target quantum circuit described by the quantum channel $F_T$ to the initial state described by the density operator $\sigma_0$, $\sigma_1 = F_T(\sigma_0)$ under the target map M and the target operator O, $\mathrm{tr}[M(\sigma_1)O]$. This embodiment is based on the idea that the prepared state obtained by the application of the randomized compiling circuit described by the quantum channel $F_{RC}$ and described by the density operator $\sigma = F_{RC}(\sigma_0)$ is closer to the depolarized first density operator $\varepsilon_p(\sigma_1)$ ($\sigma_1$ is the density operator of the state obtained by application of the target quantum circuit) for some value of p than the first density operator is to the density operator $\sigma$ of the prepared state. Thus, it may be possible to find first and second non-identity linear maps $M_{NI}^{(1)}$, $M_{NI}^{(2)}$ defining the target linear map $M =$

$$\left(\mathbb{1}_{\bar{Q}_2} \otimes M_{NI}^{(2)}\right) \circ \left(M_{NI}^{(1)} \otimes \mathbb{1}_{\bar{Q}_1}\right)$$

such that $M\left(\mathcal{E}_p^{-1}(\sigma)\right)$ is close or even identical to the first density operator $\sigma_1$. Then,

$$\mathrm{tr}[\sigma_1 O] = \mathrm{tr}\left[M\left(\mathcal{E}_p^{-1}(\sigma)\right)O\right] = \frac{1}{1-p}\mathrm{tr}[M(\sigma)O] - \frac{p}{2^N(1-p)}\mathrm{tr}[M(\mathbb{1})O].$$

In one embodiment of the method according to the present invention in which said control means is operative to prepare said quantum state by initializing an initial state of said qudits described by a density operator $\sigma_0$ and by applying a quantum circuit described by a quantum channel $\mathcal{F} = \bigcirc_{f=1}^{F}\mathcal{F}_f$ and comprising a sequence of F quantum gates to said initial state, each quantum gate being described by a K'-local quantum channel $\mathcal{F}_f$, each K'-local quantum channel $\mathcal{F}_f$ may be a noisy K'-local unitary operation $U_f$, the first non-identity linear map $M_{NI}^{(1)}$ may be a composition

of $R_1$ linear, $K_1$-local maps $M_r^{(1)}$, $M_{NI}^{(1)} = \bigcirc_{r=1}^{R_1} M_r^{(1)}$ and the second non-identity linear map $M_{NI}^{(2)}$ may be a composition of $R_2$ linear, $K_2$-local maps $M_r^{(2)}$, $M_{NI}^{(2)} = \bigcirc_{r=1}^{R_2} M_r^{(2)}$, $R_1 + R_2 = R$ thereby defining the target linear map M as a composition of R linear, k-local maps $M_f$ according to $M = \bigcirc_{f=1}^{R} M_f$ with $k = \max(K_1, K_2)$, said k-local maps $M_f$ being defined via a compression algorithm comprising the following steps:

A) Modelling the action of the quantum circuit by a model quantum channel $F_{model} = \varepsilon \circ F_{ideal}$ described by the composition of an ideal quantum channel $F_{ideal}$ defined by a composition of the unitary operations $U_f$ according to $\mathcal{F}_{ideal} = \bigcirc_{f=1}^{F} U_f$ and a completely positive trace preserving noise map $\mathcal{E} = \bigcirc_{f=1}^{F} \mathcal{F}_f^{noise} \circ \bigcirc_{f=1}^{F} U_{F-f+1}^{\dagger}$ wherein an f-th model noise channel $\mathcal{F}_f^{noise}$ of the noise map is a description of the noisy K'-local quantum channel $\mathcal{F}_f$ ;

B) Defining a compression map $Z = \bigcirc_{f=1}^{R} Z_f$ composed of R linear, k-local, invertible, parametrized maps $Z_f\left(\left\{z_j^{(f)}\right\}_{j=1}^{n_f}\right)$, each linear, k-local, invertible, parametrized map $Z_f$ being parametrized by a set of parameters $\left\{z_j^{(f)}\right\}_{j=1}^{n_f}$ wherein the first $R_2$ parametrized maps, $Z_1, ..., Z_{R_2}$ act as an identity map

$$\mathbb{1}_{\bar{Q}_2}$$

on the second complement set $\overline{Q}_2$, and wherein the last $R_1$ parametrized maps, $Z_{R_2+1}, ..., Z_{R_1+R_2}$ act as an identity map

$$\mathbb{1}_{\bar{Q}_1}$$

on the first complement set $\overline{Q}_1$, wherein there exist for each parametrized map $Z_f\left(\left\{z_j^{(f)}\right\}_{j=1}^{n_f}\right)$ a set of parameter values for the parameters $\left\{z_j^{(f)}\right\}_{j=1}^{n_f}$ such that the parametrized map $Z_f\left(\left\{z_j^{(f)}\right\}_{j=1}^{n_f}\right)$ is the identity map, and wherein there exist parameter values $\left\{z_j^{(f)}\right\}_{j=1}^{n_f}$ such that the first $R_2$ parametrized maps, $Z_1\left(\left\{z_j^{(1)}\right\}_{j=1}^{n_1}\right), ..., Z_{R_2}\left(\left\{z_j^{(R_2)}\right\}_{j=1}^{n_{R_2}}\right)$ act as a non-identity map on the second set of qudits $Q_2$ and the last $R_1$ parametrized maps, $Z_{R_2+1}\left(\left\{z_j^{(R_2+1)}\right\}_{j=1}^{n_{R_2+1}}\right), ..., Z_{R_1+R_2}\left(\left\{z_j^{(R_1+R_2)}\right\}_{j=1}^{n_{R_1+R_2}}\right)$ act as a non-identity map on the first set of qudits $Q_1$;

C) Choosing for each parametrized map $Z_f\left(\left\{z_j^{(f)}\right\}_{j=1}^{n_f}\right)$ initial parameter values $\left\{z_j^{(0,f)}\right\}_{j=1}^{n_f}$ for the parameters in the set $\left\{z_j^{(f)}\right\}_{j=1}^{n_f}$ such that each parametrized map $Z_f\left(\left\{z_j^{(0,f)}\right\}_{j=1}^{n_f}\right)$ is the identity map for the chosen parameter values, thereby defining an initial compression map $Z^{(0)} = \bigcirc_{f=1}^{R} Z_f\left(\left\{z_j^{(0,f)}\right\}_{j=1}^{n_f}\right)$ ;

D) Determining, in a t-th iteration of a total of F iterations of an iterative routine, $t = 1, ..., F$, new parameter values $\left\{z_j^{(t,f)}\right\}_{j=1}^{n_f}$ for the parameters $\left\{z_j^{(f)}\right\}_{j=1}^{n_f}$ of each of the parametrized maps $Z_f\left(\left\{z_j^{(f)}\right\}_{j=1}^{n_f}\right)$, such that a new compression map $Z^{(t)}$ defined as the composition of the parametrized maps $Z_f\left(\left\{z_j^{(t,f)}\right\}_{j=1}^{n_f}\right)$ for the new parameter values, $Z^{(t)} = \bigcirc_{f=1}^{R} Z_f\left(\left\{z_j^{(t,f)}\right\}_{j=1}^{n_f}\right)$, approximates a compression operator which is the composition of the t-th model noise channel $\mathcal{F}_t^{noise}$, the compression map $Z^{(t-1)}$ of the preceding (t-1)-th iteration and the adjoint of the t-th unitary operation $U_t$, $\mathcal{F}_t^{noise} \circ Z^{(t-1)} \circ U_t^{\dagger}$, to some desired accuracy, i.e., the distance between the new compression map $Z^{(t)}$ and said compression operator $\mathcal{F}_t^{noise} \circ Z^{(t-1)} \circ U_t^{\dagger}$ within a given operator norm $\|\cdot\|$ fulfills $\left\|Z^{(t)} - \mathcal{F}_t^{noise} \circ Z^{(t-1)} \circ U_t^{\dagger}\right\| < \epsilon$, wherein $\epsilon > 0$ is a positive number, preferably $\epsilon < 0.1$, more preferably $\epsilon < 0.01$, and even more preferably $\epsilon < 0.001$,

E) Defining the second non-identity linear map $M_{NI}^{(2)}$ as the inverse of the composition of the first $R_2$ parametrized maps, $Z_1\left(\left\{z_j^{(F,1)}\right\}_{j=1}^{n_1}\right), ..., Z_{R_2}\left(\left\{z_j^{(F,R_2)}\right\}_{j=1}^{n_{R_2}}\right)$ obtained in the F-th iteration, $M_{NI}^{(2)} = \left(\bigcirc_{f=1}^{R_2} Z_f\left(\left\{z_j^{(F,f)}\right\}_{j=1}^{n_f}\right)\right)^{-1}$, and defining the first non-identity linear map $M_{NI}^{(1)}$ as the inverse of the composition of the last $R_1$ parametrized maps, $Z_{R_2+1}\left(\left\{z_j^{(F,R_2+1)}\right\}_{j=1}^{n_{R_2+1}}\right), ..., Z_{R_1+R_2}\left(\left\{z_j^{(F,R_1+R_2)}\right\}_{j=1}^{n_{R_1+R_2}}\right)$ obtained in the F-th iteration, $M_{NI}^{(1)} = \left(\bigcirc_{f=R_2+1}^{R_1+R_2} Z_f\left(\left\{z_j^{(F,f)}\right\}_{j=1}^{n_f}\right)\right)^{-1}$. One may, e.g., use quantum process tomography to obtain a reasonable model of the noise channels $\mathcal{F}_f^{noise}$ being an approximation of the K'-local quantum channel $\mathcal{F}_f$. The target map M defined by the first and second non-identity linear maps constructed above approximates the inverse of the completely positive tracepreserving noise map, $\varepsilon^{-1}$. The above embodiment allows to model the noise affecting the quantum computing unit and to mitigate the noise via the method according to the present invention. The quantum channel $\mathcal{F}_f$ may be an arbitrary completely positive trace preserving map in one example. In one example, the quantum channel $\mathcal{F}_f$ may be a unitary operator.

According to a second aspect of the present invention there is provided a hybrid quantum-classical computing system comprising a quantum computing unit and a classical computer, said quantum computing unit comprising a quantum system defined by a set Q of N qudits, preferably a set Q of N qubits, and control means, said control means being operative carry out S repetitions of a quantum computing routine, each quantum computing routine comprising the preparation of a quantum state of said quantum system, said quantum state being described by a density operator $\sigma$ acting on a Hilbert space H associated with said quantum system and performing a quantum measurement defined by an informationally complete Positive Operator Valued Measure on said prepared quantum state, said informationally complete Positive Operator Valued Measure being described by an integer number $N_M$ of effects $\Pi_m$, $m = 1, ..., N_M$, the effects being preferably K-producible, $K \geq 1$, the effect $\Pi_m$ having a measurement outcome m, said quantum computing unit being further operative to output the measurement outcome $m^{(s)}$ of said quantum measurement for the s-th repetition, thereby obtaining a set of measurement data $\left\{m^{(s)}\right\}_{s=1}^{S}$ as an output,

wherein the hybrid quantum-classical computing system is further operative to provide an input to the classical computer, said input comprising:

i) the set of measurement data $\left\{m^{(s)}\right\}_{s=1}^{S}$ ;

ii) a first non-identity linear map $M_{NI}^{(1)}: L\left(H^{(1)}\right) \to L\left(H^{(1)}\right)$ ; wherein $L(H^{(1)})$ is a space of linear operators on a first Hilbert space $H^{(1)}$ associated to a first non-empty set $Q_1$ of qudits which is a proper subset of the set Q of qudits, and a second non-identity linear map $M_{NI}^{(2)}: L\left(H^{(2)}\right) \to L\left(H^{(2)}\right)$ ; wherein $L(H^{(2)})$ is a space of linear operators on a second Hilbert space $H^{(2)}$ associated to a second non-empty set $Q_2$ of qudits different from said first set $Q_1$, said second set $Q_2$ being a proper subset of the set Q of qudits, wherein a union of the first set and the second set is the set $Q = Q_1 \cup Q_2$, and an intersection of the first set and the second set $Q_1$, $Q_2$, is an intersection set, $Q_I = Q_1 \cap Q_2$, said intersection set being either a non-empty set, $Q_I \neq \{\}$, or being an empty set, $Q_I = \{\}$,

iii) an integer number $N_O$ of complex numbers $c_k$, $k = 1, ..., N_O$, representations of $N_O$ second product operators $P_k^{(2)} = \otimes_i O_i^{(k)}$ acting on the second set $Q_2$ of qudits, with $O_j^{(k)}$ being a local operator acting on the j-th qudit, and representations of $N_O$ complement product operators $P_k^{(c)} = \otimes_j O_j^{(k)}$ acting on a second complement set $\overline{Q}_2$ of qudits which is the complement of the second set $Q_2$;

iv) for each $m = 1, ..., N_M$, an integer number $N_{D_m}$ of coefficients $d_m^{(j)}$, $j = 1, ..., N_{Dm}$, representations of $N_{D_m}$ first dual operators $D_m^{(j)}$, $j = 1, ..., N_{Dm}$, acting on the first set $Q_1$ of qudits, and representations of $N_{D_m}$ complement dual operators $\widetilde{D}_m^{(j)}$, $j = 1, ..., N_{D_m}$ acting on a first complement set $\overline{Q}_1$ of qudits which is the complement of the first set $Q_1$, said coefficients $d_j^{(m)}$, first dual operators $D_m^{(j)}$ and first complement dual operators $\widetilde{D}_m^{(j)}$ being defined by a decomposition of a set of $N_M$ dual effects $D_m$ of the set of $N_M$ effects $\Pi_m$ according to

$$D_m = \sum_{j=1}^{N_{D_m}} d_j^{(m)} D_m^{(j)} \otimes \widetilde{D}_m^{(j)} ,$$

c) wherein the classical computer is further operative to calculate a value of an estimator

$$\bar{O} = \frac{1}{S}\sum_{s=1}^{S} \sum_{k=1}^{N_O} \sum_{j=1}^{N_{D}m^{(s)}} c_k d_j^{\left(m^{(s)}\right)} \omega_{m^{(s)}}^{(k,j)}, \text{ with } \omega_{m^{(s)}}^{(k,j)} = \text{tr}\left[M(D_{m^{(s)}}^{(j)} \otimes \widetilde{D}_{m^{(s)}}^{(j)}) P_k^{(c)} \otimes P_k^{(2)}\right]$$

to thereby obtain an estimation of a value of a trace of a product of the image of the density operator $\sigma$ under a target map M and a target operator O, $\text{tr}[M(\sigma)O]$, wherein

the target linear map $M: L(H) \to L(H)$ with $L(H)$ being the space of linear operators on the Hilbert space H is defined as a composition of first and second linear maps $M^{(1)}$, $M^{(2)}$:$L(H) \rightarrow L(H)$, $M = M^{(2)} \circ M^{(1)}$, wherein the first linear map $M^{(1)}$ is a tensor product of the first non-identity linear map $M_{NI}^{(1)}$ and an identity map on a space of linear operators $L(\overline{H}^{(1)})$ on a Hilbert space $\overline{H}^{(1)}$ associated to the first complement set $\overline{Q}_1$ , $M^{(1)} = M_{NI}^{(1)} \otimes$

$$\mathbb{1}_{\overline{Q}_1},$$

and the second linear map $M^{(2)}$ is a tensor product of the second non-identity linear map $M_{NI}^{(2)}$ and an identity map on a space of linear operators $L(H^{(2)})$ on a Hilbert space $\overline{H}^{(2)}$ associated to the second complement set $\overline{Q}_2$,

$$M^{(2)} = \mathbb{1}_{\overline{Q}_2} \otimes M_{NI}^{(2)},$$

the target operator O is defined by the complex numbers $c_k$, the second product operators $P_k^{(2)}$ and the complement product operators $P_k^{(c)}$ according to $0 = \sum_{k=1}^{N_O} c_k P_k^{(c)} \otimes P_k^{(2)}$ , and

wherein the calculation of $\omega_{m^{(s)}}^{(k,j)}$ includes calculating a partial trace over the second complement set $\overline{Q}_2$ of a product of an image $M_{NI}^{(1)}(D_{m^{(s)}}^{(j)})$ of the representation of the first dual operator $D_{m^{(s)}}^{(j)}$ under the first non-identity linear map $M_{NI}^{(1)}$ and a tensor product of the complement product operator $P_k^{(c)}$ and an identity map

$$\mathbb{1}_{Q_I}$$

on the intersection Hilbert space $H_I$ associated to the intersection set $Q_I$,

$$\mathrm{tr}_{\overline{Q}_2}\left[ M_{NI}^{(1)}\left( D_{m^{(s)}}^{(j)} \right) P_k^{(c)} \otimes \mathbb{1}_{Q_I} \right]$$

and/or calculating a partial trace over the first complement set $\overline{Q}_1$ of a product of an image $M_{NI}^{(2)\dagger}(P_k^{(2)})$ of the representation of the second product operator $P_k^{(2)}$ under the adjoint of the second non-identity linear map $M_{NI}^{(2)\dagger}$ and a tensor product of an identity map

$$\mathbb{1}_{Q_I}$$

on the intersection Hilbert space $H_I$ and the first complement operator $\widetilde{D}_{m^{(s)}}^{(j)}$ ,

$$\mathrm{tr}_{\overline{Q}_1}\left[ M_{NI}^{(2)\dagger}(P_k^{(2)})\mathbb{1}_{Q_I} \otimes \widetilde{D}_{m^{(s)}}^{(j)} \right].$$

The hybrid quantum-classical computing system is configured to carry out the method according to the first aspect of the present invention. Everything that was said above with respect to the method according to the first aspect of the present invention also applies to the system according to the second aspect of the present invention.

According to a third aspect of the present invention, there is provided a computer program for execution by a classical computer of a hybrid quantum-classical computing system, the hybrid quantum-classical computing system comprising a quantum computing unit and the classical computer, said quantum computing unit comprising a quantum system defined by a set Q of N qudits, preferably a set Q of N qubits, and control means, said control means being operative to carry out S repetitions of a quantum computing routine, each quantum computing routine comprising the preparation of a quantum state of said quantum system, said quantum state being described by a density operator $\sigma$ acting on a Hilbert space H associated with said quantum system and performing a quantum measurement defined by an informationally complete Positive Operator Valued Measure on said prepared quantum state, said informationally complete Positive Operator Valued Measure being described by an integer number $N_M$ of effects $\Pi_m$, $m = 1, ..., N_M$, the effects being preferably K-producible, $K \geq 1$, the effect $\Pi_m$ having a measurement outcome m, said quantum computing unit being further operative to output the measurement outcome $m^{(s)}$ of said quantum measurement for the s-th repetition, thereby obtaining a set of measurement data $\left\{m^{(s)}\right\}_{s=1}^{S}$ as an output, the computer program comprising instructions which, when the program is executed by the classical computer, cause the classical computer to carry out the following steps:

a) receiving an input, the input comprising:

i) the set of measurement data $\left\{m^{(s)}\right\}_{s=1}^{S}$ ;

ii) a first non-identity linear map $M_{NI}^{(1)} : L\left(H^{(1)}\right) \rightarrow L\left(H^{(1)}\right)$ , wherein $L(H^{(1)})$ is a space of linear operators on a first Hilbert space $H^{(1)}$ associated to a first non-empty set $Q_1$ of qudits which is a proper subset of the set Q of qudits, and a second non-identity linear map $M_{NI}^{(2)} : L\left(H^{(2)}\right) \rightarrow L\left(H^{(2)}\right)$ ; wherein $L(H^{(2)})$ is a space of linear operators on a second Hilbert space $H^{(2)}$ associated to a second non-empty set $Q_2$ of qudits different from said first set $Q_1$, said second set $Q_2$ being a proper subset of the set Q of qudits, wherein a union of the first set and the second set is the set $Q = Q_1 \cup Q_2$, and an intersection of the first set and the second set $Q_1$, $Q_2$, is an intersection set, $Q_I = Q_1 \cap Q_2$, said intersection set being either a non-empty set, $Q_I \neq \{\}$, or being an empty set, $Q_I = \{\}$,

iii) an integer number $N_O$ of complex numbers $c_k$, $k = 1,..., N_O$, representations of $N_O$ second product operators $P_k^{(2)} = \otimes_i O_i^{(k)}$ acting on the second set $Q_2$ of qudits, with $O_j^{(k)}$ being a local operator acting on the j-th qudit, and representations of $N_O$ complement product operators $P_k^{(c)} = \otimes_j O_j^{(k)}$ acting on a second complement set $\overline{Q}_2$ of qudits which is the complement of the second set $\overline{Q}_2$;

iv) for each $m = 1, ..., N_M$, an integer number $N_{D_m}$ of coefficients $d_m^{(j)}, j = 1, ..., N_{D_m}$ , representations of $N_{D_m}$ first dual operators $D_m^{(j)}$ ,j = 1, ..., $N_{Dm}$, acting on the first set $Q_1$ of qudits, and representations of $N_{D_m}$ complement dual operators $\widetilde{D}_m^{(j)}$ , j = 1, ..., $N_{Dm}$, acting on a first complement set $\overline{Q}_1$ of qudits which is the complement of the first set $Q_1$, said coefficients $d_j^{(m)}$ , first dual operators $D_m^{(j)}$ and first complement dual operators $\widetilde{D}_m^{(j)}$ being defined by a decomposition of a set of $N_M$ dual effects $D_m$ of the set of $N_M$ effects $\Pi_m$ according to $D_m = \sum_{j=1}^{N_{D_m}} d_j^{(m)} D_m^{(j)} \otimes \widetilde{D}_m^{(j)}$ ,

b) calculating a value of an estimator

$$\bar{O} = \frac{1}{S}\sum_{s=1}^{S}\sum_{k=1}^{N_O}\sum_{j=1}^{N_{D_{m^{(s)}}}} c_k d_j^{(m^{(s)})} \omega_{m^{(s)}}^{(k,j)}, \text{ with } \omega_{m^{(s)}}^{(k,j)} = \text{tr}\left[M(D_{m^{(s)}}^{(j)} \otimes \widetilde{D}_{m^{(s)}}^{(j)})P_k^{(c)} \otimes P_k^{(2)}\right]$$

to thereby obtain an estimation of a value of a trace of a product of the image of the density operator $\sigma$ under a target map M and a target operator O, tr[$M(\sigma)O$], wherein

the target linear map $M: L(H) \rightarrow L(H)$ with L(H) being the space of linear operators on the Hilbert space H is defined as a composition of first and second linear maps $M^{(1)}$, $M^{(2)}:L(H) \rightarrow L(H)$, $M = M^{(2)} \circ M^{(1)}$, wherein the

first linear map $M^{(1)}$ is a tensor product of the first non-identity linear map $M_{NI}^{(1)}$ and an identity map on a space of linear operators $L(\overline{H}^{(1)})$ on a Hilbert space $\overline{H}^{(1)}$ associated to the first complement set $\overline{Q}_1$, $M^{(1)} = M_{NI}^{(1)} \otimes$

$$\mathbb{1}_{\overline{Q}_1},$$

and the second linear map $M^{(2)}$ is a tensor product of the second non-identity linear map $M_{NI}^{(2)}$ and an identity map on a space of linear operators $L(\overline{H}^{(2)})$ on a Hilbert space $\overline{H}^{(2)}$ associated to the second complement set $\overline{Q}_2$,

$$M^{(2)} = \mathbb{1}_{\overline{Q}_2} \otimes M_{NI}^{(2)},$$

the target operator O is defined by the complex numbers $c_k$, the second product operators $P_k^{(2)}$ and the

complement product operators $P_k^{(c)}$ according to $O = \sum_{k=1}^{N_O} c_k P_k^{(c)} \otimes P_k^{(2)}$, and

wherein the calculation of $\omega_{m^{(s)}}^{(k,j)}$ includes calculating a partial trace over the second complement set $\overline{Q}_2$ of a

product of an image $M_{NI}^{(1)}(D_{m^{(s)}}^{(j)})$ of the representation of the first dual operator $D_{m^{(s)}}^{(j)}$ under the first non-identity linear map $M_{NI}^{(1)}$ and a tensor product of the complement product operator $P_k^{(c)}$ and an identity map

$$\mathbb{1}_{Q_I}$$

on the intersection Hilbert space $H_I$ associated to the intersection set $Q_I$,

$$\text{tr}_{\overline{Q}_2}\left[M_{NI}^{(1)}\left(D_{m^{(s)}}^{(j)}\right)P_k^{(c)} \otimes \mathbb{1}_{Q_I}\right]$$

and/or calculating a partial trace over the first complement set $\overline{Q}_1$ of a product of an image $M_{NI}^{(2)\dagger}(P_k^{(2)})$ of

the representation of the second product operator $P_k^{(2)}$ under the adjoint of the second non-identity linear map

$M_{NI}^{(2)\dagger}$ and a tensor product of an identity map

$$\mathbb{1}_{Q_I}$$

on the intersection Hilbert space $H_I$ and the first complement operator

$$\mathrm{tr}_{\bar{Q}_1}\left[ M_{NI}^{(2)\dagger}(P_k^{(2)})\mathbb{1}_{Q_I} \otimes \tilde{D}_{m^{(s)}}^{(J)}\right].$$

The computer program according to the third aspect of the present invention may be used for the hybrid-classical computing system of the second aspect of the present invention and may be used for carrying out the method according to the first aspect of the present invention.

In the following description, the invention will be specified in greater detail by way of examples, with reference to the drawings. In the drawings,

Fig. 1 is a schematic representation of an embodiment of the hybrid quantum-classical computing system according to the second aspect of the present invention and used for the method according to the present invention;

Fig. 2a, 2b, 2c are schematic representations for explaining the calculation of the value of the estimation according to the method of the present invention;

Fig. 3a, 3b are schematic representations for explaining the calculation of the value of the estimation according to Example 1,

Fig. 4 is a schematic representation of a generalization of Example 1,

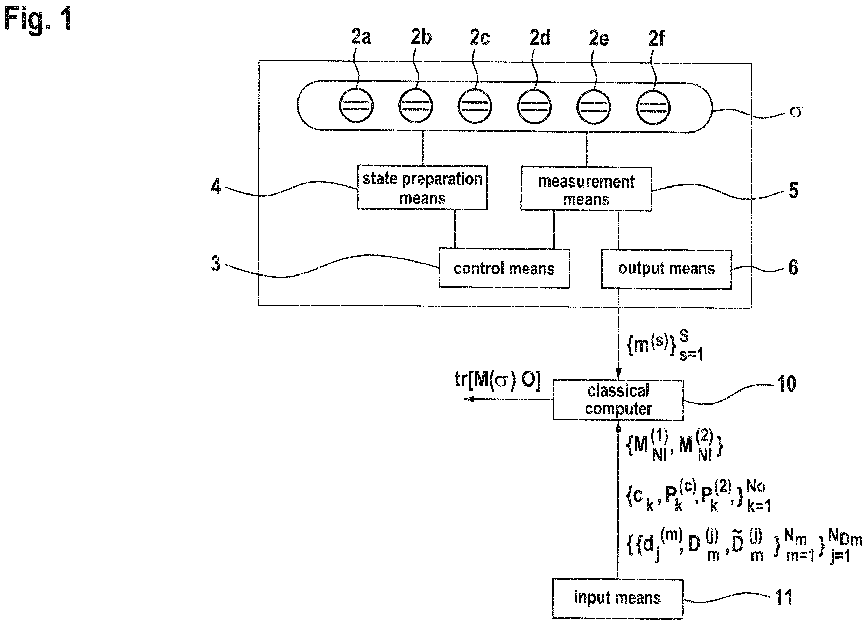

Fig. 1 depicts a schematic representation of an embodiment of the hybrid quantum-classical computing system 1 according to the second aspect of the present invention and used for the method according to the first aspect of the present invention. The hybrid quantum-classical computing system 100 comprises a quantum computing unit 1 and a classical computer 10.

The quantum-computing unit 1 of the embodiment shown in Fig. 1 comprises a quantum system defined by a set of N=6 qubits, i.e., six quantum mechanical two-level systems 2a, 2b, 2c, 2d, 2e, 2f. The quantum-computing unit 1 further comprises control means 3. The control means 3 comprises state preparation means 4 and a controller which is operative to control the state preparation means 4. Said state preparation means 4 are operative to prepare said quantum system in a quantum state described by a density operator $\sigma$ by control of said controller. Furthermore, the control means 3 comprises measurement means 5 and the controller is operative to control the measurement means 4. Said measurement means 4 is operative to perform a quantum measurement defined by an informationally complete Positive Operator Values Measure (POVM) on said quantum system by control of said controller. The informationally complete quantum measurement is described by an integer number $N_M$ of effects $\Pi_m$, m = 1, ..., $N_M$, the effect $\Pi_m$ having a measurement outcome m. For the example, we assume that the informationally complete POVM is 1-producible. In particular, we assume that the informationally complete Positive Operator Valued Measure comprises for each qubit $q_j$, j = 1, ..., 6, $M_j$ local effects $\Pi_{m_j}^{(J)}$, $m_j$ = 1, ...,$M_j$ constituting a local informationally complete Positive Operator Valued Measure for said qubit, the effect $\Pi_{m_j}^{(J)}$ having a measurement outcome $m_j$. I.e., the POVM is defined by the effects

$$\Pi_m = \otimes_{j=1}^6 \Pi_{m_j}^{(J)}.$$

Then, the result of a measurement s is a tuple $m^{(s)} = (m_1^{(s)}, ..., m_Q^{(s)})$, wherein $m_j^{(s)}$ is the measurement outcome for the qubit $q_j$.

When the control means is operated S times, the state described by the density operator σ is prepared for each operation and the quantum measurement described by the POVM defined above is carried out for each operation. This results in a set of measurement data $\left\{m^{(s)}\right\}_{s=1}^{S}$. The set of measurement data may be output by output means 6 and is provided as an input to the classical computer 10.

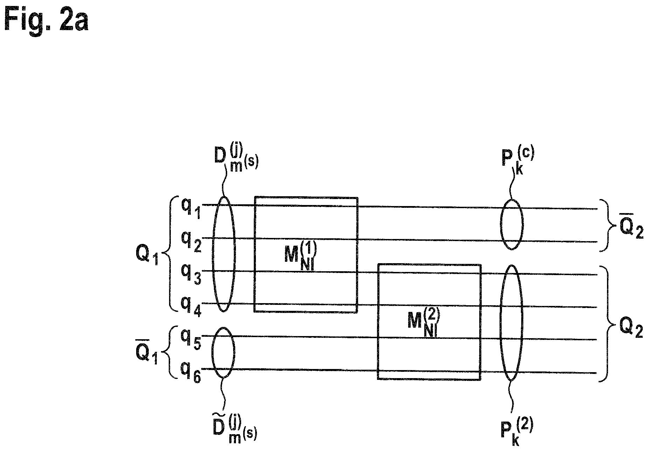

The classical computer may comprise input means 11 to provide the following input to the classical computer 10 (in one embodiment, the input means 11 may further be adapted to provide the set of measurement data $\left\{m^{(s)}\right\}_{s=1}^{S}$ as an input to the classical computer 10), which will be explained with reference to the example shown in Fig. 2a (though, the invention is not limited to the example shown in Fig. 2a):

a first non-identity linear map $M_{NI}^{(1)}: L\left(H^{(1)}\right) \to L\left(H^{(1)}\right)$, wherein $L(H^{(1)})$ is a space of linear operators on a first Hilbert space $H^{(1)}$ associated to a first non-empty set $Q_1$ of qubits which is a proper subset of the set Q of qubits, and a second non-identity linear map $M_{NI}^{(2)}: L\left(H^{(2)}\right) \to L\left(H^{(2)}\right)$, wherein $L(H^{(2)})$ is a space of linear operators on a second Hilbert space $\overline{H}^{(2)}$ associated to a second non-empty set $Q_2$ of qubits different from said first set $Q_1$, said second set $Q_2$ being a proper subset of the set Q of qubits, wherein a union of the first set and the second set is the set $Q = Q_1 \cup Q_2$, and an intersection of the first set and the second set $Q_1, Q_2$, is an intersection set, $Q_I = Q_1 \cap Q_2$, said intersection set being either a non-empty set, $Q_I \neq \{\}$, or being an empty set, $Q_I = \{\}$.

In the example shown in Fig. 2a, the first non-identity linear map $M_{NI}^{(1)}$ is defined on the first Hilbert space $H^{(1)}$ associated to the first non-empty set $Q_1 = \{q_1, q_2, q_3, q_4\}$. The second non-identity linear map $M_{NI}^{(2)}$ is defined on the second Hilbert space $H^{(2)}$ associated to the second non-empty set $Q_2 = \{q_3, q_4, q_5, q_6\}$. The union of the first set and the second set is the set Q of qubits. The intersection of the first set $Q_1$ and the second set $Q_2$ is a non-empty intersection set $Q_I = Q_1 \cap Q_2 = \{q_3, q_4\}$.

The first and/or second non-identity linear maps may be provided to the classical computer, e.g., in the form of two matrices V$_1$, V$_2$ defined via $\left(M_{NI}^{(1)}(\rho_1)\right)_{ij} = \sum_{kl}(V_1)_{ijkl}(\rho_1)_{kl}$, and/or $\left(M_{NI}^{(2)}(\rho_2)\right)_{ij} = \sum_{kl}(V_2)_{ijkl}(\rho_2)_{kl}$, wherein $\rho_1, \rho_2$ are a matrix representation of a linear operator defined on $L(H^{(1)})$, $L(H^{(2)})$, respectively, and $(V_1)_{(ij)(kl)}$, $(V_2)_{(ij)(kl)}$ are matrix elements of the matrices V$_1$, V$_2$. For the example shown in Fig. 2a, the matrices V$_1$ and V$_2$ are 256x256 matrices. Said matrices are provided to the classical computer. When the first and/or second non-identity linear map are completely positive trace preserving maps they may be provided to the classical computer by providing a matrix representation of the Kraus operators $A_k$, $B_l$ of their operator sum representation

$$M_{NI}^{(1)}(\rho_1) = \sum_k A_k \rho_1 A_k^{\dagger}, \quad \sum_k A_k^{\dagger} A_k = \mathbb{1}, \quad M_{NI}^{(2)}(\rho_2) = \sum_l B_l \rho_2 B_l^{\dagger}, \quad \sum_l B_l^{\dagger} B_l = \mathbb{1}$$

to the classical computer. For the example shown in Fig. 2a, the matrices $A_k, B_l$ are 16x16 matrices. In an embodiment, where the first and/or second non-identity linear maps $M_{NI}^{(1)}$ and/or $M_{NI}^{(2)}$ are a composition of K-local maps, these K-local maps may be provided to the classical computer, e.g., as matrix representations or via their operator sum representation. A concrete example for such a case will be provided below.

The first and second non-identity linear map define a target linear map $M: L(H) \to L(H)$ with L(H) being the space of linear operators on the Hilbert space H as a composition of first and second linear maps $M^{(1)}, M^{(2)}: L(H) \to L(H)$, $M = M^{(2)} \circ M^{(1)}$. The first linear map $M^{(1)}$ is a tensor product of the first non-identity linear map $M_{NI}^{(1)}$ and an identity map on a space of linear operators $L(\overline{H}^{(1)})$ on a Hilbert space $\overline{H}^{(1)}$ associated to the first complement set $\overline{Q}_1$,

$$M^{(1)} = M^{(1)}_{NI} \otimes \mathbb{1}_{\bar{Q}_1},$$

and the second linear map $M^{(2)}$ is a tensor product of the second non-identity linear map $M^{(2)}_{NI}$ and an identity map on a space of linear operators $L(\bar{H}^{(2)})$ on a Hilbert space $\bar{H}^{(2)}$ associated to the second complement set $\bar{Q}_2$,

$$M^{(2)} = \mathbb{1}_{\bar{Q}_2} \otimes M^{(2)}_{NI}.$$

Furthermore, an integer number $N_0$ of complex numbers $c_k, k = 1, ..., N_0$, representations of $N_0$ second product operators $P^{(2)}_k = \otimes_i O^{(i)}_{k_i}$ acting on the second set $Q_2$ of qubits, with $O^{(j)}_{k_j}$ being a local operator acting on the j-th qubit, and representations of $N_0$ complement product operators $P^{(c)}_k = \otimes_j O^{(j)}_{k_j}$ acting on a second complement set $\bar{Q}_2$ of qubits which is the complement of the second set $Q_2$ is provided to the classical computer. The complex numbers $c_k$, the second product operators $P^{(2)}_k$ and the complement product operators $P^{(c)}_k$ define a target operator O according to $O = \sum_{k=1}^{N_0} c_k P^{(c)}_k \otimes P^{(2)}_k$. Conversely, if one is interested in an expectation value of a predefined target operator O, one may find a decomposition according to $O = \sum_{k=1}^{N_0} c_k P^{(c)}_k \otimes P^{(2)}_k$ and provide the complex numbers $c_k$, the second product operators $P^{(2)}_k$ and the complement product operators $P^{(c)}_k$ to the classical computer. In the case of qubits, the local operators $O^{(j)}_{k_j}$ may be the Pauli operators. For any local operator O (i.e., an operator acting on a small number of qubits only, e.g., only on one or two qubits) the decomposition according $O = \sum_{k=1}^{N_0} c_k P^{(c)}_k \otimes P^{(2)}_k$ may be easily determined.

As an example, consider the Hamilton operator $O = \sum_{i=1}^{5} g_i \sigma^x_i \otimes \sigma^x_{i+1}$, wherein $\sigma^x_i$ is a matrix representation of the Pauli x-matrix acting on the qubit $q_i$, and $g_i$ is the corresponding coupling strength. Then, the following input may be provided to the classical computer

$$c_1 = g_1, \quad P^{(c)}_1 = \sigma^x \otimes \sigma^x, \quad P^{(2)}_1 = \mathbb{1}_{16}$$

$$c_2 = g_2, \quad P^{(c)}_2 = \mathbb{1}_2 \otimes \sigma^x, \quad P^{(2)}_2 = \sigma^x \otimes \mathbb{1}_8$$

$$c_3 = g_3, \quad P^{(c)}_3 = \mathbb{1}_4, \quad P^{(2)}_3 = \sigma^x \otimes \sigma^x \otimes \mathbb{1}_4$$

$$c_4 = g_4, \quad P^{(c)}_4 = \mathbb{1}_4, \quad P^{(2)}_4 = \mathbb{1}_2 \otimes \sigma^x \otimes \sigma^x \otimes \mathbb{1}_2$$

$$c_5 = g_5, \quad P_5^{(c)} = \mathbb{1}_4, \quad P_5^{(2)} = \mathbb{1}_4 \otimes \sigma^x \otimes \sigma^x,$$

wherein

$$\mathbb{1}_n$$

is an n x n identity matrix. In one example, the operators $P_k^{(c)}$ and $P_k^{(2)}$ may be provided to the classical computer by inputting the label of the qubit on which a Pauli x-operator is acting.

Furthermore, for each m = 1, ..., $N_M$, an integer number $N_{D_m}$ of coefficients $d_j^{(m)}, j = 1, ..., N_{D_m}$, representations of $N_{D_m}$ first dual operators $D_m^{(j)}, j = 1, ..., N_{D_m}$, acting on the first set $Q_1$ of qudits, and representations of $N_{D_m}$ complement dual operators $\widetilde{D}_m^{(j)}, j = 1, ..., N_{D_m}$, acting on a first complement set $\overline{Q}_1$, of qudits which is the complement of the first set $Q_1$, are provided as an input to the classical computer. The first dual operators $D_m^{(j)}$ and first complement dual operators $\widetilde{D}_m^{(j)}$ are defined by a decomposition of a set of $N_M$ dual effects $D_m$ of the set of $N_M$ effects $\Pi_m$ according to $D_m = \sum_{j=1}^{N_{D_m}} d_j^{(m)} D_m^{(j)} \otimes \widetilde{D}_m^{(j)}$. In the above example where the POVM is given by product operators of the form $\Pi_m = \otimes_{j=1}^{6} \Pi_{m_j}^{(j)}$, there exist dual effects of the form $D_m = \otimes_{i=1}^{6} D_{m_i}^{(loc,i)}$ $D_m$ wherein the local operator $D_{m_i}^{(loc,i)}$ is acting on the qubit $q_i$ and is the dual of the POVM effect $\Pi_{m_i}^{(i)}$. Then, $D_m = D_m^{(1)} \otimes \widetilde{D}_m^{(1)}$. For the example shown in Fig. 2a, $D_m^{(1)} = \otimes_{i=1}^{4} D_{m_i}^{(loc,i)}$ and $\widetilde{D}_m^{(1)} = \otimes_{i=5}^{6} D_{m_i}^{(loc,i)}$ .I.e., $N_{D_m}$ = 1 for all m, and $d_j^{(m)} = 1$ for all m. The dual effects may be calculated by the method presented in the general part of the description above. A matrix representation of the first dual operators $D_m^{(1)}$ and the first complement dual operators $\widetilde{D}_m^{(1)}$ may be provided as an input to the classical computer 10.

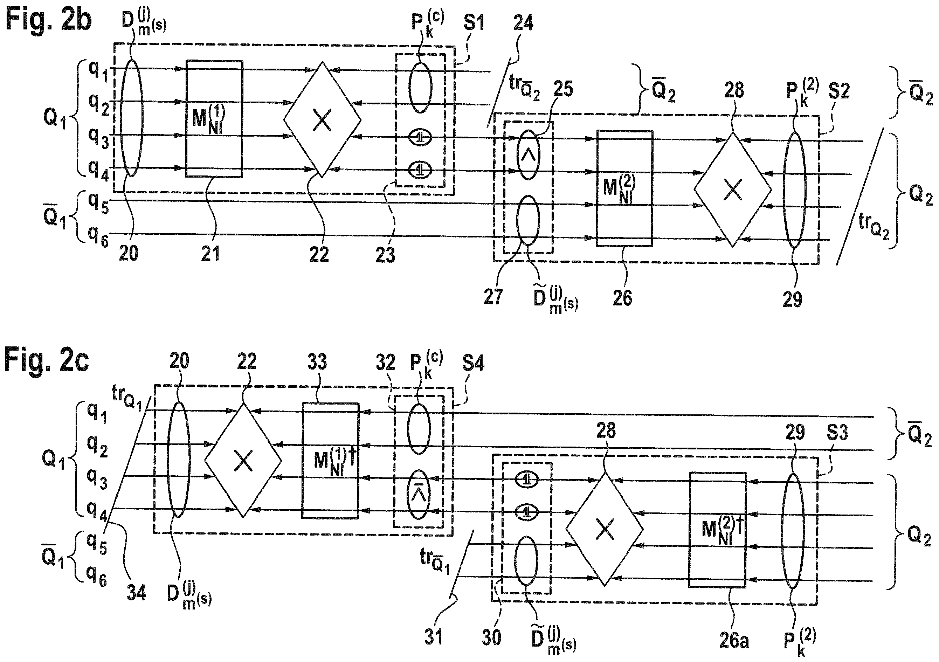

The calculation of a value of the estimator $\bar{O} = \frac{1}{S} \sum_{s=1}^{S} \sum_{k=1}^{N_O} \sum_{j=1}^{N_{D_{m^{(s)}}}} c_k d_j^{(m)} \omega_{m^{(s)}}^{(k,j)}$ with $\omega_{m^{(s)}}^{(k,j)} = \mathrm{tr}\left[ M(D_{m^{(s)}}^{(j)} \otimes \widetilde{D}_{m^{(s)}}^{(j)}) P_k^{(c)} \otimes P_k^{(2)} \right]$ according to the method of the present invention is explained in detail for the example shown in Fig. 2a with reference to Fig. 2b and Fig. 2c.

A schematic representation illustrating a first alternative for calculating the coefficient $\omega_{m^{(s)}}^{(k,j)}$ of the estimator $\bar{O}$ according to the method of the present invention is shown in Fig. 2b. In a first step S1, the first non-identity linear map $M_{NI}^{(1)}$ (reference sign 21) is applied to the first dual operator $D_{m^{(s)}}^{(j)}$ (reference sign 20), wherein $m^{(s)}$ is the measurement outcome for the s-th operation of the control means 3. The image $M_{NI}^{(1)}(D_{m^{(s)}}^{(J)})$ is then multiplied (reference sign 22) with the tensor product of the complement product operator $P_k^{(c)}$ and the identity on the Hilbert space associated to the qubits $q_3$ and $q_4$, which is the Hilbert space associated to the intersection space $Q_I$, and the Hilbert space associated to the complement of $Q_2$, i.e., the Hilbert space associated to the qubits $q_1$ and $q_2$ is traced out (reference sign 24). In this way, an operator

$$\Lambda \equiv \Lambda_{m^{(s)}}^{(j,k)} =$$

$$\operatorname{tr}_{\bar{Q}_2}\left[ M_{NI}^{(1)}\left( D_{m^{(s)}}^{(J)} \right) P_k^{(c)} \otimes \mathbb{1}_{Q_I} \right] \quad,$$

(see reference sign 25) is calculated. Then, in a second step S2, the second non-identity linear map $M_{NI}^{(2)}$ (reference sign 26) is applied to the tensor product of the operator $\Lambda_{m^{(s)}}^{(j,k)}$ (reference sign 25) and the first complement dual operator $\widetilde{D}_{m^{(s)}}^{(J)}$ (reference sign 27). The image $M_{NI}^{(2)}\left( \Lambda_{m^{(s)}}^{(j,k)} \otimes \widetilde{D}_{m^{(s)}}^{(J)} \right)$ is the multiplied (reference sign 28) with the second product operator $P_k^{(2)}$ (reference 29) and the trace over the Hilbert space associated to the remaining set of qubits, i.e., the second set $Q_2$, is taken. I.e., $\omega_{m^{(s)}}^{(k,j)} = \operatorname{tr}_{Q_2}\left[ M_{NI}^{(2)}\left( \Lambda_{m^{(s)}}^{(j,k)} \otimes \widetilde{D}_{m^{(s)}}^{(J)} \right) P_k^{(2)} \right]$ is calculated. Alternatively, one may calculate $\omega_{m^{(s)}}^{(k,j)} = \operatorname{tr}_{Q_2}\left[ M_{NI}^{(2)\dagger}(P_k^{(2)})\Lambda_{m^{(s)}}^{(j,k)} \otimes \widetilde{D}_{m^{(s)}}^{(J)} \right]$ .

A schematic representation illustrating a second alternative for calculating the coefficient $\omega_{m^{(s)}}^{(k,j)}$ of the estimator $\overline{O}$ according to the method of the present invention is shown in Fig. 2c. In a first step S3, the adjoint of the second non-identity linear map $M_{NI}^{(2)\dagger}$ (reference sign 26a) is applied to the second product operator $P_k^{(2)}$ (reference sign 29). The image $M_{NI}^{(2)\dagger}(P_k^{(2)})$ is multiplied (reference sign 28) with a tensor product of an identity map

$$\mathbb{1}_{Q_I}$$

on the intersection Hilbert space $H_I$ and the first complement dual operator $\widetilde{D}_{m^{(s)}}^{(J)}$ (reference sign 30). Then, the Hilbert space associated to the first complement set $\overline{Q}_1 = \{q_5, q_6\}$ is traced out (reference sign 31). I.e., an operator

$$\bar{\Lambda} = \bar{\Lambda}_{m^{(s)}}^{(j,k)} =$$

$$\operatorname{tr}_{\bar{Q}_1}\left[ M_{NI}^{(2)\dagger}(P_k^{(2)})\mathbb{1}_{Q_I} \otimes \widetilde{D}_{m^{(s)}}^{(J)} \right]$$

is calculated. Then, in a second step S4, the adjoint of the first non-identity linear map $M_{NI}^{(1)\dagger}$ (reference sign 33) is applied to the tensor product of the complement product operator $P_k^{(c)}$ and the operator $\bar{\Lambda}_{m^{(s)}}^{(j,k)}$ (reference sign 32), and the image $M_{NI}^{(1)\dagger}\left(P_k^{(c)}\otimes\bar{\Lambda}_{m^{(s)}}^{(j,k)}\right)$ is multiplied (reference sign 22) with the first dual operator $D_{m^{(s)}}^{(j)}$ (reference sign 20), and the trace over the Hilbert space associated to the remaining set of qubits, i.e., the second set $Q_1$, is calculated (reference sign 34). I.e., $\omega_{m^{(s)}}^{(k,j)} = \mathrm{tr}_{Q_1}\left[M_{NI}^{(1)\dagger}\left(P_k^{(c)}\otimes\bar{\Lambda}_{m^{(s)}}^{(j,k)}\right)D_{m^{(s)}}^{(j)}\right]$ is calculated. Alternatively, one may calculate $\omega_{m^{(s)}}^{(k,j)} = \mathrm{tr}_{Q_1}\left[M_{NI}^{(1)}\left(D_{m^{(s)}}^{(j)}\right)P_k^{(c)}\otimes\bar{\Lambda}_{m^{(s)}}^{(j,k)}\right]$.

The first and second non-identity linear maps of the example shown in Figs. 2a - 2c do not have any particular structure or properties, apart from being linear and different from the identity map. In the following, particular examples of first and second non-identity linear maps will be presented.

Example 1:

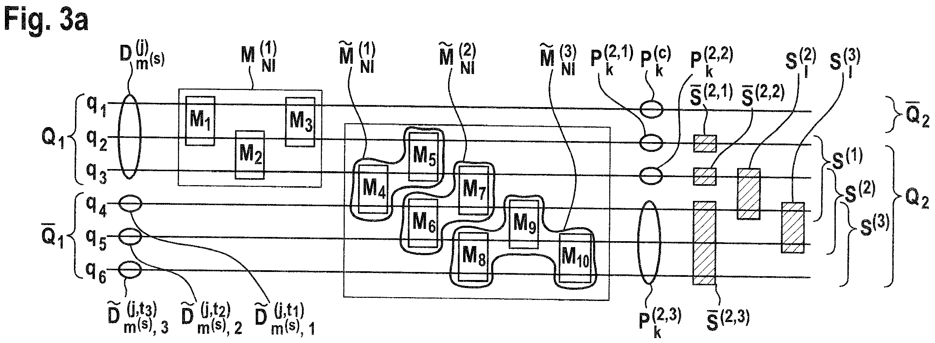

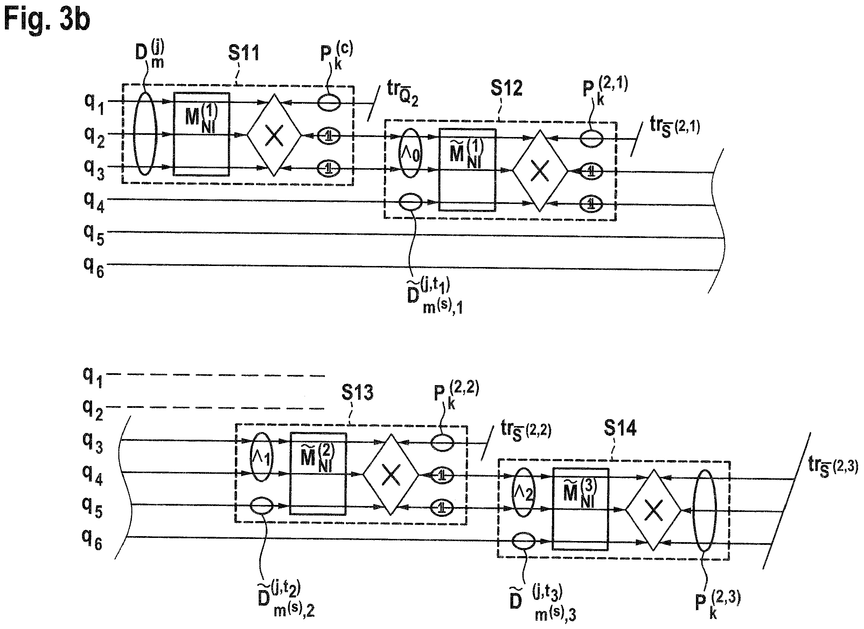

Example 1 will be explained with reference to Fig. 3a and Fig 3b. As one may take from Fig. 3a, in example 1 the first and second non-identity linear maps $M_{NI}^{(1)}, M_{NI}^{(2)}$ are compositions of 2-local maps $M_n, n = 1, ...,10$, i.e., of maps that act on at most two qubits. Namely,

$$M_{NI}^{(1)} = \left(M_3\otimes\mathbb{1}_{q_3}\right)\circ\left(\mathbb{1}_{q_1}\otimes M_2\right)\circ\left(M_1\otimes\mathbb{1}_{q_3}\right)$$

and

$$M_{NI}^{(2)} = \left(\mathbb{1}_{q_2,q_3,q_4}\otimes M_{10}\right)\circ$$

$$\left(\mathbb{1}_{q_2,q_3}\otimes M_9\otimes\mathbb{1}_{q_6}\right)\circ\left(\mathbb{1}_{q_2,q_3,q_4}\otimes M_8\right)\circ\left(\mathbb{1}_{q_2}\otimes M_7\otimes\mathbb{1}_{q_5,q_6}\right)\circ\left(\mathbb{1}_{q_2,q_3}\otimes M_6\otimes\mathbb{1}_{q_6}\right)\circ$$

$$\left(M_5\otimes\mathbb{1}_{q_4,q_5,q_6}\right)\circ\left(\mathbb{1}_{q_2}\otimes M_4\otimes\mathbb{1}_{q_5,q_6}\right).$$

The second non-identity linear map $M_{NI}^{(2)}$ may be provided to the classical computer by providing three linear non-identity subspace maps

$$\widetilde{M}_{NI}^{(1)}=\left(M_5\otimes\mathbb{1}_{q_4}\right)\circ\left(\mathbb{1}_{q_2}\otimes M_4\right),$$

$$\widetilde{M}_{NI}^{(2)} = \left(M_7\otimes\mathbb{1}_{q_5,q_6}\right)\circ\left(\mathbb{1}_{q_3}\otimes M_6\right)$$

and

$$\widetilde{M}_{NI}^{(3)}=\left(\mathbb{1}_{q_4}\otimes M_{10}\right)\circ\left(M_9\otimes\mathbb{1}_{q_6}\right)\circ\left(\mathbb{1}_{q_4}\otimes M_8\right)$$

to the classical computer. In one example, the linear non-identity subspace maps may be provided to the classical computer by providing the linear maps $M_n$ and the information on which two qubits they act.

The r-th linear non-identity subspace map $\widetilde{M}_{NI}^{(r)}:L(H_r)\rightarrow L(H_r)$ is defined on a space of linear operators on a Hilbert space $H_r$ associated to an r-th subset $S^{(r)}$ of qudits which is a proper subset of the second set of qudits, $Q_2$.

In Example 1, the first linear non-identity subspace map $\widetilde{M}_{NI}^{(1)}$ is defined on the Hilbert space $H_1$ associated to a first

subset $S^{(1)} = \{q_2, q_3, q_4\}$, the second linear non-identity subspace map $\widetilde{M}_{NI}^{(2)}$ is defined on the Hilbert space $H_2$ associated

to a second subset $S^{(2)} = \{q_3,q_4,q_5\}$, and the third linear non-identity subspace map $\widetilde{M}_{NI}^{(3)}$ is defined on the Hilbert space $H_3$ associated to a third subset $S^{(3)} = \{q_4,q_5,q_6\}$. An intersection of the r-th subset and the (r+1)-th subset is an (r+1)-th non-empty intersection set $S_I^{(r+1)} = S^{(r)}\cap S^{(r+1)}$, and an intersection of the r-th subset $S^{(r)}$ and the union of all subsequent subsets $S^{(j)}$ with j > r is different from the r-th subset $S^{(r)}$, $S^{(r)} \neq S^{(r)}\cap\left(\cup_{j=r+1}^{N_r}S^{(j)}\right)$. In Example

1, $S_I^{(2)} = \{q_3,q_4\}$ and $S_I^{(3)} = \{q_4,q_5\}$.

In Example 1, the second product operators $P_k^{(2)}$ are provided to the classical computer by providing for each second product operator $P_k^{(2)}$ $N_r = 3$ projected product operator $P_k^{(2,r)}$, the projected product operator $P_k^{(2,r)}$

being the projection of the second product operator $P_k^{(2)}$ onto an r-th projection set $\overline{S}^{(2,r)}$ of qubits which is the relative complement of the r+1-th intersection set $S_I^{(r+1)}$ in the r-th subset $S^{(r)}$, $\overline{S}^{(2,r)} = S^{(r)}\backslash S_I^{(r+1)}$, wherein the ($N_r$ +

1)-th intersection set is defined as the empty set, $S_I^{(N_r+1)} = \{\}$ = {}. For Example 1 shown in Figs. 3a and 3b, for r=1 the projected product operator $P_k^{(2,1)}$ is defined on the Hilbert space associated to the 1-st projection set $\overline{S}^{(2,1)} =$

$\{q_2\}$, for r=2 the projected product operator $P_k^{(2,2)}$ is defined on the Hilbert space associated to the 2nd projection set

$\overline{S}^{(2,2)} = \{q_3\}$ and for r=3 the projected product operator $P_k^{(2,3)}$ is defined on the Hilbert space associated to the 3rd

projection set $\overline{S}^{(2,3)} = \{q_4,q_5,q_6\}$. As the second product operator $P_k^{(2)}$ is a tensor product of operators $O_{k_i}^{(i)}$ acting

only on the qubit $q_i$, i.e., $P_k^{(2)} = \otimes_{i=2}^6 O_{k_i}^{(i)}$, the projected product operators $P_k^{(2,r)}$ of Example 1 are defined as

follows: $P_k^{(2,1)} = O_{k_2}^{(2)}$, $P_k^{(2,2)} = O_{k_3}^{(3)}$ and $P_k^{(2,3)} = \otimes_{i=4}^6 O_{k_i}^{(i)}$. Matrix representations of the projected product operators may be provided as an input to the classical computer.

Further, in Example 1 the complement dual operators $\widetilde{D}_m^{(j)}$ are provided to said classical computer by providing, for each complement dual operator $\widetilde{D}_m^{(j)}$, a set of composition operators $\widetilde{D}_{m,r}^{(j,t_r)}$, said composition operators $\widetilde{D}_{m,r}^{(j,t_r)}$ being defined by a decomposition of the complement dual operator $\widetilde{D}_m^{(j)}$ according to $\widetilde{D}_m^{(j)} = \sum_{t_1,\dots,t_{N_r}=1}^{T_1,\dots,T_{N_R}} \tilde{d}_{t_1\dots t_{N_r}}^{(m,j)} \otimes_{r=1}^{N_r} \widetilde{D}_{m,r}^{(j,t_r)}$, wherein the operator $\widetilde{D}_{m,r}^{(j,t_r)}$ is defined on an r-th composition set $\bar{S}^{(1,r)}$ of qubits which is the relative complement of the r-th intersection set $S_I^{(r)}$ in the r-th subset $S^{(r)}$, $\bar{S}^{(1,r)} = S^{(r)}\backslash S_I^{(r)}$. The 1st intersection set $S_I^{(1)}$ is defined as the intersection set, $S_I^{(1)} = S_I = \{q_2, q_3\}$. I.e., for Example 1, $\bar{S}^{(1,1)} = \{q_4\}$, $\bar{S}^{(1,2)} = \{q_5\}$, $\bar{S}^{(1,3)} = \{q_6\}$. In a non-limiting example where the POVM comprises for each qubit a set of local effects acting only on said qubit, i.e., $\Pi_m = \otimes_{j=1}^{6} \Pi_{m_j}^{(j)}$, the local effects $\Pi_{m_j}^{(j)}$ constituting a local informationally complete Positive Operator Valued Measure for said qubit, there exists a set of dual effects for said POVM such that each dual effect is a tensor product of local effects $D_{m_i}^{(loc,i)}$ acting on the qubit $q_i$, i.e., $D_m = \otimes_{i=1}^{6} D_{m_i}^{(loc,i)}$. The local effect $D_{m_i}^{(loc,i)}$ is the dual of the POVM effect $\Pi_{m_i}^{(i)}$. Then, $D_m = D_m^{(1)} \otimes \widetilde{D}_m^{(1)}$. For the example shown in Fig. 3a, $D_m^{(1)} = \otimes_{i=1}^{3} D_{m_i}^{(loc,i)}$ and $\widetilde{D}_m^{(1)} = \otimes_{i=4}^{6} D_{m_i}^{(loc,i)}$. Then, the composition operators are defined as follows: $\widetilde{D}_{m,1}^{(1,1)} = D_{m_4}^{(loc,4)}$, $\widetilde{D}_{m,2}^{(1,2)} = D_{m_5}^{(loc,5)}$ and $\widetilde{D}_{m,3}^{(1,3)} = D_{m_6}^{(loc,6)}$.

Thus, the following is provided as a further input to the classical computer: for m = 1, ..., $N_M$, matrix representations of $\widetilde{D}_m^{(1)}$, matrix representations of $\widetilde{D}_{m,1}^{(1,1)} = D_{m_4}^{(loc,4)}$, $\widetilde{D}_{m,2}^{(1,2)} = D_{m_5}^{(loc,5)}$ and $\widetilde{D}_{m,3}^{(1,3)} = D_{m_6}^{(loc,6)}$, and one coefficient $d_1^{(m)} = 1$.

The value of the estimator may then be calculated via a calculation of $\omega_{m^{(s)}}^{(k,j)}$ according to the method of the present invention as follows (see Fig. 3b):

In a first step S11, the first non-identity linear map $M_{NI}^{(1)}$ is applied to the first dual operators $D_m^{(j)}$, the image is multiplied with a tensor product of the complement product operator $P_k^{(c)}$ and the identity operator on the Hilbert space associated to the qubits in the intersection set $S_I = \{q_2\}$, and the system of the second complement set $\bar{Q}_2 = \{q_1\}$ is traced out. I.e., a zero-th intermediate operator

$$\cdot\, \Lambda_{m^{(s)},0}^{(k,j,t_0)} = \mathrm{tr}_{\bar{Q}_2}\left[ M_{NI}^{(1)}\left( D_{m^{(s)}}^{(j)} \right) P_k^{(c)} \otimes \mathbb{1}_{S_I} \right] \equiv \Lambda_0$$

is calculated.

Then, in a second step S12, the first linear non-identity subspace map $\widetilde{M}_{NI}^{(1)}$ is applied to the tensor product of the zero-th intermediate operator $\Lambda_0$ and the first composition operator $\widetilde{D}_{m^{(s)},1}^{(j,t_1)}$, the image $\widetilde{M}_{NI}^{(1)}\left( \Lambda_{m^{(s)},0}^{(k,j,t_0)} \otimes \widetilde{D}_{m^{(s)},1}^{(j,t_1)} \right)$ is multiplied with a tensor product of the first projected product operator $P_k^{(2,1)}$ and an

identity operator on the Hilbert space associated to the 2nd intersection set $S_I^{(2)} = \{q_3, q_4\}$, and the system of the first projection set $\overline{S}^{(2,1)} = \{q_2\}$ is traced out. I.e., the first intermediate operator

$$\Lambda_{m^{(s)},1}^{(k,j,t_1)} =$$

$$\mathrm{tr}_{\overline{S}^{(2,1)}} \left[ \widetilde{M}_{NI}^{(1)} \left( \Lambda_{m^{(s)},0}^{(k,j,t_0)} \otimes \widetilde{D}_{m^{(s)},1}^{(j,t_1)} \right) P_k^{(2,1)} \otimes \mathbb{1}_{S_I^{(2)}} \right] \equiv \Lambda_1$$

is calculated.

Then, in a third step S13, the second linear non-identity subspace map $\widetilde{M}_{NI}^{(2)}$ is applied to the tensor product of the first intermediate operator $\Lambda_1$ and a second composition operator $\widetilde{D}_{m^{(s)},2}^{(j,t_2)}$, the image $\widetilde{M}_{NI}^{(2)} \left( \Lambda_{m^{(s)},1}^{(k,j,t_1)} \otimes \widetilde{D}_{m^{(s)},2}^{(j,t_2)} \right)$ is multiplied with a tensor product of the second projected product operator $P_k^{(2,2)}$ and an identity operator on the Hilbert space associated to the third intersection set $S_I^{(3)} = \{q_4, q_5\}$, and the system corresponding to the second projection set $\overline{S}^{(2,2)} = \{q_3\}$ is traced out. I.e., the second intermediate operator

$$\Lambda_{m^{(s)},2}^{(k,j,t_2,t_1)} = \mathrm{tr}_{\overline{S}^{(2,2)}} \left[ \widetilde{M}_{NI}^{(2)} \left( \Lambda_{m^{(s)},1}^{(k,j,t_1)} \otimes \widetilde{D}_{m^{(s)},2}^{(j,t_2)} \right) P_k^{(2,2)} \otimes \mathbb{1}_{S_I^{(3)}} \right] \equiv \Lambda_2$$

is calculated.

Then, in a last step, S14, the coefficient $\omega_{m^{(s)}}^{(k,j)}$ is calculated by applying the third linear non-identity subspace map $\widetilde{M}_{NI}^{(3)}$ to the tensor product of the second intermediate operator $\Lambda_2$ and a third composition operator $\widetilde{D}_{m^{(s)},3}^{(j,t_3)}$, the image $\widetilde{M}_{NI}^{(3)} \left( \Lambda_{m^{(s)},2}^{(k,j,t_2,t_1)} \otimes \widetilde{D}_{m^{(s)},3}^{(j,t_3)} \right)$ is multiplied with the third projected product operator $P_k^{(2,3)}$ and the system corresponding to the third projection set $\overline{S}^{(2,3)} = \{q_4, q_5, q_6\}$ is traced out. I.e., the coefficient $\omega_{m^{(s)}}^{(k,j,t_3,t_2,t_1)} =$

$$\mathrm{tr}_{\overline{S}^{(2,3)}} \left[ \widetilde{M}_{NI}^{(3)} \left( \Lambda_{m^{(s)},2}^{(k,j,t_2,t_1)} \otimes \widetilde{D}_{m^{(s)},3}^{(j,t_3)} \right) P_k^{(2,3)} \right]$$ is calculated.

Then, the value of the estimator is calculated according to $\overline{O} = \frac{1}{S} \sum_{s=1}^{S} \sum_{k=1}^{3} \sum_{j=1}^{N_{D_{m^{(s)}}}} \omega_{m^{(s)}}^{(k,j,1,1,1)}$.

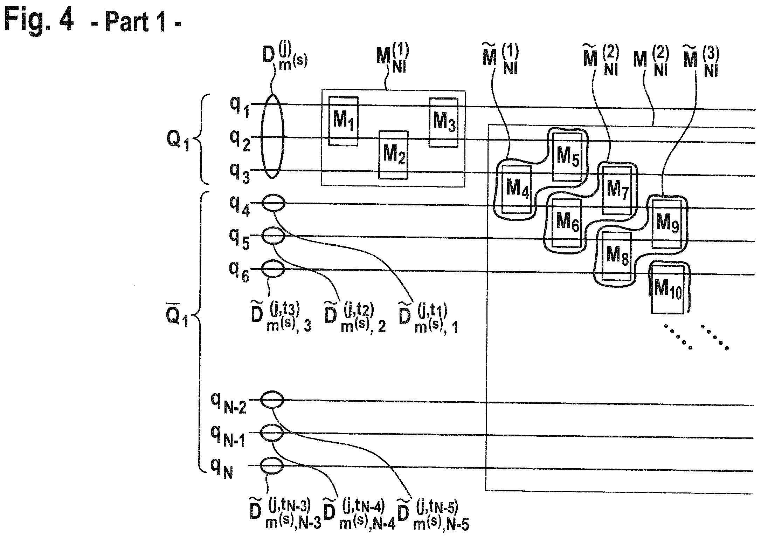

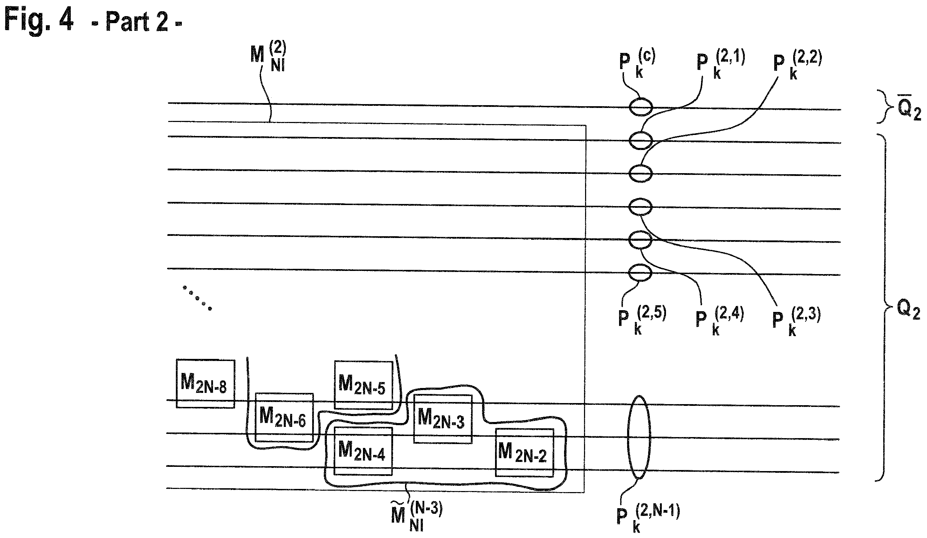

The calculation of the value of the estimator according to Example 1 requires only the storage and multiplication of matrices of a maximum dimension of 8x8. A generalization of Example 1 to systems with more than 8 qubits is straightforward, and is shown in Fig. 4.

Example 2: Assisting variational state optimization

In Example 2, it is the goal to approximate the ground state energy of a quantum system which may be encoded in a qudit system by using a variational ansatz. The quantum system of interest is described by a Hamilton operator $O_H$. In most applications, the Hamilton operator $O_H$ is a sum of operators which act on few qubits only.

In Example 2, the quantum computing unit may be operative to initialize an initial quantum state described by an initial density operator $\sigma_0$ and to apply a quantum circuit $\mathcal{F} = \bigcirc_{f=1}^{F} \mathcal{F}_f$ comprising a sequence of F quantum gates

$F_f$ to said initial state, each quantum gate $\mathcal{F}_f$ being described by a unitary operation $U_f(\vec{\theta_f})$ acting on at most two qubits and depending on parameters $\vec{\theta_f} = (\theta_{f,1}, ..., \theta_{f,z})$. I.e., for any quantum state described by a density operator $\rho$, the action

of said quantum circuit is given by $\mathcal{F}(\rho) = U_F U_{F-1} ... U_1 \rho U_1^{\dagger} ... U_{F-1}^{\dagger} U_F^{\dagger}$.

The ground state may be approximated variationally by minimizing a cost function over the parameters of the input circuit. In this way, a state described by a density matrix $\sigma = \mathcal{F}(\sigma_0)$ may be prepared, for which the parameters $\vec{\theta_f}$ of the quantum gates are adjusted such that $\text{tr}[\sigma O_H]$ is minimized.

Once the state $\mathcal{F}(\sigma_0)$ is prepared, the method according to the present invention allows to determine the effect of adding quantum gates to the system in the following way: Define two sequences of quantum gates $V = U_{F+n}U_{F+n-1} ... U_{F+1}$ and $W = U_{F+n+m}U_{F+n+m-1} ... U_{F+n+1}$ wherein the quantum gate $U_f$, $f = F + 1, ...,F + n + m$ is acting on at most two qubits such that the resulting quantum gate V acts on a first set $Q_1$ of qubits which is a proper subset of the set Q of qubits and the resulting quantum gate W acts on a second set $Q_2$ of qubits different from said first set $Q_1$, said second set $Q_2$ being a proper subset of the set Q of qubits, wherein a union of the first set and the second set is the set $Q = Q_1 \cup Q_2$, and an intersection of the first set and the second set $Q_1$, $Q_2$, is an intersection set, $Q_I = Q_1 \cap Q_2$, said intersection set being either a non-empty set, $Q_I \neq \{ \}$, or being an empty set, $Q_I = \{ \}$.

Then, one may define first and second non-identity linear maps via the relations $M_{NI}^{(1)}(\sigma) = V\sigma V^{\dagger}$ and

$M_{NI}^{(2)}(\sigma) = W\sigma W^{\dagger}$. I.e., one may provide the matrix representation of the operators V and W to the classical computer.

Furthermore, one may determine a representation of the operator $O_H$ according to

$O_H = \sum_{k=1}^{N_O} c_k P_k^{(c)} \otimes P_k^{(2)}$ and provide for $k = 1, ..., N_o$ the coefficients $c_k$ and matrix representations of $P_k^{(c)}$ and

$P_k^{(2)}$ as an input to the classical computer.

Furthermore, for each m = 1, ...,$N_M$, an integer number $N_{D_m}$ of coefficients $d_j^{(m)}$, $j = 1, ..., N_{Dm}$, matrix

representations of $N_{D_m}$ first dual operators $D_m^{(j)}$, $j = 1, ..., N_{D_m}$, acting on the first set $Q_1$ of qudits, and matrix

representations of $N_{D_m}$ complement dual operators $\widetilde{D}_m^{(j)}$, $j = 1, ..., N_{Dm}$, acting on a first complement set $\overline{Q}_1$ of qudits

which is the complement of the first set $Q_1$, are provided as an input to the classical computer, said coefficients $d_j^{(m)}$

, first dual operators $D_m^{(j)}$ and first complement dual operators $\widetilde{D}_m^{(j)}$ being defined by a decomposition of a set of $N_M$

dual effects $D_m$ of the set of $N_M$ effects $\Pi_m$ according to $D_m = \sum_{j=1}^{N_{Dm}} d_j^{(m)} D_m^{(j)} \otimes \widetilde{D}_m^{(j)}$ .

Then, $\overline{O} = \frac{1}{S} \sum_{s=1}^{S} \sum_{k=1}^{N_O} \sum_{j=1}^{N_D m^{(s)}} c_k d_j^{(m)} \omega_{m^{(s)}}^{(k,j)}$, with $\omega_{m^{(s)}}^{(k,j)} = \text{tr}\left[ M(D_{m^{(s)}}^{(j)} \otimes \widetilde{D}_{m^{(s)}}^{(j)}) P_k^{(c)} \otimes P_k^{(2)}\right]$ is calculated according to the method of the present invention to thereby obtain an estimation of a value of the ground state energy of a state

$$\tilde{\sigma} = M(\sigma) =$$

$$\left(\mathbb{1}_{\bar{Q}_2} \otimes W\right)\left(V \otimes \mathbb{1}_{\bar{Q}_1}\right)\sigma\left(V^\dagger \otimes \mathbb{1}_{\bar{Q}_1}\right)\left(\mathbb{1}_{\bar{Q}_2} \otimes W^\dagger\right),$$

i.e. of a state obtained by applying the sequence of quantum gates $U_{F+n+m}...U_{F+1}$ to the state $\sigma$, according to tr $[M(\sigma)O_H]$. In this way, the effect of the additional quantum gates $U_{F+n+m}...U_{F+1}$ on the prepared state described by the density operator $\sigma$ may be determined by using the data obtained from a measurement on the prepared quantum state. It is also possible to use a parametrized representation of the quantum gates $V(\vec{\theta_1})$ and $W(\vec{\theta_2})$ and to minimize the value of the estimator with respect to these parameters by a standard optimization routine via $\min_{\vec{\theta_1},\vec{\theta_2}}\text{tr}[M_{\vec{\theta_1},\vec{\theta_2}}(\sigma)O_H]$.

Example 3: Noise mitigation

For Example 3, we consider a quantum computing unit which is operative to prepare a quantum state of a system of N qubits described by a density operator $\sigma$. However, due to quantum noise, this prepared quantum state is different from a solution state described by a density operator $\rho$. For example, the control means may be operative to prepare the quantum state described by the density operator $\sigma$ by initializing an initial state of said qubits described by a density operator $\sigma_0$ and by applying a quantum circuit $\mathcal{F} = \bigcirc_{f=1}^{F}\mathcal{F}_f$ comprising a sequence of F quantum gates to said initial state, each quantum gate being described by a quantum channel $F_f$. Ideally, the quantum circuit would be a sequence of single and two qubit gates $U_f$ described by a sequence of unitary operations thereby defining an ideal quantum circuit $\mathcal{F}_{ideal} = \bigcirc_{f=1}^{F}U_f$. However, due to the quantum noise, the noisy quantum channel $F_f$ is realized instead of the unitary operator $U_f$.

If one was able to find first and second non-identity linear maps $M_{NI}^{(1)}, M_{NI}^{(2)}$ defining a target linear map as explained above such that the image of the density operator $\sigma$ of the prepared quantum state under the target map is close or identical to the density operator of the solution state, $M(\sigma) = \rho$, it would be possible to calculate efficiently expectation values of observables of the solution state via the hybrid quantum-classical method for computation explained above. I.e., one could infer a value of an estimator of tr$[\rho O]$ for an observable O by implementing a quantum measurement describing an informationally complete Positive Operator Valued on the prepared quantum state $\sigma$ and by calculating a value of $\bar{O} = \frac{1}{S}\sum_{s=1}^{S}\sum_{k=1}^{N_O}\sum_{j=1}^{N_{D_{m^{(s)}}}} c_k d_j^{(m^{(s)})}\omega_{m^{(s)}}^{(k,j)}$, with $\omega_{m^{(s)}}^{(k,j)} = \text{tr}\left[M(D_{m^{(s)}}^{(j)} \otimes \tilde{D}_{m^{(s)}}^{(j)})P_k^{(c)} \otimes P_k^{(2)}\right]$ as has explained above.

There are various possibilities to find such first and second non-linear maps $M_{NI}^{(1)}, M_{NI}^{(2)}$. One such possibility is as follows:

The first and second non-identity linear maps $M_{NI}^{(1)}, M_{NI}^{(2)}$ may be defined by first and second model maps completely positive trace preserving model maps parametrized by first and second sets of complex parameters $\left\{\beta_j^{(1)}\right\}_{j=1}^{J_1}, \left\{\beta_j^{(2)}\right\}_{j=1}^{J_2}$. The first and second non-identity linear maps $M_{NI}^{(1)}, M_{NI}^{(2)}$ may then be provided as an input to the classical computer by providing a parametrized representation of said first and second model maps and initial values of said first and second model parameters. Then, the value of the estimator may be calculated for the given parameters, and the method may further include determining optimal values of said first and second sets of model parameters to thereby optimize said value of said estimator by an optimization algorithm.

In one example one may ensure that the action of the target map on the density operator of the prepared state, $\sigma$, is positive semidefinite, $M(\sigma)\geq 0$ as has been explained above.

Another possibility for noise mitigation is via randomized compiling, as explained in the general part of the description. Still further, noise mitigation is possible by using the compression maps Z as described in the general part of the description.

**Claims**

1. A method for performing computation using a hybrid quantum-classical computing system comprising a quantum computing unit and a classical computer, said quantum computing unit comprising a quantum system defined by a set Q of N qudits, preferably a set Q of N qubits, and control means, said control means being operative to prepare a quantum state of said quantum system, said quantum state being described by a density operator $\sigma$ acting on a Hilbert space H associated with said quantum system, to perform a quantum measurement defined by an informationally complete Positive Operator Valued Measure on said prepared quantum state, said informationally complete Positive Operator Valued Measure being described by an integer number $N_M$ of effects $\Pi_m$, m = 1, ..., $N_M$, the effects being preferably K-producible, K $\geq$ 1 , the effect $\Pi_m$ having a measurement outcome m, and to output the measurement outcome of said quantum measurement, said method comprising:

a) Repeated operation of said control means of said quantum computing unit to thereby obtain a set of measurement data $\{m^{(s)}\}_{s=1}^{S}$ as an output, with $m^{(s)}$ being a measurement outcome for the s-th operation of the control means and S being the number of repetitions;

b) Providing an input to the classical computer, said input comprising:

i) the set of measurement data $\{m^{(s)}\}_{s=1}^{S}$ ;

ii) a first non-identity linear map $M_{NI}^{(1)} : L\big(H^{(1)}\big) \to L\big(H^{(1)}\big)$ , wherein $L(H^{(1)})$ is a space of linear operators on a first Hilbert space $H^{(1)}$ associated to a first non-empty set $Q_1$ of qudits which is a proper subset of the set Q of qudits, and a second non-identity linear map $M_{NI}^{(2)} : L\big(H^{(2)}\big) \to L\big(H^{(2)}\big)$ , wherein $L(H^{(2)})$ is a space of linear operators on a second Hilbert space $H^{(2)}$ associated to a second non-empty set $Q_2$ of qudits different from said first set $Q_1$, said second set $Q_2$ being a proper subset of the set Q of qudits, wherein a union of the first set and the second set is the set $Q = Q_1 \cup Q_2$, and an intersection of the first set and the second set $Q_1, Q_2$, is an intersection set, $Q_I = Q_1 \cap Q_2$, said intersection set being either a non-empty set, $Q_I \neq \{\}$, or being an empty set, $Q_I = \{\}$,

iii) an integer number $N_o$ of complex numbers $c_k$, k = 1,..., $N_o$, representations of $N_o$ second product operators $P_k^{(2)} = \otimes_i O_i^{(k)}$ acting on the second set $Q_2$ of qudits, with $O_j^{(k)}$ being a local operator acting on the j-th qudit, and representations of $N_o$ complement product operators $P_k^{(c)} = \otimes_j O_j^{(k)}$ acting on a second complement set $\overline{Q}_2$ of qudits which is the complement of the second set $Q_2$;

iv) for each m = 1,..., $N_M$, an integer number $N_{D_m}$ of coefficients $d_j^{(m)}, j = 1, ..., N_{D_m}$ , representations of $N_{D_m}$ first dual operators $D_m^{(j)} , j = 1, ..., N_{D_m}$, acting on the first set $Q_1$ of qudits, and representations of $N_{D_m}$ complement dual operators $\widetilde{D}_m^{(j)} , j = 1, ..., N_{D_m}$, acting on a first complement set $\overline{Q}_1$ of qudits which is the complement of the first set $Q_1$, said coefficients $d_j^{(m)}$ , first dual operators $D_m^{(j)}$ and first complement dual operators $\widetilde{D}_m^{(j)}$ being defined by a decomposition of a set of $N_M$ dual effects $D_m$ of the set of $N_M$ effects $\Pi_m$ according to $D_m = \sum_{j=1}^{N_{D_m}} d_j^{(m)} D_m^{(j)} \otimes \widetilde{D}_m^{(j)}$ ,

c) Calculating, by the classical computer, a value of an estimator

$$\bar{O} = \frac{1}{S}\sum_{s=1}^{S}\sum_{k=1}^{N_O}\sum_{j=1}^{N_D} {}_{m^{(s)}} c_k d_j^{(m^{(s)})} \omega_{m^{(s)}}^{(k,j)}, \text{ with } \omega_{m^{(s)}}^{(k,j)} = \text{tr}\left[ M(D_{m^{(s)}}^{(j)} \otimes \tilde{D}_{m^{(s)}}^{(j)}) P_k^{(c)} \otimes P_k^{(2)} \right]$$

to thereby obtain an estimation of a value of a trace of a product of the image of the density operator $\sigma$ under a target map M and a target operator O, tr[$M(\sigma)O$], wherein

the target linear map $M:L(H) \to L(H)$ with L(H) being the space of linear operators on the Hilbert space H is defined as a composition of first and second linear maps $M^{(1)}, M^{(2)}:L(H) \to L(H), M = M^{(2)} \circ M^{(1)}$, wherein

the first linear map $M^{(1)}$ is a tensor product of the first non-identity linear map $M_{NI}^{(1)}$ and an identity map on a space of linear operators $L(\overline{H}^{(1)})$ on a Hilbert space $\overline{H}^{(1)}$ associated to the first complement set $\overline{Q}_1$,

$$M^{(1)} = M_{NI}^{(1)} \otimes$$

$$\mathbb{1}_{\overline{Q}_1},$$

and the second linear map $M^{(2)}$ is a tensor product of the second non-identity linear map $M_{NI}^{(2)}$ and an identity map on a space of linear operators $L(\overline{H}^{(2)})$ on a Hilbert space $\overline{H}^{(2)}$ associated to the second complement set $\overline{Q}_2$,

$$M^{(2)} = \mathbb{1}_{\overline{Q}_2} \otimes M_{NI}^{(2)},$$

the target operator O is defined by the complex numbers $c_k$, the second product operators $P_k^{(2)}$ and the complement product operators $P_k^{(c)}$ according to $O = \sum_{k=1}^{N_O} c_k P_k^{(c)} \otimes P_k^{(2)}$, and

wherein the calculation of $\omega_{m^{(s)}}^{(k,j)}$ includes calculating a partial trace over the second complement set $\overline{Q}_2$ of a product of an image $M_{NI}^{(1)}(D_{m^{(s)}}^{(j)})$ of the representation of the first dual operator $D_{m^{(s)}}^{(j)}$ under the first non-identity linear map $M_{NI}^{(1)}$ and a tensor product of the complement product operator $P_k^{(c)}$ and an identity map

$$\mathbb{1}_{Q_I}$$

on the intersection Hilbert space $H_I$ associated to the intersection set $Q_I$,

$$Q_I, \text{tr}_{\overline{Q}_2}\left[ M_{NI}^{(1)}\left( D_{m^{(s)}}^{(j)} \right) P_k^{(c)} \otimes \mathbb{1}_{Q_I} \right]$$

and/or calculating a partial trace over the first complement set $\overline{Q}_1$ of a product of an image $M_{NI}^{(2)\dagger}(P_k^{(2)})$

of the representation of the second product operator $P_k^{(2)}$ under the adjoint of the second non-identity linear map $M_{NI}^{(2)\dagger}$ and a tensor product of an identity map

$$\mathbb{1}_{Q_I}$$

on the intersection Hilbert space $H_I$ and the first complement operator

$$\widetilde{D}_{m^{(s)}}^{(J)}, \operatorname{tr}_{\bar{Q}_1}\left[ M_{NI}^{(2)\dagger}(P_k^{(2)})\mathbb{1}_{Q_I} \otimes \widetilde{D}_{m^{(s)}}^{(J)}\right].$$

2. Method according to claim 1, wherein the numbers $c_k, k = 1, ..., N_O$, are real numbers and the second product operators $P_k^{(2)}$ and the complement product operators $P_k^{(c)}$ are hermitian, thereby defining a target operator O which is a hermitian operator.

3. Method according to claim 1 or 2, wherein the product operators $P_k^{(2)}$ and the complement product operators $P_k^{(c)}$ are $K_P$-local operators being non-identity operators on at most $K_P$ qudits, thereby defining a target operator which is a $2K_P$-local operator, wherein preferably $K_P \leq 4$, preferably $K_P \leq 3$, preferably $K_P \leq 2$, and preferably $K_P = 1$.

4. Method according to anyone of the preceding claims, wherein the first non-identity linear map $M_{NI}^{(1)}$ is a composition of an integer number $R_1$ of linear, $K_1$-local maps, $M_{NI}^{(1)} = \bigcirc_{r=1}^{R_1} M_r^{(1)}$, $M_r^{(1)}: L(H^{(1)}) \to L(H^{(1)})$, wherein each linear, $K_1$-local map $M_r^{(1)}$ is a non-identity linear map on at most $K_1$ qudits and/or the second non-identity linear map $M_{NI}^{(2)}$ is a composition of an integer number $R_2$ of linear, $K_2$-local maps, $M_{NI}^{(2)} = \bigcirc_{r=1}^{R_2} M_r^{(2)}$, $M_r^{(2)}: L(H^{(2)}) \to L(H^{(2)})$, wherein each linear, $K_2$-local map $M_r^{(2)}$ is a non-identity linear map on at most $K_2$ qudits, wherein preferably $K_1 \leq 20$, preferably $K_1 \leq 10$, preferably $K_1 \leq 4$, preferably $K_1 \leq 2$, and preferably $K_2 \leq 20$, preferably $K_2 \leq 10$, preferably $K_2 \leq 4$, preferably $K_2 \leq 2$, and providing said first and/or second non-identity linear maps as an input to said classical computer comprises providing said $R_1$ linear, $K_1$-local maps $M_r^{(1)}$ and/or said $R_2$ linear, $K_2$-local maps $M_r^{(2)}$ to said classical computer.

5. Method according to claim 4, wherein providing said second non-identity linear map $M_{NI}^{(2)}$ as an input to the classical computer comprises providing a set of $N_r$ linear non-identity subspace maps $\widetilde{M}_{NI}^{(r)}, r = 1, ..., N_r$, the r-th linear non-identity subspace map $\widetilde{M}_{NI}^{(r)}: L(H_r) \to L(H_r)$ being defined on a space of linear operators on a Hilbert space $H_r$ associated to an r-th subset $S^{(r)}$ of qudits which is a proper subset of the second set of qudits, $Q_2$, wherein all subsets $S^{(r)}$ are different from each other, the union of all subsets $S^{(r)}$ is the second set, $\cup_{r=1}^{N_r} S^{(r)} = Q_2$, an intersection of the r-th subset and the (r+1)-th subset is an (r+1)-th non-empty intersection set $S_I^{(r+1)} = S^{(r)} \cap S^{(r+1)}$,

and an intersection of the r-th subset $S^{(r)}$ and the union of all subsequent subsets $S^{(j)}$ *with j > r* is different from the r-th subset $S^{(r)}$, $S^{(r)} \neq S^{(r)} \cap ( \bigcup_{j=r+1}^{N_r} S^{(j)} )$, such that the second non-identity linear map $M_{NI}^{(2)}$ is defined as a composition of $N_r$ maps, the r-th of said maps being a tensor product of the r-th linear non-identity subspace map $\widetilde{M}_{NI}^{(r)}$ and an identity map

$$\mathbb{1}_{\bar{S}^{(r)}}$$

on the complement $\bar{S}^{(r)} = Q_2 \backslash S^{(r)}$ of the r-th subset of qudits in the second set $Q_2$,

$$M_{NI}^{(2)} = \bigcirc_{r=1}^{N_r} \left( \widetilde{M}_{NI}^{(r)} \otimes \mathbb{1}_{\bar{S}^{(r)}} \right),$$

providing said representation of said second product operators $P_k^{(2)}$ to said classical computer comprises providing, for each second product operator $P_k^{(2)}$, a set of $N_r$ representations of projected product operators $P_k^{(2,r)}$, the projected product operator $P_k^{(2,r)}$ being the projection of the second product operator $P_k^{(2)}$ onto an r-th projection set $\bar{S}^{(2,r)}$ of qudits which is the relative complement of the r+1-th intersection set $S_I^{(r+1)}$ in the r-th subset $S^{(r)}$, $\bar{S}^{(2,r)} = S^{(r)} \backslash S_I^{(r+1)}$, wherein the $(N_r + 1)$-th intersection set is defined as the empty set, $S_I^{(N_r+1)} = \{ \}$;

providing said representation of said complement dual operators $\widetilde{D}_m^{(j)}$ to said classical computer comprises providing, for each complement dual operator $\widetilde{D}_m^{(j)}$, a set of composition operators $\widetilde{D}_{m,r}^{(j,t_r)}$, said composition operators $\widetilde{D}_{m,r}^{(j,t_r)}$ being defined by a decomposition of the complement dual operator $\widetilde{D}_m^{(j)}$ according to

$$\widetilde{D}_m^{(j)} = \sum_{t_1,...,t_{N_r}=1}^{T_1,...,T_{N_r}} \tilde{d}_{t_1...t_{N_r}}^{(m,j)} \otimes_{r=1}^{N_r} \widetilde{D}_{m,r}^{(j,t_r)},$$ wherein the r-th composition operator $\widetilde{D}_{m,r}^{(j,t_r)}$ is defined on an r-th composition set $\bar{S}^{(1,r)}$ of qudits which is the relative complement of the r-th intersection set $S_I^{(r)}$ in the r-th subset $S^{(r)}$, $\bar{S}^{(1,r)} = S^{(r)} \backslash S_I^{(r)}$, wherein the first intersection set $S_I^{(1)}$ is defined as the intersection set, $S_I^{(1)} = Q_I$;

and wherein said calculating of said value of said estimator comprises calculating

$$\bar{O} = \frac{1}{S} \sum_{s=1}^{S} \sum_{k=1}^{N_O} \sum_{j=1}^{N_D^{m(s)}} \sum_{t_1,...,t_{N_r}}^{T_1,...,T_{N_r}} c_k d_j^{(m^{(s)})} \tilde{d}_{t_1...t_{N_r}}^{(m^{(s)},j)} \omega_{m^{(s)}}^{(k,j,t_1,...,t_{N_r})}$$

with

$$\omega_{m^{(s)}}^{(k,j,t_1,...,t_{N_r})} = \text{tr}\left[ M(D_{m^{(s)}}^{(j)} \otimes_{r=1}^{N_r} \widetilde{D}_{m^{(s)},r}^{(j,t_r)}) P_k^{(c)} \otimes_{r=1}^{N_r} P_k^{(2,r)} \right],$$

wherein said calculation of $\omega_{m^{(s)}}^{(k,j,t_1,...,t_{N_r})}$ comprises calculating an r-th intermediate operator $\Lambda_{m^{(s)},r}^{(k,j,t_r,t_{r-1},...,t_1)}$ , r = 1, ..., $N_r$ - 1, via a partial trace over the r-th projection set $\overline{S}^{(2,r)}$ of a product of an image $\widetilde{M}_{NI}^{(r)}\left(\Lambda_{m^{(s)},r-1}^{(k,j,t_{r-1},t_{r-2},...,t_1)} \otimes \widetilde{D}_{m^{(s)},r}^{(j,t_r)}\right)$ of a tensor product of the representation of the composition operator $\widetilde{D}_{m^{(s)},r}^{(j,t_r)}$ and the (r-1)-th intermediate operator $\Lambda_{m^{(s)},r-1}^{(k,j,t_{r-1},t_{r-2},...,t_1)}$ under the r-th non-identity linear subspace map $\widetilde{M}_{NI}^{(r)}$ and a tensor product of the second projected operator $P_k^{(2,r)}$ and an identity map

$$\mathbb{1}_{S_I^{(r+1)}}$$

on the (r+1)-th intersection set

$$S_I^{(r+1)}, \Lambda_{m^{(s)},r}^{(k,j,t_r,t_{r-1},...,t_1)} = \mathrm{tr}_{\overline{S}^{(2,r)}}\left[\widetilde{M}_{NI}^{(r)}\left(\Lambda_{m^{(s)},r-1}^{(k,j,t_{r-1},t_{r-2},...,t_1)} \otimes \widetilde{D}_{m^{(s)},r}^{(j,t_r)}\right) P_k^{(2,r)} \otimes$$

$$\mathbb{1}_{S_I^{(r+1)}}\right],$$

wherein the zero-th intermediate operator $\Lambda_{m^{(s)},0}^{(k,j,t_0)}$ is defined as

$$\Lambda_{m^{(s)},0}^{(k,j,t_0)} =$$

$$\mathrm{tr}_{\overline{Q}_2}\left[M_{NI}^{(1)}\left(D_{m^{(s)}}^{(j)}\right)P_k^{(c)} \otimes \mathbb{1}_{Q_I}\right]$$

and/or calculating an r-th complement intermediate operator $\overline{\Lambda}_{m^{(s)},r}^{(k,j,t_N,t_{N-1},...,t_r)}$ , r = $N_r$ - 1, ...,1 via a partial trace over the r-th composition set $\overline{S}^{(1,r)}$ of a product of an image $\widetilde{M}_{NI}^{(r)\dagger}\left(P_k^{(2,r)} \otimes \overline{\Lambda}_{m^{(s)},r+1}^{(k,j,t_N,t_{N-1},...,t_{r+1})}\right)$ of a tensor product of the representation of the second projected operator $P_k^{(2,r)}$ and the (r+1)-th complement intermediate operator $\overline{\Lambda}_{m^{(s)},r+1}^{(k,j,t_N,t_{N-1},...,t_{r+1})}$ under the adjoint of the r-th non-identity linear subspace map $\widetilde{M}_{NI}^{(r)\dagger}$ and a tensor product of the composition operator $\widetilde{D}_{m^{(s)},r}^{(j,t_r)}$ and an identity map

$$\mathbb{1}_{S_I^{(r)}}$$

on the r-th intersection set

$$S_I^{(r)}, \bar{\Lambda}_{m^{(s)},r}^{(k,j,t_N,t_{N-1},\ldots,t_r)} = \text{tr}_{\bar{S}^{(1,r)}} \left[ \widetilde{M}_{NI}^{(r)\dagger} \left( P_k^{(2,r)} \otimes \right. \right.$$

$$\left. \left. \bar{\Lambda}_{m^{(s)},r+1}^{(k,j,t_N,t_{N-1},\ldots,t_{r+1})} \right) \mathbb{1}_{S_I^{(r)}} \otimes \widetilde{D}_{m^{(s)},r}^{(j,t_r)} \right],$$

wherein for $r=N_r$ the complement intermediate operator $\bar{\Lambda}_{m^{(s)},N_r}^{(k,j,t_{N_r})}$ is defined as

$$\bar{\Lambda}_{m^{(s)},N_r}^{(k,j,t_{N_r})} = \text{tr}_{\bar{S}^{(1,N_r)}} \left[ M_{NI}^{(N_r)\dagger} (P_k^{(2,N_r)}) \mathbb{1}_{S_I^{(N_r)}} \otimes \widetilde{D}_{m^{(s)},N_r}^{(j,t_{N_r})} \right].$$

6. Method according to anyone of the preceding claims, wherein the first and second non-identity linear maps $M_{NI}^{(1)}, M_{NI}^{(2)}$ are such that the image of the density operator under the target map M is positive semidefinite, M($\sigma$)≥0.

7. Method according to claim 6, wherein the first non-identity linear map $M_{NI}^{(1)}$ is a composition of an integer number $R_1$ of linear, $K_1$-local maps, $M_{NI}^{(1)} = \bigcirc_{r=1}^{R_1} M_r^{(1)}$, $M_r^{(1)} : L(H^{(1)}) \to L(H^{(1)})$, and the second non-identity linear map $M_{NI}^{(2)}$ is a composition of an integer number $R_2$ of linear, $K_2$-local maps, $M_{NI}^{(2)} = \bigcirc_{r=1}^{R_2} M_r^{(2)}$, $M_r^{(2)} : L(H^{(2)}) \to L(H^{(2)})$, preferably according to claim 4, thereby defining the target linear map M as a composition of R = $R_1 + R_2$ k-local maps $M = \bigcirc_{r=1}^{R} M_r$, wherein the k-local map $M_r$ is a tensor product of the $K_1$-local map $M_r^{(1)}$ and an identity map

$$\mathbb{1}_{\bar{Q}_1}$$

on the first complement set $\overline{Q}_1$ of qudits,

$$M_r = M_r^{(1)} \otimes \mathbb{1}_{\bar{Q}_1},$$

and is different from the identity map on all qudits in a set $S_{Q_r}^{(1)}$ of qudits, i. e.,

$$M_r = \widetilde{M}_r^{(1)} \otimes \mathbb{1}_{Q \backslash S_{Q_r}^{(1)}},$$

and $\widetilde{M}_r^{(1)}$ is different from the identity on all qudits in $S_{Q_r}^{(1)}$, or the k-local map $M_r$ is a tensor product of the $K_2$-local

map $M_{r-R_1}^{(2)}$ and an identity map

$$\mathbb{1}_{\bar{Q}_2}$$

on the second complement set $\bar{Q}_2$ of qudits

$$M_r = \mathbb{1}_{\bar{Q}_2} \otimes M_{r-R_1}^{(2)}$$

and is different from the identity map on all qudits in a set $S_{Q_r}^{(2)}$ of qudits, i. e.,

$$M_r = \mathbb{1}_{Q \backslash S_{Q_r}^{(2)}} \otimes \widetilde{M}_r^{(2)},$$

and $\widetilde{M}_r^{(2)}$ is different from the identity on all qudits in $S_{Q_r}^{(2)}$, and, wherein the first and second $K_1$-local, respectively $K_2$-local maps $M_r^{(1)}$ and $M_r^{(2)}$ are chosen such that an image of the density operator of a purification $|\Psi_r\rangle$ of a reduced density operator $\sigma_r$ under a tensor product of the map $\widetilde{M}_r^{(1)}$ and an identity map on the Hilbert space associated to the set $S_{Q_r}^{(1)}$ of qudits for r = 1, ..., $R_1$ or a tensor product of the map $\widetilde{M}_r^{(2)}$ and an identity map on the Hilbert space associated to the set $S_{Q_r}^{(2)}$ of qudits for r = $R_1$ + 1, ..., $R_2$ is positive semidefinite, $\widetilde{M}_r^{(1)} \otimes \mathbb{1}_{S_{Q_r}^{(1)}}(|\Psi_r\rangle\langle\Psi_r|) \geq 0$, or

$$\mathbb{1}_{S_{Q_r}^{(2)}} \otimes \widetilde{M}_r^{(2)}(|\Psi_r\rangle\langle\Psi_r|) \geq 0,$$

wherein the reduced density operator $\sigma_r$ is defined by taking the partial trace over a set $S_{Id}^{(r)}$ of qudits of a density operator obtained by an application of the composition of the first r-1 maps, i.e., $\bigcirc_{i=1}^{r-1} M_i$ to the density operator $\sigma$, $\sigma_r = \text{tr}_{S_{Id}^{(r)}}\left[\bigcirc_{i=1}^{r-1} M_i(\sigma)\right]$, wherein $S_{Id}^{(r)}$ is the complement of the set $S_{Q_r}^{(1)}$ in the set Q of qudits for r = 1, ..., $R_1$, $S_{Id}^{(r)} = Q \backslash S_{Q_r}^{(1)}$, or $S_{Id}^{(r)}$ is the complement of the set $S_{Q_r}^{(2)}$ in the set Q of qudits $S_{Id}^{(r)} = Q \backslash S_{Q_r}^{(2)}$ for r = $R_1$ + 1, ..., $R_2$, i. e., $S_{Id}^{(r)}$ is the set of qudits on which the map $M_r$ is the identity map, to thereby ensure that an image of the density operator $\sigma$ under the target map M is positive semidefinite, $M(\sigma) \geq 0$.

8. Method according to anyone of the preceding claims, wherein the first and/or second non-identity linear maps

$M_{NI}^{(1)}, M_{NI}^{(2)}$ are defined by first and second model maps parametrized by first and second sets of complex parameters $\left\{ \beta_j^{(1)} \right\}_{j=1}^{J_1}, \left\{ \beta_j^{(2)} \right\}_{j=1}^{J_2}$, respectively, wherein providing said first and/or second non-identity linear maps $M_{NI}^{(1)}, M_{NI}^{(2)}$ as an input to the classical computer includes providing a parametrized representation of said first and/or second model maps and initial values of said first and/or second model parameters and said calculation of said value of said estimator comprises determining optimal values of said first and/or second sets of model parameters to thereby optimize said value of said estimator by an optimization algorithm.

9. Method according to anyone of the preceding claims, wherein the first non-identity linear map $M_{NI}^{(1)}$ and/or the second non-identity linear map $M_{NI}^{(2)}$ is a completely positive linear map, in particular a completely positive trace preserving linear map.

10. Method according to claim 9, wherein the first non-identity linear map $M_{NI}^{(1)}$ is a first unitary map $M_{U_1}$ and/or the second non-identity linear map $M_{NI}^{(2)}$ is a second unitary map $M_{U_2}$ and preferably the first and/or second unitary map $M_{U_1}$ and/or $M_{U_2}$ is a composition of unitary maps acting on at most two qudits.

11. Method according to anyone of the preceding claims, wherein the first non-identity linear map $M_{NI}^{(1)}$ and/or the second non-identity linear map $M_{NI}^{(2)}$ is the inverse of a completely positive trace preserving map.

12. Method according to anyone of the preceding claims, wherein said control means is operative to prepare said quantum state by initializing an initial state of said qudits described by an initial density operator $\sigma_0$ and by applying a quantum circuit described by a quantum channel $\mathcal{F} = \bigcirc_{f=1}^{F} \mathcal{F}_f$ comprising a sequence of F quantum gates to said initial state, each quantum gate being described by a K'-local quantum channel $\mathcal{F}_f$, preferably a K'-local unitary operation $U_f$, acting as a non-identity quantum channel on at most K' qudits, and preferably K' = 2.

13. Method according to claim 12, wherein said quantum circuit is a randomized compiling circuit described by a quantum channel $\mathcal{F}_{RC} = \bigcirc_{f=1}^{F_{RC}} \mathcal{F}_f^{(RC)}$ and comprising quantum gates described by quantum channels $\mathcal{F}_f^{(RC)}$ obtained by applying randomized compiling to a target quantum circuit described by a quantum channel $\mathcal{F}_T = \bigcirc_{f=1}^{F_T} \mathcal{F}_f^{(T)}$ and comprising a sequence of quantum gates, each quantum gate being described by a K'-local quantum channel $\mathcal{F}_f^{(T)}$ such that the prepared quantum state is described by a density operator $\sigma = \mathcal{F}_{RC}(\sigma_0)$, wherein said method further comprises:

- estimating a probabilistic error rate p for a depolarizing noise model $\varepsilon_p(\rho) = (1-p)\rho + p \frac{\mathbb{1}}{2^N}$ of said randomized compiling circuit described by the quantum channel $\mathcal{F}_{RC}$,
- calculating a value of a first estimator

$$\bar{O}_1 = \frac{1}{1-p}\bar{O} - \frac{p}{2^N(1-p)} \sum_{k=1}^{N_O} c_k \mathrm{tr} \left[ M(\mathbb{1}) P_k^{(c)} \otimes P_k^{(2)} \right],$$

wherein $\overline{O}$ is the value of the estimator of the trace of the product of the image of the density operator $\sigma$ under

the target map M, tr[$M(\sigma)O$], to thereby obtain an estimation of a value of a trace of a product of an image of a first density operator $\sigma_1$ obtained by an application of the target quantum circuit described by the quantum channel $\mathcal{F}_T$ to the initial state described by the density operator $\sigma_0$, $\sigma_1 = \mathcal{F}_T(\sigma_0)$ under the target map M and the target operator O, tr[$M(\sigma_1)O$].

**14.** Method according to claim 12 or 13, wherein each K'-local quantum channel $\mathcal{F}_f$ is a noisy K'-local unitary operation $U_f$, the first non-identity linear map $M_{NI}^{(1)}$ is a composition of $R_1$ linear, $K_1$-local maps $M_r^{(1)}$, $M_{NI}^{(1)} = \bigcirc_{r=1}^{R_1} M_r^{(1)}$ and the second non-identity linear map $M_{NI}^{(2)}$ is a composition of $R_2$ linear, $K_2$-local maps $M_r^{(2)}$, $M_{NI}^{(2)} = \bigcirc_{r=1}^{R_2} M_r^{(2)}$, $R_1 + R_2 = R$ thereby defining the target linear map M as a composition of R linear, k-local maps $M_f$ according to $M = \bigcirc_{f=1}^{R} M_f$ with $k = \max(K_1, K_2)$, said k-local maps $M_f$ being defined via a compression algorithm comprising the following steps:

A) Modelling the action of the quantum circuit by a model quantum channel $\mathcal{F}_{model} = \mathcal{E} \circ \mathcal{F}_{ideal}$ described by the composition of an ideal quantum channel $\mathcal{F}_{ideal}$ defined by a composition of the unitary operations $U_f$ according to $\mathcal{F}_{ideal} = \bigcirc_{f=1}^{F} U_f$ and a completely positive trace preserving noise map $\mathcal{E} = \bigcirc_{f=1}^{F} \mathcal{F}_f^{noise} \circ \bigcirc_{f=1}^{F} U_{F-f+1}^{\dagger}$, wherein an f-th model noise channel $\mathcal{F}_f^{noise}$ of the noise map is a description of the K'-local quantum channel $\mathcal{F}_f$ ;

B) Defining a compression map $Z = \bigcirc_{f=1}^{R} Z_f$ composed of R linear, k-local, invertible, parametrized maps $Z_f\left(\left\{z_j^{(f)}\right\}_{j=1}^{n_f}\right)$, each linear, k-local, invertible, parametrized map $Z_f$ being parametrized by a set of parameters $\left\{z_j^{(f)}\right\}_{j=1}^{n_f}$ wherein the first $R_2$ parametrized maps, $Z_1, ..., Z_{R_2}$ act as an identity map

$$\mathbb{1}_{\overline{Q}_2}$$

on the second complement set $\overline{Q}_2$, and wherein the last $R_1$ parametrized maps, $Z_{R_2+1}, ..., Z_{R_1+R_2}$ act as an identity map

$$\mathbb{1}_{\overline{Q}_1}$$

on the first complement set $\overline{Q}_1$, wherein there exist for each parametrized map $Z_f\left(\left\{z_j^{(f)}\right\}_{j=1}^{n_f}\right)$ a set of parameter values for the parameters $\left\{z_j^{(f)}\right\}_{j=1}^{n_f}$ such that the parametrized map $Z_f\left(\left\{z_j^{(f)}\right\}_{j=1}^{n_f}\right)$ is the identity map, and wherein there exist parameter values $\left\{z_j^{(f)}\right\}_{j=1}^{n_f}$ such that the first

$R_2$ parametrized maps, $Z_1\left(\left\{z_j^{(1)}\right\}_{j=1}^{n_1}\right), ..., Z_{R_2}\left(\left\{z_j^{(R_2)}\right\}_{j=1}^{n_{R_2}}\right)$ act as a non-identity map on the second set

of qudits $Q_2$ and the last $R_1$ parametrized maps, $Z_{R_2+1}\left(\left\{z_j^{(R_2+1)}\right\}_{j=1}^{n_{R_2+1}}\right), ..., Z_{R_1+R_2}\left(\left\{z_j^{(R_1+R_2)}\right\}_{j=1}^{n_{R_1+R_2}}\right)$ act as a non-identity map on the first set of qudits $Q_1$;

C) Choosing for each parametrized map $Z_f\left(\left\{z_j^{(f)}\right\}_{j=1}^{n_f}\right)$ initial parameter values $\left\{z_j^{(0,f)}\right\}_{j=1}^{n_f}$ for the parameters in the set $\left\{z_j^{(f)}\right\}_{j=1}^{n_f}$ such that each parametrized map $Z_f\left(\left\{z_j^{(0,f)}\right\}_{j=1}^{n_f}\right)$ is the identity map for the chosen parameter values, thereby defining an initial compression map $Z^{(0)} = \bigcirc_{f=1}^{R} Z_f\left(\left\{z_j^{(0,f)}\right\}_{j=1}^{n_f}\right)$;

D) Determining, in a t-th iteration of a total of F iterations of an iterative routine, t = 1, ..., F, new parameter values $\left\{z_j^{(t,f)}\right\}_{j=1}^{n_f}$ for the parameters $\left\{z_j^{(f)}\right\}_{j=1}^{n_f}$ of each of the parametrized maps $Z_f\left(\left\{z_j^{(f)}\right\}_{j=1}^{n_f}\right)$, such that a new compression map $Z^{(t)}$ defined as the composition of the parametrized maps $Z_f\left(\left\{z_j^{(t,f)}\right\}_{j=1}^{n_f}\right)$ for the new parameter values, $Z^{(t)} = \bigcirc_{f=1}^{R} Z_f\left(\left\{z_j^{(t,f)}\right\}_{j=1}^{n_f}\right)$, approximates a compression operator which is the composition of the t-th model noise channel $\mathcal{F}_t^{noise}$, the compression map $Z^{(t-1)}$ of the preceding (t-1)-th iteration and the adjoint of the t-th unitary operation $U_t$, $\mathcal{F}_t^{noise} \circ Z^{(t-1)} \circ U_t^\dagger$, to some desired accuracy,
i.e., the distance between the new compression map $Z^{(t)}$ and said compression operator
$\mathcal{F}_t^{noise} \circ Z^{(t-1)} \circ U_t^\dagger$ within a given operator norm $\|\cdot\|$ fulfills $\left\|Z^{(t)} - \mathcal{F}_t^{noise} \circ Z^{(t-1)} \circ U_t^\dagger\right\| < \epsilon$,
wherein $\varepsilon > 0$ is a positive number, preferably $\varepsilon < 0.1$, more preferably $\varepsilon < 0.01$, and even more preferably $\varepsilon < 0.001$,

E) Defining the second non-identity linear map $M_{NI}^{(2)}$ as the inverse of the composition of the first $R_2$ para-

metrized maps, $Z_1\left(\left\{z_j^{(F,1)}\right\}_{j=1}^{n_1}\right), ..., Z_{R_2}\left(\left\{z_j^{(F,R_2)}\right\}_{j=1}^{n_{R_2}}\right)$ obtained in the F-th iteration,

$M_{NI}^{(2)} = \left(\bigcirc_{f=1}^{R_2} Z_f\left(\left\{z_j^{(F,f)}\right\}_{j=1}^{n_f}\right)\right)^{-1}$, and defining the first non-identity linear map $M_{NI}^{(1)}$ as the inverse of the composition of the last $R_1$ parametrized maps,

$Z_{R_2+1}\left(\left\{z_j^{(F,R_2+1)}\right\}_{j=1}^{n_{R_2+1}}\right), ..., Z_{R_1+R_2}\left(\left\{z_j^{(F,R_1+R_2)}\right\}_{j=1}^{n_{R_1+R_2}}\right)$ obtained in the R-th iteration, $M_{NI}^{(1)} = $

$\left(\bigcirc_{f=R_2+1}^{R_1+R_2} Z_f\left(\left\{z_j^{(F,f)}\right\}_{j=1}^{n_f}\right)\right)^{-1}$.

15. A hybrid quantum-classical computing system comprising a quantum computing unit and a classical computer, said quantum computing unit comprising a quantum system defined by a set Q of N qudits, preferably a set Q of N qubits, and control means, said control means being operative carry out S repetitions of a quantum computing routine, each quantum computing routine comprising the preparation of a quantum state of said quantum system, said quantum state being described by a density operator $\sigma$ acting on a Hilbert space H associated with said quantum system and performing a quantum measurement defined by an informationally complete Positive Operator Valued Measure on said prepared quantum state, said informationally complete Positive Operator Valued Measure being described by an integer number $N_M$ of effects $\Pi_m$, m = 1, ..., $N_M$, the effects being preferably K-producible, $K \geq 1$, the effect $\Pi_m$ having a measurement outcome m, said quantum computing unit being further operative to output the measurement outcome $m^{(s)}$ of said quantum measurement for the s-th repetition, thereby obtaining a set of measurement data $\left\{ m^{(s)} \right\}_{s=1}^{S}$ as an output,

wherein the hybrid quantum-classical computing system is further operative to provide an input to the classical computer, said input comprising:

i) the set of measurement data $\left\{ m^{(s)} \right\}_{s=1}^{S}$ ;

ii) a first non-identity linear map $M_{NI}^{(1)} : L\left(H^{(1)}\right) \rightarrow L\left(H^{(1)}\right)$, wherein $L(H^{(1)})$ is a space of linear operators on a first Hilbert space $H^{(1)}$ associated to a first non-empty set $Q_1$ of qudits which is a proper subset of the set Q of qudits, and a second non-identity linear map $M_{NI}^{(2)} : L\left(H^{(2)}\right) \rightarrow L\left(H^{(2)}\right)$, wherein $L(H^{(2)})$ is a space of linear operators on a second Hilbert space $H^{(2)}$ associated to a second non-empty set $Q_2$ of qudits different from said first set $Q_1$, said second set $Q_2$ being a proper subset of the set Q of qudits, wherein a union of the first set and the second set is the set $Q = Q_1 \cup Q_2$, and an intersection of the first set and the second set $Q_1$, $Q_2$, is an intersection set, $Q_I = Q_1 \cap Q_2$, said intersection set being either a non-empty set, $Q_I \neq \{\}$, or being an empty set, $Q_I = \{\ \}$,

iii) an integer number $N_O$ of complex numbers $c_k$, k = 1, ..., $N_O$, representations of $N_O$ second product operators $P_k^{(2)} = \otimes_i O_i^{(k)}$ acting on the second set $Q_2$ of qudits, with $O_j^{(k)}$ being a local operator acting on the j-th qudit, and representations of $N_O$ complement product operators $P_k^{(c)} = \otimes_j O_j^{(k)}$ acting on a second complement set $\overline{Q}_2$ of qudits which is the complement of the second set $Q_2$;

iv) for each m = 1, ..., $N_M$, an integer number $N_{D_m}$ of coefficients $d_m^{(j)}$, j = 1, ..., $N_{D_m}$, representations of $N_{D_m}$ first dual operators $D_m^{(j)}$, j = 1, ..., $N_{D_m}$, acting on the first set $Q_1$ of qudits, and representations of $N_{D_m}$ complement dual operators $\widetilde{D}_m^{(j)}$, j = 1, ..., $N_{D_m}$, acting on a first complement set $\overline{Q}_1$ of qudits which is the complement of the first set $Q_1$, said coefficients $d_j^{(m)}$, first dual operators $D_m^{(j)}$ and first complement dual operators $\widetilde{D}_m^{(j)}$ being defined by a decomposition of a set of $N_M$ dual effects $D_m$ of the set of $N_M$ effects $\Pi_m$ according to $D_m = \sum_{j=1}^{N_{D_m}} d_j^{(m)} D_m^{(j)} \otimes \widetilde{D}_m^{(j)}$, wherein the classical computer is further operative to calculate a value of an estimator

$$\overline{O} = \frac{1}{S} \sum_{s=1}^{S} \sum_{k=1}^{N_O} \sum_{j=1}^{N_{D_{m^{(s)}}}} c_k d_j^{\left(m^{(s)}\right)} \omega_{m^{(s)}}^{(k,j)}, \text{ with } \omega_{m^{(s)}}^{(k,j)} = \text{tr}\left[ M(D_{m^{(s)}}^{(j)} \otimes \widetilde{D}_{m^{(s)}}^{(j)}) P_k^{(c)} \otimes P_k^{(2)} \right]$$

to thereby obtain an estimation of a value of a trace of a product of the image of the density operator $\sigma$ under a target map M and a target operator O, tr[$M(\sigma)O$], wherein

the target linear map $M:L(H) \rightarrow Li(H)$ with L(H) being the space of linear operators on the Hilbert space H is defined as a composition of first and second linear maps $M^{(1)}$, $M^{(2)}:L(H) \rightarrow L(H)$, $M = M^{(2)} \circ M^{(1)}$, wherein the first linear map $M^{(1)}$ is a tensor product of the first non-identity linear map $M_{NI}^{(1)}$ and an identity map on a space of linear operators $L(\overline{H}^{(1)})$ on a Hilbert space $\overline{H}^{(1)}$ associated to the first complement set $\overline{Q}_1$, $M^{(1)} = M^{(1)}_{NI} \otimes$

$$\mathbb{1}_{\overline{Q}_1},$$

and the second linear map $M^{(2)}$ is a tensor product of the second non-identity linear map $M^{(2)}_{NI}$ and an identity map on a space of linear operators $L(\overline{H}^{(2)})$ on a Hilbert space $\overline{H}^{(2)}$ associated to the second complement set $\overline{Q}_2$,

$$M^{(2)} = \mathbb{1}_{\overline{Q}_2} \otimes M^{(2)}_{NI},$$

the target operator O is defined by the complex numbers $c_k$, the second product operators $P^{(2)}_k$ and the complement product operators $P^{(c)}_k$ according to $O = \sum_{k=1}^{N_O} c_k P^{(c)}_k \otimes P^{(2)}_k$, and

wherein the calculation of $\omega^{(k,j)}_{m^{(s)}}$ includes calculating a partial trace over the second complement set $\overline{Q}_2$ of a product of an image $M^{(1)}_{NI}(D^{(j)}_{m^{(s)}})$ of the representation of the first dual operator $D^{(j)}_{m^{(s)}}$ under the first non-identity linear map $M^{(1)}_{NI}$ and a tensor product of the complement product operator $P^{(c)}_k$ and an identity map

$$\mathbb{1}_{Q_I}$$

on the intersection Hilbert space $H_I$ associated to the intersection set $Q_I$,

$$\mathrm{tr}_{\overline{Q}_2}\left[ M^{(1)}_{NI}\left( D^{(j)}_{m^{(s)}} \right) P^{(c)}_k \otimes \mathbb{1}_{Q_I} \right]$$

and/or calculating a partial trace over the first complement set $\overline{Q}_1$ of a product of an image $M^{(2)\dagger}_{NI}(P^{(2)}_k)$ of the representation of the second product operator $P^{(2)}_k$ under the adjoint of the second non-identity linear map $M^{(2)\dagger}_{NI}$ and a tensor product of an identity map

$$\mathbb{1}_{Q_I}$$

on the intersection Hilbert space $H_I$ and the first complement operator

$$\mathrm{tr}_{\overline{Q}_1}\left[ M^{(2)\dagger}_{NI}(P^{(2)}_k)\mathbb{1}_{Q_I} \otimes \widetilde{D}^{(j)}_{m^{(s)}} \right].$$

**16.** A computer program for execution by a classical computer of a hybrid quantum-classical computing system, the hybrid quantum-classical computing system comprising a quantum computing unit and the classical computer, said quantum computing unit comprising a quantum system defined by a set Q of N qudits, preferably a set Q of N qubits, and control means, said control means being operative to carry out S repetitions of a quantum computing routine, each quantum computing routine comprising the preparation of a quantum state of said quantum system, said quantum state being described by a density operator $\sigma$ acting on a Hilbert space H associated with said quantum system and performing a quantum measurement defined by an informationally complete Positive Operator Valued Measure on said prepared quantum state, said informationally complete Positive Operator Valued Measure being described by an integer number $N_M$ of effects $\Pi_m$, m = 1, ..., $N_M$, the effects being preferably K-producible, K $\geq$ 1 , the effect $\Pi_m$ having a measurement outcome m, said quantum computing unit being further operative to output the measurement outcome $m^{(s)}$ of said quantum measurement for the s-th repetition, thereby obtaining a set of meas-

urement data $\left\{m^{(s)}\right\}_{s=1}^{S}$ as an output, the computer program comprising instructions which, when the program is executed by the classical computer, cause the classical computer to carry out the following steps:

a) receiving an input, the input comprising:

i) the set of measurement data $\left\{m^{(s)}\right\}_{s=1}^{S}$ ;

ii) a first non-identity linear map $M_{NI}^{(1)}: L\left(H^{(1)}\right) \to L\left(H^{(1)}\right)$ , wherein $L(H^{(1)})$ is a space of linear operators on a first Hilbert space $H^{(1)}$ associated to a first non-empty set $Q_1$ of qudits which is a proper subset of the set Q of qudits, and a second non-identity linear map $M_{NI}^{(2)}: L\left(H^{(2)}\right) \to L\left(H^{(2)}\right)$ , wherein $L(H^{(2)})$ is a space of linear operators on a second Hilbert space $H^{(2)}$ associated to a second non-empty set $Q_2$ of qudits different from said first set $Q_1$, said second set $Q_2$ being a proper subset of the set Q of qudits, wherein a union of the first set and the second set is the set Q = $Q_1 \cup Q_2$, and an intersection of the first set and the second set $Q_1$, $Q_2$, is an intersection set, $Q_I = Q_1 \cap Q_2$, said intersection set being either a non-empty set, $Q_I \neq \{ \}$, or being an empty set, $Q_I = \{ \}$,

iii) an integer number $N_O$ of complex numbers $c_k$, k = 1, ..., $N_O$, representations of $N_O$ second product

operators $P_k^{(2)} = \otimes_i O_i^{(k)}$ acting on the second set $Q_2$ of qudits, with $O_j^{(k)}$ being a local operator acting on the j-th qudit, and representations of $N_O$ complement product operators $P_k^{(c)} = \otimes_j O_j^{(k)}$ acting on a second complement set $\overline{Q}_2$ of qudits which is the complement of the second set $Q_2$;

iv) for each m = 1, ..., $N_M$, an integer number $N_{D_m}$ of coefficients $d_m^{(j)}$ , j = 1, ..., $N_{D_m}$, representations of

$N_{D_m}$ first dual operators $D_m^{(j)}$ , j = 1, ..., $N_{D_m}$, acting on the first set $Q_1$ of qudits, and representations of

$N_{D_m}$ complement dual operators $\widetilde{D}_m^{(j)}$ , j = 1, ..., $N_{D_m}$, acting on a first complement set $\overline{Q}_1$ of qudits which

is the complement of the first set $Q_1$, said coefficients $d_j^{(m)}$ , first dual operators $D_m^{(j)}$ and first complement

dual operators $\widetilde{D}_m^{(j)}$ being defined by a decomposition of a set of $N_M$ dual effects $D_m$ of the set of $N_M$

effects $\Pi_m$ according to $D_m = \sum_{j=1}^{N_{D_m}} d_j^{(m)} D_m^{(j)} \otimes \widetilde{D}_m^{(j)}$ ,

b) calculating a value of an estimator

$$\bar{O} = \tfrac{1}{S} \sum_{s=1}^{S} \sum_{k=1}^{N_O} \sum_{j=1}^{N_D m^{(s)}} c_k d_j^{\left(m^{(s)}\right)} \omega_{m^{(s)}}^{(k,j)}, \text{ with } \omega_{m^{(s)}}^{(k,j)} = \operatorname{tr}\left[M\left(D_{m^{(s)}}^{(j)} \otimes \widetilde{D}_{m^{(s)}}^{(j)}\right) P_k^{(c)} \otimes P_k^{(2)}\right]$$

to thereby obtain an estimation of a value of a trace of a product of the image of the density operator $\sigma$ under a target map M and a target operator O, tr[$M(\sigma)O$], wherein

the target linear map $M{:}L(H) \to L(H)$ with L(H) being the space of linear operators on the Hilbert space H is defined as a composition of first and second linear maps $M^{(1)}, M^{(2)}{:}L(H) \to L(H)$, $M = M^{(2)} \circ M^{(1)}$, wherein

the first linear map $M^{(1)}$ is a tensor product of the first non-identity linear map $M_{NI}^{(1)}$ and an identity map on a space of linear operators $L(\overline{H}^{(1)})$ on a Hilbert space $\overline{H}^{(1)}$ associated to the first complement set $\overline{Q}_1$,

$$M^{(1)} = M_{NI}^{(1)} \otimes \mathbb{1}_{\overline{Q}_1},$$

and the second linear map $M^{(2)}$ is a tensor product of the second non-identity linear map $M_{NI}^{(2)}$ and an identity map on a space of linear operators $L(\overline{H}^{(2)})$ on a Hilbert space $\overline{H}^{(2)}$ associated to the second complement set $\overline{Q}_2$,

$$M^{(2)} = \mathbb{1}_{\overline{Q}_2} \otimes M_{NI}^{(2)},$$

the target operator O is defined by the complex numbers $c_k$, the second product operators $P_k^{(2)}$ and the complement product operators $P_k^{(c)}$ according to $O = \sum_{k=1}^{N_O} c_k P_k^{(c)} \otimes P_k^{(2)}$, and

wherein the calculation of $\omega_{m^{(s)}}^{(k,j)}$ includes calculating a partial trace over the second complement set $\overline{Q}_2$ of a product of an image $M_{NI}^{(1)}(D_{m^{(s)}}^{(j)})$ of the representation of the first dual operator $D_{m^{(s)}}^{(j)}$ under the first non-identity linear map $M_{NI}^{(1)}$ and a tensor product of the complement product operator $P_k^{(c)}$ and an identity map

$$\mathbb{1}_{Q_I}$$

on the intersection Hilbert space $H_I$ associated to the intersection set $Q_I$,

$$\mathrm{tr}_{\overline{Q}_2}\left[M_{NI}^{(1)}\left(D_{m^{(s)}}^{(j)}\right)P_k^{(c)} \otimes \mathbb{1}_{Q_I}\right]$$

and/or calculating a partial trace over the first complement set $\overline{Q}_1$ of a product of an image $M_{NI}^{(2)\dagger}(P_k^{(2)})$ of the representation of the second product operator $P_k^{(2)}$ under the adjoint of the second non-identity linear map $M_{NI}^{(2)\dagger}$ and a tensor product of an identity map

$$\mathbb{1}_{Q_I}$$

on the intersection Hilbert space $H_I$ and the first complement operator

$$\mathrm{tr}_{\bar{Q}_1}\left[ M_{NI}^{(2)\dagger}(P_k^{(2)})\mathbb{1}_{Q_I} \otimes \widetilde{D}_{m^{(s)}}^{(j)}\right].$$

# Fig. 1

Fig. 1 — Schematic diagram showing qubits 2a, 2b, 2c, 2d, 2e, 2f (σ), state preparation means 4, measurement means 5, control means 3, output means 6, classical computer 10 and input means 11. The output means provides $\{m(s)\}_{s=1}^{S}$ to the classical computer, which outputs $\mathrm{tr}[M(\sigma)\,O]$. The input means provides $\{M_{NI}^{(1)}, M_{NI}^{(2)}\}$, $\{c_k, P_k^{(c)}, P_k^{(2)}\}_{k=1}^{No}$ and $\{\{d_j^{(m)}, D_m^{(i)}, \tilde{D}_m^{(i)}\}_{m=1}^{N_m}\}_{j=1}^{N_{Dm}}$ to the classical computer.

Fig. 2a

Fig. 2b

Fig. 2c

EP 4 300 379 A1

Fig. 3a

Fig. 3b

EP 4 300 379 A1

Fig. 4 - Part 1 -

Fig. 4 - Part 2 -

EP 4 300 379 A1

**EP 4 300 379 A1**

Europäisches Patentamt
European Patent Office
Office européen des brevets

# EUROPEAN SEARCH REPORT

**Application Number**

EP 22 18 1734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUILLERMO GARC\'IA-P\'EREZ ET AL: "Learning to Measure: Adaptive Informationally Complete Generalized Measurements for Quantum Algorithms", ARXIV.ORG, CORNELL UNIVERSITY LIBRARY, 201 OLIN LIBRARY CORNELL UNIVERSITY ITHACA, NY 14853, 3 December 2021 (2021-12-03), XP091108244, DOI: 10.1103/PRXQUANTUM.2.040342 * Appendices A-E; page 1 - page 12, left-hand column, paragraph 2 * | 1-16 | INV. G06N10/60 G06N10/20 |
| X | WO 2021/055507 A1 (ZAPATA COMPUTING INC [US]) 25 March 2021 (2021-03-25) * abstract; claims 1-24; figures 1-5 * * page 2, line 2 - page 19, line 33 * | 1-16 | |
| A | LAURIN E FISCHER ET AL: "Ancilla-free implementation of generalized measurements for qubits embedded in a qudit space", ARXIV.ORG, CORNELL UNIVERSITY LIBRARY, 201 OLIN LIBRARY CORNELL UNIVERSITY ITHACA, NY 14853, 14 March 2022 (2022-03-14), XP091190565, * the whole document * | 1-16 | TECHNICAL FIELDS SEARCHED (IPC) G06N |
| A | JOHN B DEBROTA ET AL: "Analysis and Synthesis of Minimal Informationally Complete Quantum Measurements", ARXIV.ORG, CORNELL UNIVERSITY LIBRARY, 201 OLIN LIBRARY CORNELL UNIVERSITY ITHACA, NY 14853, 20 December 2018 (2018-12-20), XP081583129, * the whole document * | 1-16 | |

-/--

The present search report has been drawn up for all claims

| Place of search | Date of completion of the search | Examiner |
|---|---|---|
| The Hague | 22 November 2022 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

63

Europäisches
Patentamt

European
Patent Office

Office européen
des brevets

# EUROPEAN SEARCH REPORT

**Application Number**

**EP 22 18 1734**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WALLMAN JOEL J. ET AL: "Noise tailoring for scalable quantum computation via randomized compiling", PHYSICAL REVIEW A, vol. 94, no. 5, 18 November 2016 (2016-11-18), page 52325, XP055982922, ISSN: 2469-9926, DOI: 10.1103/PhysRevA.94.052325 * the whole document * ----- | 1-16 | |
| A | US 2021/264310 A1 (GOTTESMAN DANIEL [CA]) 26 August 2021 (2021-08-26) * the whole document * ----- | 1-16 | |
| | | | **TECHNICAL FIELDS SEARCHED (IPC)** |

The present search report has been drawn up for all claims

| Place of search | Date of completion of the search | Examiner |
|---|---|---|
| The Hague | 22 November 2022 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 2 of 2**

## ANNEX TO THE EUROPEAN SEARCH REPORT
## ON EUROPEAN PATENT APPLICATION NO.

EP 22 18 1734

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2022

| Patent document cited in search report | | Publication date | Patent family member(s) | | Publication date |
|---|---|---|---|---|---|
| WO 2021055507 | A1 | 25-03-2021 | CA | 3150374 A1 | 25-03-2021 |
| | | | US | 2022358393 A1 | 10-11-2022 |
| | | | WO | 2021055507 A1 | 25-03-2021 |
| US 2021264310 | A1 | 26-08-2021 | NONE | | |

EPO FORM P0459

For more details about this annex : see Official Journal of the European Patent Office, No. 12/82

**EP 4 300 379 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. W. SHOR.** *Physical Review A,* 1995, vol. 52, R2493-R2496
- **A. LUIS ; L. L. SANCHEZ-SOTO.** *Physical Review Letters,* 1999, vol. 83, 3573
- **S. WEIGERT.** *Int. J. Mod. Phys. B,* 2006, vol. 20, 1942-1955
- **J. TILLY et al.** The Variational Quantum Eigensolver: a review of methods and best practices. *arXiv 2111.05176*
- **J.J. WALLMAN ; J. EMERSON.** Noise tailoring for scalable quantum computation via randomized compiling. *Physical Review A,* 2016, vol. 94 (5), 052325
- **M. URBANEK et al.** Mitigation depolarizing noise on quantum computers with noise-estimation circuits. *arXiv 2103.08591*
- **J. VILLE et al.** Leveraging Randomized Compiling for the QITE Algorithm. *arXiv 2104.08785*